(19) Europäisches Patentamt
European Patent Office
Office européen des brevets

(11) EP 1 932 867 A1

(12) **EUROPEAN PATENT APPLICATION**
published in accordance with Art. 153(4) EPC

(43) Date of publication:
**18.06.2008 Bulletin 2008/25**

(21) Application number: **06797818.9**

(22) Date of filing: **12.09.2006**

(51) Int Cl.:
***C08G 63/181*** *(2006.01)* ***C08G 63/84*** *(2006.01)*

(86) International application number:
**PCT/JP2006/318011**

(87) International publication number:
**WO 2007/032325 (22.03.2007 Gazette 2007/12)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.09.2005 JP 2005266791**

(71) Applicant: **Toyo Boseki Kabushiki Kaisha**
**Osaka-shi, Osaka 530-8230 (JP)**

(72) Inventors:
- **KAGEYAMA, Katsuhiko**
  **Tsuruga-shi, Fukui 914-8550 (JP)**
- **MATSUMOTO, Haruo**
  **Tsuruga-shi, Fukui 914-8550 (JP)**
- **KUZE, Katsuaki**
  **Otsu-shi Shiga 520-0292 (JP)**
- **MARUYAMA, Gaku**
  **Tsuruga-shi, Fukui 914-8550 (JP)**

(74) Representative: **Vossius & Partner**
**Siebertstrasse 4**
**81675 München (DE)**

# (54) POLYESTER, PROCESS FOR PRODUCTION OF POLYESTER, AND POLYESTER MOLDED ARTICLE

(57) Disclosed is a polyester produced from an aluminum compound and a phosphorus compound in the presence of a polycondensation catalyst. The polyester contains a polyester-insoluble, aluminum-containing insoluble particle in an amount of 1000 ppm or less as quantified by the method disclosed in the description, and contains an acid terminal group at a ratio of 10 to 50 eq/ton. The polyester can provide a highly transparent molded article produced through drawing (e.g., a film or hollow molded article) and is useful in the fields of highly transparent optical films, ultra-highly transparent molded articles or the like.

Fig. 1

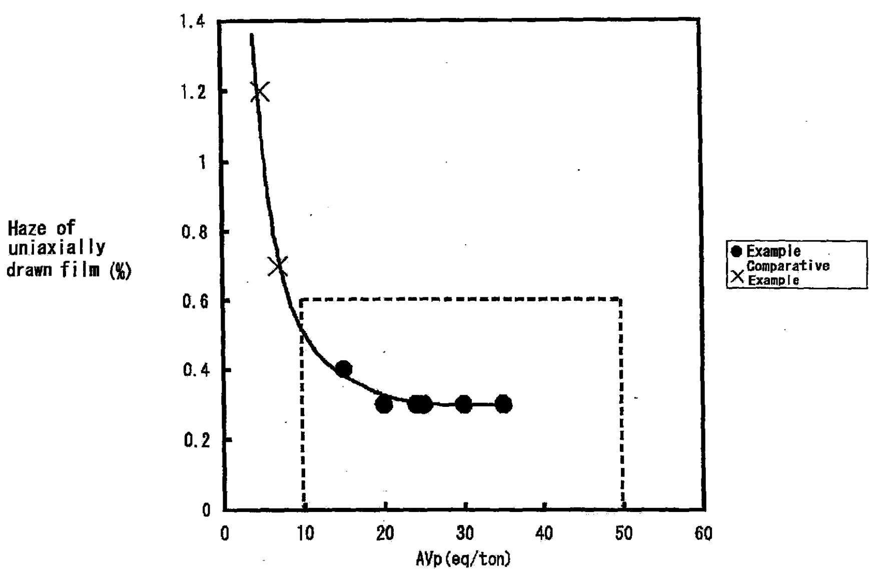




Printed by Jouve, 75001 PARIS (FR)

## Description

TECHNICAL FIELD

The invention relates to a polyester using an novel polyester polycondensation catalyst using no germanium, no antimony, and no titanium containing compound as a catalyst main component, a process for production of the polyester, and a polyester product and more particularly to a polyester providing a highly transparent molded article, a process for production of the polyester, and a polyester product.

BACKGROUND ART

Polyesters represented by polyethylene terephthalate (PET), polybutylene terephthalate (PBT), and polyethylene naphthalate (PEN) and the like are excellent in mechanical properties and chemical properties and have been used in a wide range of fields, for example, as fibers for clothes and industrial materials; films and sheets for wrapping, magnetic tapes and optical use; bottles, which are hollow molded articles; casing for electric and electronic parts; and other engineering plastic molded articles_and the like, corresponding to the characteristics of the respective polyesters. Particularly, since bottles made of saturated polyesters such as PET are excellent in the mechanical strength, heat resistance, transparency, and gas barrier property, they are used widely as containers for containing beverages such as juices, carbonated beverages, and soft drinks and the like and containers for eye lotions and cosmetics and the like.

With respect to polyesters including an aromatic dicarboxylic acid and alkylene glycol as main constitutional components as a representative polyester, for example, PET is produced by carrying out esterification reaction or transesterification reaction of terephthalic acid or dimethyl terephthalate with ethylene glycol to produce an oligomer mixture such as bis (2-hydroxyethyl) terephthalate, and then by subjecting the oligomer mixture to liquid-phase polycondensation at high temperature in vacuum condition using a catalyst.

Conventionally, an antimony or germanium compound has widely been used as a polyester polycondensation catalyst. Antimony trioxide is an economical catalyst having excellent catalytic activity. But if it is used as a main component, that is, in proper addition amount to exhibit practically applicable polymerization rate, gray discoloration and insoluble particles are formed in polyesters and it causes surface defects of films, since metal antimony precipitates in polycondensation,. In the case it is used as a starting material for hollow molded articles, it becomes difficult to obtain hollow molded articles excellent in transparency. Because of these reasons, a polyester containing no antimony compound or a polyester not containing any antimony compound as catalyst main components is desired.

As a catalyst other than antimony for providing polyesters having excellent catalytic activity that is free from the above-mentioned problems, a germanium compound has practically been employed. However the catalyst has problems that the catalyst is extremely costly and that the polymerization control becomes difficult since the catalyst is easy to be eluted outside of the reaction system during the polymerization and consequently the catalyst concentration in a reaction system tends to be changed and therefore, it is problematic to use it as a catalyst main component.

It has been investigated to use other polycondensation catalysts in place of the antimony catalysts or germanium catalysts and titanium compounds such as tetraalkoxytitanates have already been proposed, however, there occur problems that the polyesters produced by using them are susceptible of thermal deterioration and also that the polyesters are considerably colorized.

As described above, it has been desired to obtain a polymerization catalyst containing a metal component as a main component other than antimony, germanium, and titanium compounds and excellent in the catalytic activity and capable of producing polyesters excellent in the color tone, thermal stability, and transparency of a molded article and containing less insoluble particles.

As a novel polycondensation catalyst satisfying the above-mentioned requirements, catalyst systems consisting of an aluminum compound and a phosphorus compound are disclosed and have drawn an attention (reference to Patent Documents 1 to 4)

Patent Document 1: Japanese Patent Application Laid-Open (JP-A) 2001-131276
Patent Document 2: JP-A 2001-163963
Patent Document 3: JP-A 2001-163964
Patent Document 4: JP-A 2002-220446

Further, it is disclosed that a polyester excellent in thermal stability and having good transparence can be obtained with,little foreign matter occurrence by the above-mentioned polycondensation catalyst system (reference to Patent Document 5).

Patent Document 5: JP-A 2001-354759

The polyester obtained by the above-mentioned polycondensation catalyst system is excellent in color tone, transparency, and thermal stability and meets the above-mentioned requirements. However, in accordance with the difference of manufacturing makers and production lots of aluminum compound, which is constituent component of the

polycondensation catalyst, the polyester obtained by the above-mentioned process sometimes gives molded article inferior in transparency in the case the molded article such as film or hollow molded articles obtained by molding which involves drawing the polyester, and thus there is problem that stable production with low inferior article production level cannot be carried out. Thus, with respect to highly transparent film for optical uses and molded articles with ultrahigh transparence, a product at sufficiently satisfactory level has not been obtained yet and its improvement is intensely desired.

BRIEF DESCRIPTION OF DRAWINGS

Fig. 1: A drawing showing the relation of AVp of PET obtained in Examples and Comparative Examples and haze value of uniaxially drawn films.
Fig. 2: A drawing showing the relation of haze value of uniaxially drawn films obtained in Examples and Comparative Examples and slightly opaque impression of biaxially drawn films.

DISCLOSURE OF THE INVENTION

PROBLEMS TO BE SOLVED BY THE INVENTION

Under the above-mentioned problem of the prior art, the invention has been accomplished, and relates to a polyester obtained by using polycondensation catalyst consisting of an aluminum compound other than antimony, germanium, and titanium as a main metal component of the catalyst and a phosphorus compound; a process for production of the polyester; and a polyester product. The polyester of this invention can give a molded article such as a film or a hollow molded article having highly advanced transparency in the case the molded article is obtained through process of molding which involves drawing the polyester, or polyester which can exhibit its characteristics in fields of optical film required to have particularly advanced transparency or hollow molded article with ultrahigh transparency.

MEANS FOR SOLVING THE PROBLEMS

Inventors of the invention have made various investigations to solve the above-mentioned problems and accordingly have accomplished the invention. That is, the invention is as follows.
(1) A polyester produced in the presence of a polycondensation catalyst containing at least one kind compound selected from a group consisting of aluminum compounds and at least one compound selected from a group consisting of phosphorus compounds, wherein the polyester contains aluminum-containing polyester-insoluble particle in an amount of 1000 ppm or less as quantified by the method disclosed later and contains an acid terminal group at a ratio of 10 to 50 eq/ton.

(2) The polyester as described in (1), wherein haze value of uniaxially drawn film obtained by method disclosed later is 0.6% or less.

(3) A process for producing a polyester using a polycondensation catalyst containing at least one kind compound selected from a group consisting of aluminum compounds and at least one compound selected from a group consisting of phosphorus compounds, wherein ethylene glycol solution of the aluminum compound having 1.0 or higher as ratio of integration value of peaks appearing in a range of -15 to 30 ppm in $^{27}$Al-NMR spectrum quantified by the method disclosed later to integration value of standard peaks is used and the ratio of carboxyl terminal group to entire terminal groups of lower condensate products at the outlet of esterification reactor is 35 to 49% by mole.

(4) A process for producing a polyester using a polycondensation catalyst containing at least one kind compound selected from a group consisting of aluminum compounds and at least one compound selected from a group

consisting of phosphorus compounds, wherein ethylene glycol solution of the aluminum compound having 1.0 or higher as a ratio of an integration value of peaks appearing in a range of -15 to 30 ppm in $^{27}$Al-NMR spectrum quantified by the method disclosed later to integration value of standard peaks is used and at least one compound selected from a group consisting of alkaline earth metal compounds, zinc compounds, and manganese compounds coexists.

(5) A process for producing a polyester using a polycondensation catalyst containing at least one kind compound selected from a group consisting of aluminum compounds and at least one compound selected from a group consisting of phosphorus compounds, wherein ethylene glycol solution of the aluminum compound having 1.0 or higher as a ratio of an integration value of peaks appearing in a range of -15 to 30 ppm in $^{27}$Al-NMR spectrum quantified by the method disclosed later to integration value of standard peaks is used and polycondensation is carried out at 280 to 300˚C.

(6) A hollow molded article made of the polyester described in (1) or (2).

(7) A film made of the polyester described in (1) or (2).

(8) A fiber made of the polyester described in (1) or (2).

EFFECTS OF THE INVENTION

With respect to a polyester obtained by using a polycondensation catalyst consisting of an aluminum compound and a phosphorus compound containing a metal component other than antimony, germanium, and titanium as main metal component of the catalyst, the polyester gives a highly transparent molded article such as a film or a hollow molded article having stability in various properties such as color tone and heat resistance, which are characteristics of the polyester obtained using the above-mentioned polycondensation catalyst system, by molding which involves drawing the polyester: the polyester is suitable in fields of highly transparent film for optical uses and molded article with ultrahigh transparency and gives a polyester product. Further, the polyester of the invention has characteristic that polyester-insoluble contaminant attributed to aluminum, which is main metal element of the polycondensation catalyst, is little. Accordingly, the polyester of the invention is preferably usable in wide range of fields of fibers for clothing and industrial materials; films and sheets for wrapping, magnetic tapes, and optical uses; bottles, which are hollow molded articles; casings for electric and electronic parts; and other engineering plastic molded articles. Particularly, due to the above-mentioned characteristics, the polyester is advantageous in optical films required to have particularly high transparency or hollow molded articles with ultrahigh transparency. Further, the process for production of the polyester of the invention is capable of stably and economically producing the above-mentioned polyester.

Hereinafter, the invention will be described more in detail.
A polyester in the present invention means those consisting of dicarboxylic acid and/or its ester formable derivatives in combination with diol and/or its ester formable derivatives.

Examples of dicarboxylic acid may include saturated aliphatic dicarboxylic acids such as oxalic acid, malonic acid, succinic acid, gluratic acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 1,3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbornanedicarboxylic acid, and dimeric acid and their ester-formable derivatives; unsaturated aliphatic dicarboxylic acids such as fumaric acid, maleic acid, and itaconic acid and their ester-formable derivatives; and aromatic dicarboxylic acid such as orthophthalic acid, isophthalic acid, terephthalic acid, 5-(alkali metal) sulfoisophthalic acid, diphenic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 4,4'-biphenyldicarboxylic acid, 4,4'-biphenylsulfonedicarboxylic acid, 4,4'-biphenyl ether dicarboxylic acid, 1,2-bis(phenoxy)ethane-p,p'-dicarboxylic acid, pamoic acid, and anthracenedicarboxylic acid and their ester-formable derivatives.

Among these dicarboxylic acids, terephthalic acid and naphthalenedicarboxylic acid are preferable and 2,6-naphthalenedicarboxylic acid, particularly preferable in terms of the physical properties of polyesters to be obtained and if necessary, other dicarboxylic acids may be used as constituent components.

If a little, polycarboxylic acids may be used in combination other than these dicarboxylic acids. Examples of the polycarboxylic acids may include ethanetricarboxylic acid, propanetricarboxylic acid, butanetetracarboxylic acid, pyromellitic acid, trimellitic acid, trimesic acid, 3,4,3',4'-biphenyltetracarboxylic acid, and their ester-formable derivatives.

Examples of glycol may include aliphatic glycols such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentyl glycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, 1,12-dodecanediol, polyethylene glycol, polytrimethylene glycol, and polytetramethylene glycol; and aromatic glycols such as hydroquinone, 4,4'-dihydroxybisphenol, 1,4-bis(β-hydroxyethoxy)benzene, 1,4-bis (β-hydroxyethoxyphenyl)sulfone, bis(p-hydroxyphenyl) ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and glycols obtained by adding ethylene oxide to these glycols.

Among these glycols, ethylene glycol, 1,3-propylene glycol, 1,4-butylene glycol, and 1,4-cyclohexanedimethanol are preferable.

If a little, polyhydric alcohols may be used in combination other than these glycols. Examples of the polyhydric alcohols are trimethylolmethane, trimethylolethane, trimethylolpropane, pentaerythritol, glycerol, and hexanetriol.

Use of hydroxycarboxylic acids in combination is possible. Examples of the hydroxycarboxylic acids may include lactic acid, citric acid, malic acid, tartaric acid, hydroxyacetic acid, 3-hydroxybutyric acid, p-hydroxybenzoic acid, p-(2-hydroxyethoxy)benzoie acid, 4-hydroxycyclohexanecarboxylic acid and their ester-formable derivatives.

Also, use of cyclic esters in combination is possible. Examples of the cyclic esters may include ε-caprolactone, β-propiolactone, β-methyl-β-propiolactone δ-valerolactone, glycollide, and lactide.

Examples of the ester-formable derivatives of the polycarboxylic acids and hydroxycarboxylic acids are their alkyl esters and hydroxyalkyl esters.

Examples of the ester formable derivatives of diols may include esters of diols with lower aliphatic carboxylic acids such as acetic acid.

The polyester of the present inventions are preferably polyethylene terephthalate(PET), polybutylene terephthalate(PBT), polypropylene terephthalate, poly(1,4-cyclohexanedimethylene terephthalate), polyethylene naphthalate (PEN), polybutylene naphthalate, polypropylene naphthalate, and their copolymers and among them, polyethylene terephthalate and their copolymers are particularly preferable. As the copolymer, those which contain 50% by mole or more and preferably 70% by mole or more of the ethylene-terephthalate repeating units are preferable. PET is particulary preferable.

The aluminum compound composing the polycondensation catalyst of the invention is not particularly limited if it is soluble in a solvent, however examples include, aluminum carboxylates such as aluminum formate, aluminum acetate, aluminum propionate, aluminum oxalate, aluminum acrylate, aluminum laurate, aluminum stearate, aluminum benzoate, aluminum trichloroacetate, aluminum lactate, aluminum citrate, aluminum tartrate, and aluminum salicylate; inorganic acid salts such as aluminum chloride, aluminum hydroxide, aluminum hydroxide chloride, aluminum nitrate, aluminum sulfate, aluminum carbonate, aluminum phosphate, and aluminum phosphonate; aluminum alkoxides such as aluminum methoxide, aluminum ethoxide, aluminum n-propoxide, aluminum iso-propoxide, aluminum n-butoxide, and aluminum tert-butoxide; aluminum chelate compounds such as aluminum acetylacetonate, aluminum acetylacetate, aluminum ethylacetoacetate, and aluminum ethylacetoacetate di-iso-propoxide; organoaluminum compounds such as trimethylaluminum and triethylaluminum and their partial hydrolyzates thereof; reaction products of aluminum alkoxides and aluminum chelate compounds with hydroxycarboxylic acids, aluminum oxide, ultrafine aluminum oxide particles, aluminum silicate, and compounded oxides containing aluminum in combination with titanium, silicon, zirconium, alkali metals, and alkaline earth metals. Among these compounds, carboxylic acid salts, inorganic acid salts, and chelating compounds are preferable and further, aluminum acetate, aluminum lactate, aluminum chloride, aluminum hydroxide, aluminum hydroxychloride, and aluminum acetylacetonate are particularly preferable.

Among these aluminum compounds, aluminum acetate, aluminum chloride, aluminum hydroxide, and aluminum hydroxychloride which have high aluminum content are preferable and further, in terms of solubility, aluminum acetate, aluminum chloride, and aluminum hydroxychloride are preferable. Further, from the viewpoint that apparatus is not corroded, use of aluminum acetate is particularly preferable.

Herein, aluminum hydroxychloride is a collective term for those called generally as polyaluminum chloride and basic aluminum chloride and those which are used for tap water can be used. They can be defined by a general structural formula $[Al_2(OH)_nCl_{6-n}]_m$ ($1 \leq n \leq 5$). Among them, from the viewpoint that apparatus is not corroded, those having low chlorine content are preferable.

The above-mentioned aluminum acetate is a collective term for those having structure of aluminum acetate salts represented by basic aluminum acetate, aluminum triacetate, and aluminum acetate solution and among them, in

terms of solubility and stability in a solution, use of basic aluminum acetate is preferable. Among the basic aluminum acetate, aluminum monoacetate, aluminum diacetate, and these compounds stabilized by boric acid are preferable. As a stabilizer for the basic aluminum acetate, urea and thiourea can be exemplified besides boric acid.

The above-mentioned aluminum compounds are preferable to be solubilized in a solvent such as water or glycol. Solvents to be used in the invention are water and alkylene glycols. Examples of alkylene glycols are ethylene glycol, diethylene glycol, triethylene glycol, propylene glycol, dipropylene glycol, tripropylene glycol, trimethylene glycol, ditrimethylene glycol, tetramethylene glycol, ditetramethylene glycol, and neopentyl glycol. Ethylene glycol, trimethylene glycol, and tetramethylene glycol are preferable, and ethylene glycol is more preferable. Use of compound solubilized in water and/or ethylene glycol is preferable since the effect of the invention can be significantly caused.

The use amount of an aluminum compound in producing a polyester according to the method of the present inventions is preferably 0.001 to 0.05% by mole as aluminum atom and more preferably 0.005 to 0.02% by mole to the number of moles of all of the constituent units of carboxylic acid components such as a dicarboxylic acid and a polycarboxylic acid of the polyester to be obtained. If the use amount is less than 0.001% by mole, the catalytic activity cannot be sometimes exhibited sufficiently and if the use amount exceeds 0.05% by mole, the heat stability and thermooxidation stability may possibly be lowered and formation of insoluble particles and discoloration of the polyester attributed to aluminum may be increased in some cases. As described, the present inventions are particularly characterized in that even if the addition amount of an aluminum component is low, the polymerization catalyst of the present inventions shows sufficient catalytic activity. As a result, heat stability and thermooxidation stability are made excellent and insoluble particles and discoloration of polyester attributed to aluminum can be lowered.

The phosphorus compound composing the polycondensation catalyst of the invention is not particularly limited, however it may include phosphoric acid; phosphoric acid esters such as trimethyl phosphate, triethyl phosphate, phenyl phosphate and triphenyl phosphate; phosphorous acid; phosphorous acid esters such as trimethyl phosphite, triethyl phosphite, triphenyl phosphite, tris(2,4-di-tert-butylphenyl) phosphite, and tetrakis(2,4-di-tert-butylphenyl)-4,4'-biphenylene diphosphite.

The phosphorus compound composing the polycondensation catalyst of the invention is not particularly limited, however it may include phosphoric acid; phosphoric acid esters such as trimethyl phosphate, triethyl phosphate, phenyl phosphate and triphenyl phosphate; phosphorous acid; phosphorous acid esters such as trimethyl phosphite, triethyl phosphite, triphenyl phosphite, tris(2,4-di-tert-butylphenyl) phosphite, and tetrakis(2,4-di-tert-butylphenyl)-4,4'-biphenylene diphosphite.

Preferable phosphorus compounds of the invention may be at least one phosphorus compound selected from a group consisting of phosphonic acid based compounds, phosphinic acid based compounds, phosphine oxide based compounds, phosphonous acid based compounds, phosphinous acid based compounds, and phosphine based compounds. An effect of improving the catalytic activity is observed in the case of using these phosphorus compounds and at the same time, an effect of improving the physical properties such as heat stability of the polyester is observed. Among them, if the phosphonic acid based compounds are used, the physical property improvement effect and the catalytic activity improvement effect are significant and therefore their use is preferable. Among the above-mentioned phosphorus compounds, if compounds having an aromatic ring structure are used, the physical property improvement effect and the catalytic activity improvement effect are significant and therefore their use is preferable.

The phosphonic acid compounds, phosphinic acid compounds, phosphine oxide compounds, phosphonous acid compounds, phosphinous acid compounds, and phosphine compounds in the invention are compounds respectively having the following structures defined by the following formulae (1) to (6).

(Formula 1)

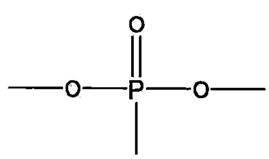

(Formula 2)

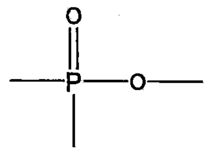

(Formula 3)

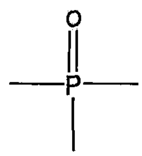

(Formula 4)

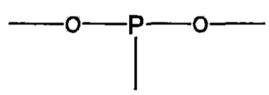

(Formula 5)

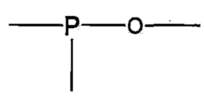

(Formula 6)

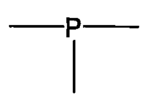

The phosphonic acid compounds in the present inventions may include dimethyl methylphosphonate, diphenyl methylphosphonate, dimethyl phenylphosphonate, diethyl phenylphosphonate, diphenyl phenylphosphonate, dimethyl benzylphosphonate, and diethyl benzylphosphonate. The phosphinic acid compounds in the present inventions may include diphenylphosphinic acid, methyl diphenylphosphinate, phenyl diphenylphosphinate, phenylphosphinic acid, methyl phenylphosphinate, and phenyl phenylphosphinate. The phosphine oxide compounds in the present inventions may include diphenylphosphine oxide, methyldiphenylphosphine oxide, and triphenylphosphine oxide.

As phosphorus compounds in the present inventions among the phosphinic acid compounds, phosphine oxide compounds, phosphonous acid compounds, phosphinous acid compounds, and phosphine compounds, the following compounds defined by the following formulae (Formula 7) to (Formula 12) are preferable.

(Formula 7)

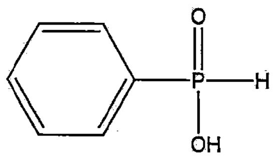

(Formula 8)

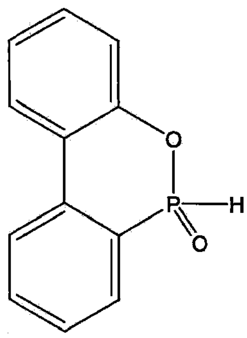

(Formula 9)

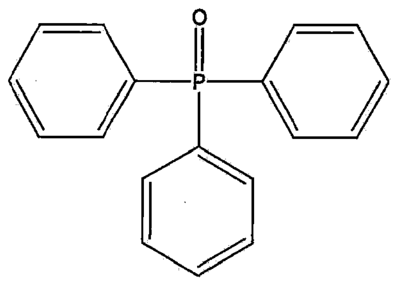

(Formula 10)

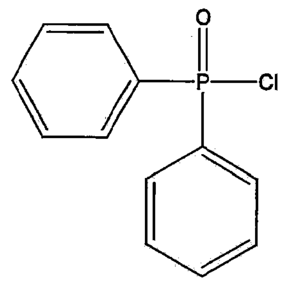

(Formula 11)

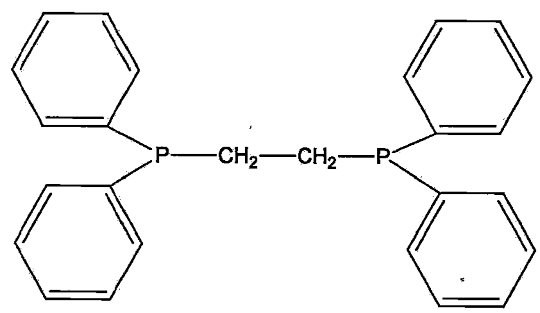

(Formula 12) $[(CH_3)(CH_2)_7]_3P$

Among the above-mentioned phosphorus compounds, use of compounds having aromatic ring structure is preferable, since the effect of the physical property improvement and the effect of the catalytic activity improvement become considerably significant.

Also, use of the compounds defined by the following general formulae (Formula 13) to (Formula 15) is preferable as the phosphorus compounds of the invention, since the effect of the physical property improvement and the effect of the catalytic activity improvement become particularly significant.

(Formula 13) $P(=O)R^1(OR^2)(OR^3)$

(Formula 14) $P(=O)R^1R^4(OR^2)$

(Formula 15) $P(=O)R^1R^5R^6$

(In the formulae (Formula 13) to (Formula 15), $R^1$, $R^4$, $R^5$, and $R^6$ independently denote hydrogen, a hydrocarbon group of 1 to 50 carbon atoms, or a hydrocarbon group of 1 to 50 carbon atoms containing a hydroxyl group, a halogen group, an alkoxyl group, or an amino group. $R^2$ and $R^3$ independently denote hydrogen, a hydrocarbon group of 1 to 50 carbon atoms, or a hydrocarbon group of 1 to 50 carbon atoms containing hydroxyl group or an alkoxyl group. Herein, hydrocarbon group may include alicyclic structure such as cyclohexyl and aromatic ring structure such as phenyl and naphthyl.)

The phosphorus compounds of the present inventions are particularly preferable to be compounds having aromatic ring structure for $R^1$, $R^4$, $R^5$, and $R^6$ in the above-mentioned formulae (Formula 13) to (Formula 15).

The phosphorus compounds of the present inventions may include dimethyl methylphosphonate, diphenyl methylphosphonate, dimethyl phenylphosphonate, diethyl phenylphosphonate, diphenyl phenylphosphonate, dimethyl benzylphosphonate, diethyl benzylphosphonate, diphenylphosphinic acid, methyl diphenylphosphinate, phenyl diphenylphosphinate, phenylphosphinic acid, methyl phenylphosphinate, phenyl phenylphosphinate, diphenylphosphine oxide, methyldiphenylphosphine oxide, and triphenylphosphine oxide. Among them, dimethyl phenylphosphonate and diethyl benzylphosphonate are particularly preferable.

In the present inventions, metal salt compounds of phosphorus as the phosphorous compounds among the above-mentioned phosphorus compounds are particularly preferable. The metal salt compounds of phosphorus are not particularly limited, if they are metal salts of phosphorus compounds. Use of metal salts of phosphonic acid compounds is preferable, since the effect of the physical property improvement of polyesters and the effect of the catalytic activity improvement, which are the purposes of the present inventions, become significant. The metal salts of phosphorus compounds include monometal salt, dimetal salt, and trimetal salt, and the like.

Among the above-mentioned phosphorus compounds, use of those in which the metal portions of the metal salt are selected from Li, Na, K, Be, Mg, Sr, Ba, Mn, Ni, Cu, and Zn is preferable, since the effect of the catalytic activity improvement becomes significant. Li, Na, and Mg are particularly preferable among them.

As the metal salt compounds of phosphorus of the present inventions, at least one selected from the compounds defined by the following general formula (Formula 16) is preferable, since the effect of the physical property improvement and the effect of the catalytic activity improvement become significant.

(Formula 16)

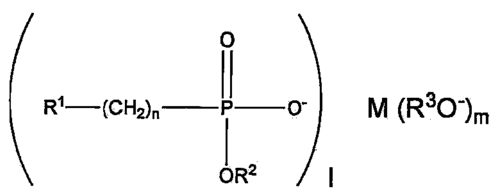

(In the formula (Formula 16), $R^1$ denotes hydrogen, a hydrocarbon group of 1 to 50 carbon atoms, or a hydrocarbon group of 1 to 50 carbon atoms containing a hydroxyl group, a halogen group, an alkoxyl group, or an amino group. $R^2$ denotes hydrogen, a hydrocarbon group of 1 to 50 carbon atoms, or a hydrocarbon group of 1 to 50 carbon atoms containing a hydroxyl group or an alkoxyl group. $R^3$ denotes hydrogen, a hydrocarbon group of 1 to 50 carbon atoms, or a hydrocarbon group of 1 to 50 carbon atoms containing a hydroxyl group, an alkoxyl group, or a carbonyl group. The reference character 1 denotes an integer of 1 or higher; m denotes 0 or an integer of 1 or higher; and 1 + m is 4 or lower. M denotes a metal cation with (1+m) valence. The reference character n denotes an integer of 1 or higher. Herein, the hydrocarbon group may include alicyclic structure such as cyclohexyl, branched structure and aromatic ring structure such as phenyl and naphthyl.)

Examples of the above-mentioned $R^1$ may be phenyl, 1-naphthyl, 2-naphthyl, 9-anthryl, 4-biphenyl, and 2-biphenyl. Examples of the above-mentioned $R^2$ may be hydrogen, methyl, ethyl, propyl, isopropyl, n-butyl, sec-butyl, tert-butyl, a long chain aliphatic group, phenyl, naphthyl, substituted phenyl and naphthyl, and a group defined as $-CH_2CH_2OH$. Examples of $R^3O^-$ may be hydroxide ion, alcoholate ion, acetate ion, and acetylacetone ion.

At least one selected from the compounds defined by the following general formula (Formula 17) is preferable to be used among the compounds defined by the above-mentioned general formula (Formula 16).

(Formula 17)

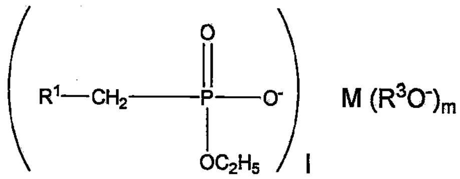

(In the formula (Formula 17), $R^1$ denotes hydrogen, a hydrocarbon group of 1 to 50 carbon atoms, or a hydrocarbon group of 1 to 50 carbon atoms containing a hydroxyl group, a halogen group, an alkoxyl group, or an amino group. $R^3$ denotes hydrogen, a hydrocarbon group of 1 to 50 carbon atoms, or a hydrocarbon group of 1 to 50 carbon atoms containing a hydroxyl group, an alkoxyl group, or a carbonyl group. The reference character 1 denotes an integer of 1 or higher; m denotes 0 or an integer of 1 or higher; and 1 + m is 4 or lower. M denotes a metal cation with (1 + m) valence. The hydrocarbon group may include alicyclic structure such as cyclohexyl, branched structure and aromatic ring structure such as phenyl and naphthyl.)

Examples of the above-mentioned $R^1$ may be phenyl, 1-naphthyl, 2-naphthyl, 9-anthryl, 4-biphenyl, and 2-biphenyl. Examples of $R^3O^-$ may be hydroxide ion, alcoholate ion, acetate ion, and acetylacetone ion.

Among the above-mentioned phosphorus compounds, use of compounds having aromatic ring structure is preferable, since the effect of the physical property improvement and the effect of the catalytic activity improvement become significant.

By using compounds having a metal for M selected from Li, Na, K, Be, Mg, Sr, Ba, Mn, Ni, Cu, and Zn among the compounds defined by the formulae (Formula 17), the effect of the catalytic activity improvement is significant and therefore, it is preferable. Among the metals, Li, Na, and Mg are particularly preferable.

Examples of the metal salt compounds of phosphorus of the present inventions are lithium [ethyl (1-naphthyl) methylphosphonate], sodium [ethyl (1-naphthyl)methylphosphonate], magnesium bis[ethyl (1-naphthyl)methylphosphonate], potassium [ethyl (2-naphthyl)methylphosphonate], magnesium bis[ethyl (2-naphthyl)methylphosphonate], lithium [ethyl benzylphosphonate], sodium [ethyl benzylphosphonate], magnesium bis[ethyl benzylphosphonate], beryllium bis [ethyl benzylphosphonate], strontium bis[ethyl benzylphosphonate], manganese bis[ethyl benzylphosphonate], sodium benzylphosphonate, magnesium bis[benzylphosphonate], sodium [ethyl (9-anthryl)methylphosphonate], magnesium bis[ethyl (9-anthryl)methylphosphonate], sodium [ethyl 4-hydroxybenzylphosphonate], magnesium bis[ethyl 4-hydroxybenzylphosphonate], sodium [phenyl 4-chlorobenzylphosphonate], magnesium bis[ethyl 4-chlorobenzylphosphonate], sodium [methyl 4-aminobenzylphosphonate], magnesium bis[methyl 4-aminobenzylphosphonate], sodium phenylphosphonate, magnesium bis[ethyl phenylphosphonate], and zinc bis[ethyl phenylphosphonate]. Particularly preferable compounds among them are lithium [ethyl (1-naphthyl)methylphosphonate], sodium [ethyl (1-naphthyl)methylphosphonate], magnesium bis[ethyl (1-naphthyl)methylphosphonate], lithium [ethyl benzylphosphonate], sodium [ethyl benzylphosphonate], magnesium bis[ethyl benzylphosphonate], sodium benzylphosphonate, and magnesium bis[benzylphosphonate].

In the present inventions, among the above-mentioned phosphorus compounds, phosphorus compounds having at least one P-OH bond are particularly preferable as the phosphorus compounds. Addition of these phosphorus compounds improves the effect of improving physical properties of polyesters and in addition, the effect of improving the catalytic activity is considerably heightened by using these phosphorus compounds in combination with the aluminum compounds of the present inventions at the time of polymerization of polyester.
The phosphorus compounds having at least one P-OH bond are not particularly limited as long as they are phosphorus compound having at least one P-OH in a molecule. Use of phosphonic acid compounds having at least one P-OH bond among these phosphorus compounds is preferable, since the effect of the physical property improvement of polyesters and the effect of the catalytic activity improvement become significant.

Use of compounds having aromatic ring structure among these phosphorus compounds is preferable, since the effect of the physical property improvement and the effect of the catalytic activity improvement become significant.

Use of at least one selected from the compounds defined by the following general formula (Formula 18) is preferable as phosphorus compounds having at least one P-OH bond of the present inventions, since the effect of the physical property improvement and the effect of the catalytic activity improvement become significant.

(Formula 18)

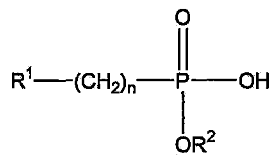

(In the formula (Formula 18), $R^1$ denotes hydrogen, a hydrocarbon group of 1 to 50 carbon atoms, or a hydrocarbon group of 1 to 50 carbon atoms containing a hydroxyl group, a halogen group, an alkoxyl group, or an amino group. $R^2$ denotes hydrogen, a hydrocarbon group of 1 to 50 carbon atoms, or a hydrocarbon group of 1 to 50 carbon atoms containing a hydroxyl group or an alkoxyl group. The reference character n denotes an integer of 1 or higher. Herein, the hydrocarbon group may include alicyclic structure such as cyclohexyl, branched structure, and aromatic ring structure such as phenyl and naphthyl.)

Examples of the above-mentioned $R^1$ may be phenyl, 1-naphthyl, 2-naphthyl, 9-anthryl, 4-biphenyl, and 2-biphenyl. Examples of the above-mentioned $R^2$ may be hydrogen, methyl, ethyl, propyl, isopropyl, n-butyl, sec-butyl, tert-butyl, a long chain aliphatic group, phenyl, naphthyl, substituted phenyl and naphthyl, and a group defined as $-CH_2CH_2OH$.

Use of compounds having aromatic ring structure among these phosphorus compounds is preferable, since the effect of the physical property improvement and the effect of the catalytic activity improvement become significant.

Examples of phosphorus compounds having at least one P-OH bond may be ethyl (1-naphthyl)methylphosphonate, (1-naphthyl)methylphosphonic acid, ethyl (2-naphthyl)methylphosphonate, ethyl benzylphosphonate, benzylphosphonic acid, ethyl (9-anthryl)methylphosphonate, ethyl 4-hydroxybenzylphosphonate, ethyl 2-methylbenzylphosphonate, phenyl 4-chlorobenzylphosphonate, methyl 4-aminobenzylphosphonate, and ethyl 4-methoxybenzylphosphonate. Among them ethyl (1-naphthyl)methylphosphonate and ethyl benzylphosphonate are particularly preferable.

Phosphorus compounds defined by the following chemical formula (Formula 19) are exemplified as preferable phosphorus compounds of the present inventions.

(Formula 19) $R^1-CH_2-P(=O)(OR^2)(OR^3)$

(In the formula (Formula 19), $R^1$ denotes a hydrocarbon group of 1 to 49 carbon atoms, or a hydrocarbon group of 1 to 49 carbon atoms containing a hydroxyl group, a halogen group, an alkoxyl group, or an amino group. $R^2$ and $R^3$ independently denote hydrogen, a hydrocarbon group of 1 to 50 carbon atoms, or a hydrocarbon group of 1 to 50 carbon atoms containing a hydroxyl group or an alkoxyl group. The hydrocarbon group may include alicyclic structure, branched structure, and aromatic ring structure.)

Further preferable compounds are those having aromatic ring structure for at least one of $R^1$, $R^2$, and $R^3$ in the chemical formula (Formula 19).

Practical examples of the phosphorus compounds are as follows.

(Formula 20)

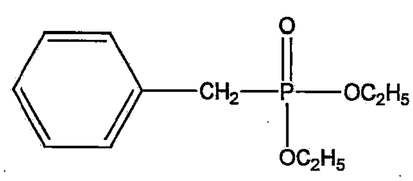

(Formula 21)

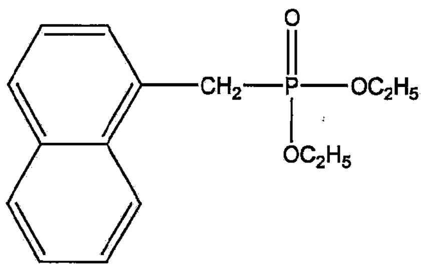

(Formula 22)

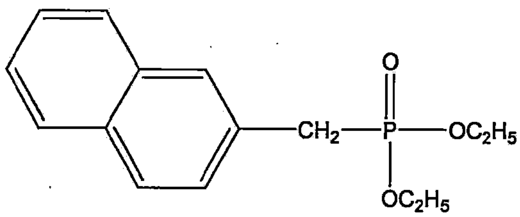

(Formula 23)

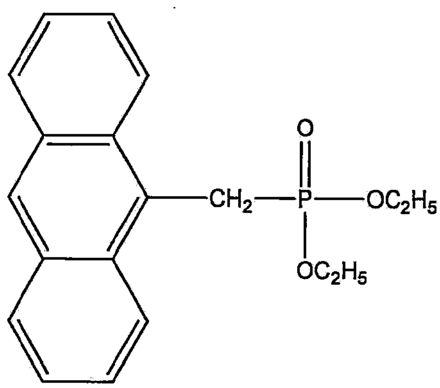

(Formula 24)

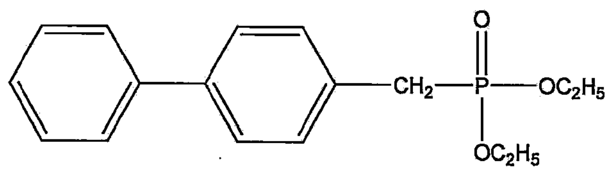

(Formula 25)

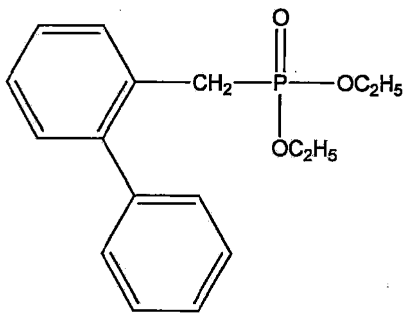

Also, the phosphorus compounds of the present inventions are preferably those having a high molecular weight as they are hard to be distilled in polymerization and thus effective.

The phosphorus compounds of the present inventions are preferably phosphorus compounds having a phenol portion within molecule. By use of the phosphorus compounds have a phenol portion within molecule, the effect of the physical property improvement of polyesters is heightened. In addition, by use of the phosphorus compounds having a phenol portion within molecule are used in polymerization of polyester, the effect of the catalytic activity improvement is more heightened and therefore, these compounds are excellent in the productivity of polyesters.

The phosphorus compounds having a phenol portion within molecule are not particularly limited as long as they are phosphorus compounds having phenol structure. Use of one or more compounds selected from a group consisting of phosphonic acid compounds, phosphinic acid compounds, phosphine oxide compounds, phosphonous acid compounds, phosphinous acid compounds, and phosphine compounds having a phenol portion within molecule is preferable, since the effect of the physical property improvement of polyester and the effect of the catalytic activity improvement become considerably significant. Among them, use of phosphonic acid compounds having one or more phenol portions within molecule is preferable, since the effect of the physical property improvement of polyester and the effect of the catalytic activity improvement become considerably significant.

Compounds defined by the following general formulae (Formula 26) to (Formula 28) are preferable as the phosphorus compounds having the phenol portion within molecule of the present inventions.

(Formula 26) $P(=O)R^1(OR^2)(OR^3)$

(Formula 27) $P(=O)R^1R^4(OR^2)$

(Formula 28) $P(=O)R^1R^5R^6$

(In the formulae (Formula 26) to (Formula 28), $R^1$ denotes a hydrocarbon group of 1 to 50 carbon atoms and including phenol portion, or a hydrocarbon group of 1 to 50 carbon atoms containing substituent group such as a hydroxyl group, a halogen group, an alkoxyl group, or an amino group as well as phenol portion. $R^4$, $R^5$, and $R^6$ independently denote hydrogen, a hydrocarbon group of 1 to 50 carbon atoms, or a hydrocarbon group of 1 to 50 carbon atoms containing substituent group such as a hydroxyl group, halogen group, an alkoxyl group, or an amino group. $R^2$ and $R^3$ independently denote hydrogen, a hydrocarbon group of 1 to 50 carbon atoms, or a hydrocarbon group of 1 to 50 carbon atoms containing substituent group such as a hydroxyl group or an alkoxyl group. The hydrocarbon group may include branched structure, alicyclic structure such as cyclohexyl, and aromatic ring structure such as phenyl and naphthyl. Terminals of $R^2$ and $R^4$ may be bonded to each other.)

Examples of the phosphorus compounds having phenol portion within molecule of the present inventions may include p-hydroxyphenylphosphonic acid, dimethyl p-hydroxyphenylphosphonate, diethyl p-hydroxyphenylphosphonate, diphenyl p-hydroxyphenylphosphonate, bis(p-hydroxyphenyl)phosphinic acid, methyl bis(p-hydroxyphenyl)phosphinate, phenyl bis(p-hydroxyphenyl)phosphinate, p-hydroxyphenylphenylphosphinic acid, methyl p-hydroxyphenylphenylphosphinate, phenyl p-hydroxyphenylphenylphosphinate, p-hydroxyphenylphosphinic acid, methyl p-hydroxyphenylphosphinate, phenyl p-hydroxyphenylphosphinate, bis(p-hydroxyphenyl)phosphine oxide, tris(p-hydroxyphenyl)phosphine oxide, bis(p-hydroxyphenyl)methylphosphine oxide, and compounds defined by the following formulae (Formula 29) to (Formula 32). Among them, compounds defined by the following formula (Formula 31) and dimethyl p-hydroxyphenylphosphonate are particularly preferable.

(Formula 29)

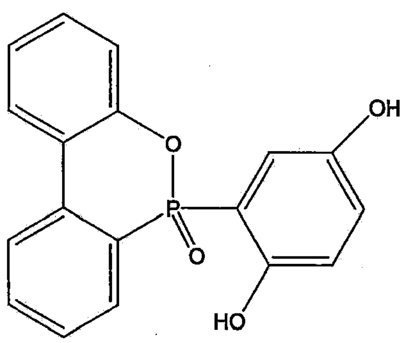

(Formula 30)

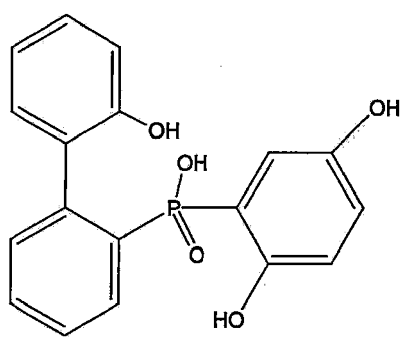

(Formula 31)

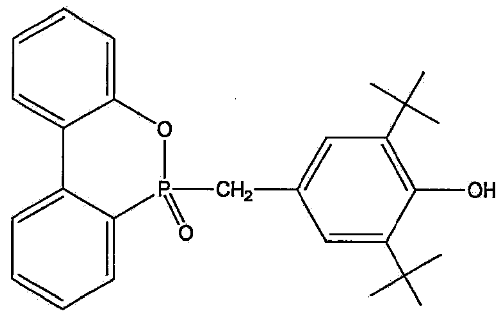

(Formula 32)

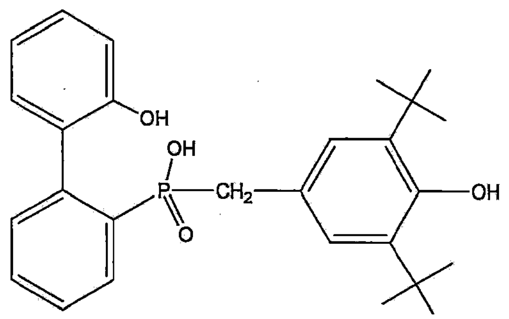

Usable compounds defined by the formula (Formula 31) may include SANKO-220 (manufactured by SANKO Co., Ltd.).

At least one compound selected from the specified metal salt compounds of phosphorus defined by the following general formula (Formula 33) is particularly preferable among the phosphorus compounds having phenol portion within molecule of the present inventions.

(Formula 33)

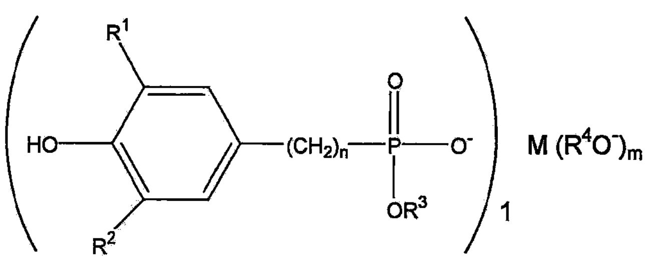

(In the formula (Formula 33), $R^1$ and $R^2$ independently denote hydrogen and a hydrocarbon group of 1 to 30 carbon atoms. $R^3$ denotes hydrogen, a hydrocarbon group of 1 to 50 carbon atoms, or a hydrocarbon group of 1 to 50 carbon atoms containing a hydroxyl group or an alkoxyl group. $R^4$ denotes hydrogen, a hydrocarbon group of 1 to 50 carbon atoms, or a hydrocarbon group of 1 to 50 carbon atoms containing a hydroxyl group, an alkoxyl group, or a carbonyl group. $R^4O^-$ includes hydroxide ion, alcoholate ion, acetate ion, or acetylacetone ion. The reference character 1 denotes an integer of 1 or higher; m denotes 0 or an integer of 1 or higher; and 1 + m is 4 or lower. M denotes a metal

cation with (1 + m) valence. The reference character n denotes an integer of 1 or higher. The hydrocarbon group may include alicyclic structure such as cyclohexyl, branched structure, and aromatic ring structure such as phenyl and naphthyl.)

Among these compounds at least one compound selected from compounds defined by the following formula (Formula 34) is preferable.

(Formula 34)

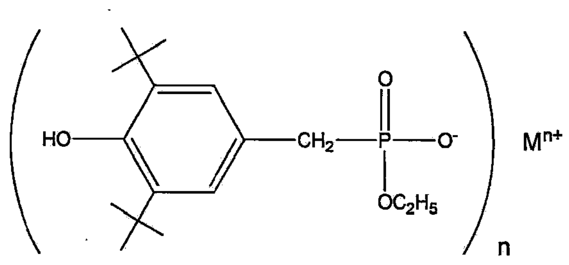

(In the formula [Formula 34], $M^{n+}$ denotes a metal cation with n-valence. The reference character n denotes 1, 2, 3, or 4.)

Use of compounds having a metal for M selected from Li, Na, K, Be, Mg, Sr, Ba, Mn, Ni, Cu, and Zn among the compounds defined by the formulae (Formula 33) and (Formula 34) is preferable, since the effect of the catalytic activity improvement is significant. Among the metals, Li, Na, and Mg particularly are preferable.

Examples of the specified metal salt compounds of phosphorus of the present inventions include lithium [ethyl 3,5-di-tert-butyl-4-hydroxybenzylphosphonate], sodium [ethyl 3,5-di-tert-butyl-4-hydroxybenzylphosphonate], sodium [3,5-di-tert-butyl-4-hydroxybenzylphosphonic acid], potassium [ethyl 3,5-di-tert-butyl-4-hydroxybenzlyphosphonate], magnesium bis[ethyl 3,5-di-tert-butyl-4-hydroxybenzylphosphonate], magnesium bis[3,5-di-tert-butyl-4-hydroxybenzylphosphonic acid], beryllium bis[methyl 3,5-di-tert-butyl-4-hydroxybenzylphosphonate], strontium bis[ethyl 3,5-di-tert-butyl-4-hydroxybenzylphosphonate], barium bis[phenyl 3,5-di-tert-butyl-4-hydroxybenzylphosphonate], manganese bis [ethyl 3,5-di-tert-butyl-4-hydroxybenzylphosphonate], nickel bis[ethyl 3,5-di-tert-butyl-4-hydroxybenzylphosphonate], copper bis[ethyl 3,5-di-tert-butyl-4-hydroxybenzylphosphonate], and zinc bis [ethyl 3,5-di-tert-butyl-4-hydroxybenzylphosphonate]. Among them lithium [ethyl 3,5-di-tert-butyl-4-hydroxybenzylphosphonate], sodium [ethyl 3,5-di-tert-butyl-4-hydroxybenzylphosphonate], and magnesium bis[ethyl 3,5-di-tert-butyl-4-hydroxybenzylphosphonate] particularly are preferable.

At least one compound selected from specified phosphorus compounds having at least one P-OH bond and defined by the following general formula (Formula 35) having at least one P-OH bond is particularly preferable among the phosphorus compounds having phenol portion within molecule of the present inventions.

(Formula 35)

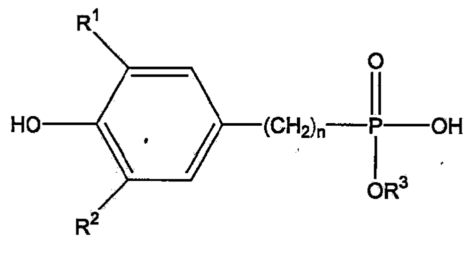

(In the formula (Formula 35), $R^1$ and $R^2$ independently denote hydrogen or a hydrocarbon group of 1 to 30 carbon atoms. $R^3$ denotes hydrogen, a hydrocarbon group of 1 to 50 carbon atoms, or a hydrocarbon group of 1 to 50 carbon atoms containing a hydroxyl group or an alkoxyl group. The reference character n denotes an integer of 1 or higher. The hydrocarbon group may include alicyclic structure such as cyclohexyl, branched structure, and aromatic

ring structure such as phenyl and naphthyl.)

At least one compound selected from compounds defined by the following general formula (Formula 36) is particularly preferable among these compounds.

(Formula 36)

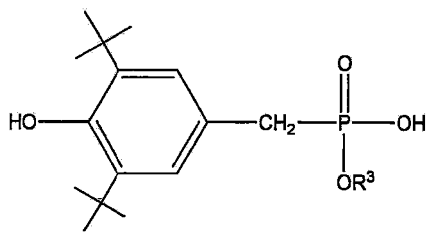

(In the formula (Formula 36), $R^3$ denotes hydrogen and a hydrocarbon group of 1 to 50 carbon atoms, or a hydrocarbon group of 1 to 50 carbon atoms containing a hydroxyl group or an alkoxyl group. The hydrocarbon group may include alicyclic structure such as cyclohexyl, branched structure, and aromatic ring structure such as phenyl and naphthyl.)

Examples of groups denoted by $R^3$ are hydrogen, methyl, ethyl, propyl, isopropyl, n-butyl, sec-butyl, tert-butyl, a long chain aliphatic group, phenyl, naphthyl, substituted phenyl and naphthyl, and a group defined as $-CH_2CH_2OH$.

The specified phosphorus compounds having at least one P-OH bond of the present inventions may include ethyl 3,5-di-tert-butyl-4-hydroxybenzylphosphonate, methyl 3,5-di-tert-butyl-4-hydroxybenzylphosphonate, isopropyl 3,5-di-tert-butyl-4-hydroxybenzylphosphonate, phenyl 3,5-di-tert-butyl-4-hydroxybenzylphosphonate, octadecyl 3,5-di-tert-butyl-4-hydroxybenzylphosphonate, and 3,5-di-tert-butyl-4-hydroxybenzylphosphonic acid. Among them ethyl 3,5-di-tert-butyl-4-hydroxybenzylphosphonate and methyl 3,5-di-tert-butyl-4-hydroxybenzylphosphonate particularly are preferable.

At least one phosphorus compound selected from specified phosphorus compounds defined by the following general formula (Formula 37) is particularly preferable among the phosphorus compounds having phenol portion within molecule of the present inventions.

(Formula 37)

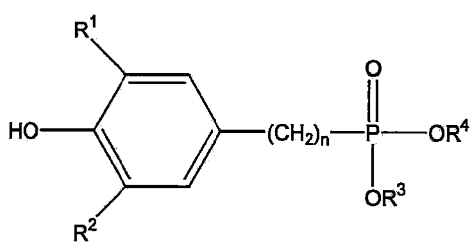

(In the formula (Formula 37), $R^1$ and $R^2$ independently denote hydrogen or a hydrocarbon group of 1 to 30 carbon atoms. $R^3$ and $R^4$ independently denote hydrogen, a hydrocarbon group of 1 to 50 carbon atoms, or a hydrocarbon group of 1 to 50 carbon atoms containing a hydroxyl group or an alkoxyl group. The reference character n denotes an integer of 1 or higher. The hydrocarbon group may include alicyclic structure such as cyclohexyl, branched structure, and aromatic ring structure such as phenyl and naphthyl.)

Use of at least one compound selected from compounds defined by the following general formula (Formula 38) among those compounds defined by the formula (Formula 37) is preferable, since the effect of the physical property improvement of polyester and the effect of the catalytic activity improvement become considerably significant.

(Formula 38)

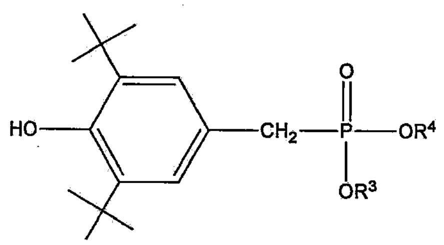

(In the formula (Formula 38), $R^3$ and $R^4$ independently denote hydrogen, a hydrocarbon group of 1 to 50 carbon atoms, or a hydrocarbon group of 1 to 50 carbon atoms containing hydroxyl group or an alkoxyl group. The hydrocarbon group may include alicyclic structure such as cyclohexyl, branched structure, and aromatic ring structure such as phenyl and naphthyl.)

Examples of groups denoted by $R^3$ and $R^4$ are hydrogen, short chain aliphatic groups such as methyl and butyl; long chain aliphatic groups such as octadecyl; aromatic groups such as phenyl and naphthyl, substituted phenyl and naphthyl, and a group defined as $-CH_2CH_2OH$.

Examples of the specified phosphorus compounds of the present inventions may include diisopropyl 3,5-di-tert-butyl-4-hydroxybenzylphosphonate, di-n-butyl 3,5-di-tert-butyl-4-hydroxybenzylphosphonate, dioctadecyl 3,5-di-tert-butyl-4-hydroxybenzylphosphonate, and diphenyl 3,5-di-tert-butyl-4-hydroxybenzylphosphonate. Among them dioctadecyl 3,5-di-tert-butyl-4-hydroxybenzylphosphonate and diphenyl 3,5-di-tert-butyl-4-hydroxybenzylphosphonate particularly are preferable.

At least one phosphorus compound selected from compounds defined by the following general formulae (Formula 39) and (Formula 40) is particularly preferable among the phosphorus compounds having phenol portion within molecule of the present inventions.

(Formula 39)

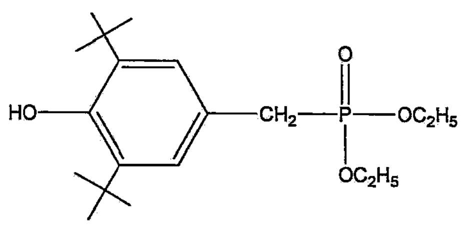

(Formula 40)

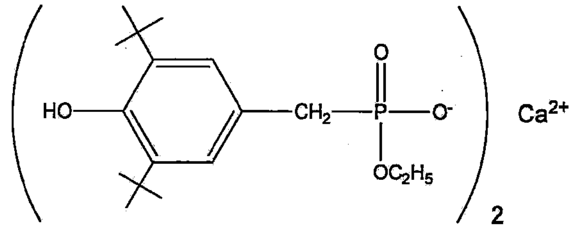

Irganox 1222 (manufactured by Ciba Specialty Chemicals K.K.) is commercialized as a compound defined by the above-mentioned chemical formula (Formula 39) and Irganox 1425 (manufactured by Ciba Specialty Chemicals K.K.) is commercialized as a compound defined by the above-mentioned chemical formula (Formula 40) and both are usable.

Examples of other phosphorus compounds to be used in the invention are phosphonic acid type compounds having the bonding group (X) and defined by the following formulae (Formula 41) and (Formula 42) or phosphonic acid type compounds having no bonding group (X) and defined by the following formula (Formula 43).

Examples of the phosphonic acid type compounds having the bonding group (X) and defined by the following formulae (Formula 41) are the following.

(Formula 41) $R^1$-X-(P=O)($QR^2$) ($OR^3$)

(In the chemical formula (Formula 41) having the bonding group, $R^1$ denotes an aromatic ring structure having 6 to 50 carbon atoms or a heterocyclic structure having 4 to 50 carbon atoms and the aromatic ring structure or the heterocyclic structure may have substituent groups. X denotes the bonding group and may be selected from an aliphatic hydrocarbon (including straight chain, branched, or alicyclic structure) having 1 to 10 carbon atoms, a substituted aliphatic hydrocarbon (including a straight chain, branched, or alicyclic structure) having 1 to 10 carbon atoms, -O-, $-OCH_2-$, $-SO_2-$ -CO-, $-COCH_2-$, $-CH_2OCO-$, -NHCO-, -NH-, -NHCONH-, $-NHSO_2-$, and $-NHC_3H_6OCH_2CH_2O-$; $R^2$ and $R^3$ independently denote hydrogen, a hydrocarbon group having 1 to 20 carbon atoms, or a hydroxyl- or an alkoxyl-containing hydrocarbon group having 1 to 20 carbon atoms; and the hydrocarbon groups may have alicyclic structure, branched structure, or aromatic ring structure.)

The substituent group of the aromatic ring structure or the heterocyclic structure of the phosphorus compound defined by the formula (Formula 41) may include one or more groups selected from a hydrocarbon group having 1 to 50 carbon atoms (including alicyclic structure, branched structure, or aromatic ring structure and these structures may be halogen-substituted structures), a hydroxyl, a halogen, an alkoxyl having 1 to 10 carbon atoms, an amino (may have substituent group of an alkyl having 1 to 10 carbon atoms or an alkanol group), a nitro group, a carboxyl group, an ester group of an aliphatic carboxylic acid having 1 to 10 carbon atoms, a formyl, an acyl, a sulfonic acid group, a sulfonic acid amide (may have substituent group of an alkyl having 1 to 10 carbon atoms or an alkanol group), a phosphoryl-containing group, a nitryl, and a cyanoalkyl.

The phosphorus compound defined by the chemical formula (Formula 41) may include the following compounds. Practical examples are benzylphosphonic acid, benzylphosphonic acid monoethyl ester, 1-naphthylmethyl phosphonic acid, 1-haphthylmethyl phosphonic acid monoethyl ester, 2-naphthylmethyl phosphonic acid, 2-naphthylmethyl phosphonic acid monoethyl ester, 4-phenylbenzylphosphonic acid, 4-phenylbenzylphosphonic acid monoethyl ester, 2-phenylbenzylphosphonic acid, 2-phenylbenzylphosphonic acid monoethyl ester, 4-chlorobenzylphosphonic acid, 4-chlorobenzylphosphonic acid monoethyl ester, 4-chlorobenzylphosphonic acid diethyl ester, 4-methoxybenzylphosphonic acid, 4-methoxybenzylphosphonic acid monoethyl ester, 4-methoxybenzylphosphonic acid diethyl ester, 4-methylbenzylphosphonic acid, 4-methylbenzylphosphonic acid monoethyl ester, 4-methylbenzylphosphonic acid diethyl ester, 4-nitrobenzylphosphonic acid, 4-nitrobenzylphosphonic acid monoethyl ester, 4-nitrobenzylphosphonic acid diethyl ester, 4-aminobenzylphosphonic acid, 4-aminobenzylphosphonic acid monoethyl ester, 4-aminobenzylphosphonic acid diethyl ester, 2-methylbenzylphosphonic acid, 2-methylbenzylphosphonic acid monoethyl ester, 2-methylbenzylphosphonic acid diethyl ester, 10-anthranylmethylphosphonic acid, 10-anthranylmethylphosphonic acid monoethyl ester, 10-anthranylmethylphosphonic acid diethyl ester, (4-methoxyphenyl-, ethoxyphenyl-)methylphosphonic acid, (4-methoxyphenyl-, ethoxyphenyl-)methylphosphonic acid monomethyl ester, (4-methoxyphenyl-, ethoxyphenyl-)methylphosphonic acid dimethyl ester, (phenyl-, hydroxy-)methylphosphonic acid, (phenyl-, hydroxy-)methylphosphonic acid monoethyl ester,

(phenyl-, hydroxy-)methylphosphonic acid diethyl ester, (phenyl-, chloro-)methylphosphonic acid, (phenyl-, chloro-)methylphosphonic acid monoethyl ester, (phenyl-, chloro-)methylphosphonic acid diethyl ester, (4-chlorophenyl)iminophosphonic acid, (4-chlorophenyl)iminophosphonic acid monoethyl ester, (4-chlorophenyl)iminophosphonic acid diethyl ester, (4-hydroxyphenyl-, diphenyl-)methylphosphonic acid, (4-hydroxyphenyl-, diphenyl-)methylphosphonic acid monoethyl ester, (4-hydroxyphenyl-, diphenyl-)methylphosphonic acid diethyl ester, (4-chlorophenyl-, hydroxy-)methylphosphonic acid, (4-chlorophenyl-, hydroxy-)methylphosphonic acid monomethyl ester, (4-chlorophenyl-, hydroxy-)methylphosphonic acid dimethyl ester, and in addition, as phosphorus compounds having heteroring, 2-benzofuranylmethylphosphonic acid diethyl ester, 2-benzofuranylmethylphosphonic acid monoethyl ester, 2-benzofuranylmethylphosphonic acid, 2-(5-methyl)benzofuranylmethylphosphonic acid diethyl ester, 2-(5-methyl)benzofuranylmethylphosphonic acid monoethyl ester, 2-(5-methyl)benzofuranylmethylphosphonic acid. The above-mentioned bonding group-containing phosphorus compounds are preferable in terms of the polymerization activity.

The phosphorus compounds defined by the chemical formula (Formula 41) having a bonding group (X=-$(CH_2)_n$-) and usable in the invention are follows.

(Formula 42) $(R^0)_m$-$R^1$-$(GH_2)_n$-(P=O) $(OR^2)$ $(OR^3)$

(In the chemical formula (Formula 42), $R^0$ denotes a hydroxyl, a C1 to C10 alkyl, -COOH, or -$COOR^4$ ($R^4$ denotes a C1 to C4 alkyl group), an alkylene glycol, or a monoalkoxyalkylene glycol group (the monoalkoxy is a C1 to C4 alkoxy and alkylene glycol group is a C1 to C4 alkylene glycol group) ; $R^1$ denotes an aromatic ring structure such as benzene, naphthalene, biphenyl, diphenyl ether, diphenyl thioether, diphenylsulfone, diphenylmethane, diphenyldimethylmethane, diphenyl ketone, anthracene, phenanthrene, and pyrene; $R^2$ and $R^3$ independently denote a hydrogen atom or a C1 to C4 hydrocarbon group; m denotes an integer of 1 to 5; and in the case where a plurality of groups defined by $R^0$ exist, the respective groups may be same substituent groups or different substituent groups; and n denotes 0 or an integer of 1 to 5.)

Among the phosphorus compounds defined by the chemical formula (Formula 42) of the invention, those having a benzene group as the substituent-containing aromatic ring structure are as follows. That is, examples thereof may include, but not limited to, benzylphosphonic acids into whose benzen ring hydroxyl is introduced, such as 2-hydroxybenzylphosphonic acid diethyl ester, 2-hydroxybenzylphosphonic acid monoethyl ester, 2-hydroxybenzylphosphonic acid, 4-hydroxybenzylphosphonic acid diethyl ester, 4-hydroxybenzylphosphonic acid monoethyl ester, 4-hydroxybenzylphosphonic acid, 6-hydroxybenzylphosphonic acid diethyl ester, 6-hydroxybenzylphosphonic acid monoethyl ester, and 6-hydroxybenzylphosphonic acid.

Further, examples may include, but not limited to, benzylphosphonic acids into whose benzen ring an alkyl is introduced, such as 2-n-butylbenzylphosphonic acid diethyl ester, 2-n-butylbenzylphosphonic acid monoethyl ester, 2-n-butylbenzylphosphonic acid, 3-n-butylbenzylphosphonic acid diethyl ester, 3-n-butylbenzylphosphonic acid monoethyl ester, 3-n-butylbenzylphosphonic acid, 4-n-butylbenzylphosphonic acid diethyl ester, 4-n-butylbenzylphosphonic acid monoethyl ester, 4-n-butylbenzylphosphonic acid, 2,5-n-dibutylbenzylphosphonic acid diethyl ester, 2,5-n-dibutylbenzylphosphonic acid monoethyl ester, 2,5-n-dibutylbenzylphosphonic acid, 3,5-n-dibutylbenzylphosphonic acid diethyl ester, 3,5-n-dibutylbenzylphosphonic acid monoethyl ester, and 3,5-n-dibutylbenzylphosphonic acid.

Further, examples may include, but not limited to, benzylphosphonic acids into whose benzene ring carboxyl or carboxylate ester group is introduced, such as 2-carboxybenzylphosphonic acid diethyl ester, 2-carboxybenzylphosphonic acid monoethyl ester, 2-carboxybenzylphosphonic acid, 3-carboxybenzylphosphonic acid diethyl ester, 3-carboxybenzylphosphonic acid monoethyl ester, 3-carboxybenzylphosphonic acid, 4-carboxybenzylphosphonic acid diethyl ester, 4-carboxybenzylphosphonic acid monoethyl ester, 4-carboxybenzylphosphonic acid, 2,5-dicarboxybenzylphosphonic acid diethyl ester, 2,5-dicarboxybenzylphosphonic acid monoethyl ester, 2,5-dicarboxybenzylphosphonic acid, 3,5-dicarboxybenzylphosphonic acid diethyl ester, 3,5-dicarboxybenzylphosphonic acid monoethyl ester, 3,5-dicarboxybenzylphosphonic acid, 2-methoxycarbonylbenzylphosphonic acid diethyl ester, 2-methoxycarbonylbenzylphosphonic acid monoethyl ester, 2-methoxycarbonylbenzylphosphonic acid, 3-methoxycarbonylbenzylphosphonic acid diethyl ester, 3-methoxycarbonylbenzylphosphonic acid monoethyl ester, 3-methoxycarbonylbenzylphosphonic acid, 4-methoxycarbonylbenzylphosphonic acid diethyl ester, 4-methoxycarbonylbenzylphosphonic acid monoethyl ester, 4-methoxycarbonylbenzylphosphonic acid, 2,5-dimethoxycarbonylbenzylphosphonic acid diethyl ester, 2,5-dimethoxycarbonylbenzylphosphonic acid monoethyl ester, 2,5-dimethoxycarbonylbenzylphosphonic acid, 3,5-dimethoxycarbonylbenzylphosphonic acid diethyl ester, 3,5-dimethoxycarbonylbenzylphosphonic acid monoethyl ester, and 3,5-dimethoxycarbonylbenzylphosphonic acid.

Further, examples may include, but not limited to, benzylphosphonic acids into whose benzene ring an alkylene glycol group or a monoalkoxylated alkylene glycol group is introduced, such as 2-(2-hydroxyethoxy)benzylphosphonic acid diethyl ester, 2-(2-hydroxyethoxy)benzylphosphonic acid monoethyl ester, 2-(2-hydroxyethoxy)benzylphosphonic acid, 3-(2-hydroxyethoxy)benzylphosphonic acid diethyl ester, 3-(2-hydroxyethoxy)benzylphosphonic acid monoethyl ester, 3-(2-hydroxyethoxy)benzylphosphonic acid, 4-(2-hydroxyethoxy)benzylphosphonic acid diethyl ester, 4-(2-hydroxyethoxy)benzylphosphonic acid monoethyl ester, 4-(2-hydroxyethoxy)benzylphosphonic acid, 2,5-di(2-hydroxyethoxy)benzylphosphonic acid diethyl ester, 2,5-di(2-hydroxyethoxy)benzylphosphonic acid monoethyl ester, 2,5-di(2-hydroxyethoxy)benzylphosphonic acid, 3,5-di(2-hydroxyethoxy)benzylphosphonic acid diethyl ester, 3,5-di(2-hydroxyethoxy)benzylphosphonic acid monoethyl ester, 3,5-di(2-hydroxyethoxy)benzylphosphonic acid, 2-(2-methoxyethoxy) benzylphosphonic acid diethyl ester, 2-(2-methoxyethoxy)benzylphosphonic acid monoethyl ester, 1-(2-methoxyethoxy) benzylphosphonic acid, 3-(2-methoxyethoxy)benzylphosphonate, 3-(2-methoxyethoxy)benzylphosphonic acid diethyl ester, 3-(2-methoxyethoxy)benzylphosphonic acid monoethyl ester, 3-(2-methoxyethoxy)benzylphosphonic acid, 4-(2-methoxyethoxy)benzylphosphonic acid diethyl ester, 4-(2-methoxyethoxy)benzylphosphonic acid monoethyl ester, 4-(2-methoxyethoxy)benzylphosphonic acid, 2,5-di(2-methoxyethoxy)benzylphosphonic acid diethyl ester, 2,5-di(2-methoxyethoxy)benzylphosphonic acid monoethyl ester, 2,5-di(2-methoxyethoxy)benzylphosphonic acid, 3,5-di(2-methoxyethoxy)benzylphosphonic acid diethyl ester, 3,5-di(2-methoxyethoxy)benzylphosphonic acid monoethyl ester, and 3,5-di(2-methoxyethoxy)benzylphosphonic acid.

Benzyl-containing phosphorus compounds of the invention are not limited to the above-exemplified compounds having a single substituent group and may include compounds having the above-mentioned substituent groups such as a hydroxyl, an alkyl, a carboxyl, a carboxylate ester, a 2-hydroxyethoxy, and a 2-methoxyethoxy group in combination.

Among the phosphorus compounds defined by the chemical formula (Formula 42) of the invention, those having naphthalene group as the substituent-containing aromatic ring structure are as follows. That is, examples may include, but not limited to, phosphonic acids into whose naphthalene ring an alkyl, a carboxyl, a carboxylate ester group, an alkylene glycol group, and a monoalkoxyalkylene glycol group are introduced, such as 1-(5-hydroxy)naphthylmethylphosphonic acid diethyl ester, 1-(5-hydroxy)naphthylmethylphosphonic acid monoethyl ester, 1-(5-hydroxy)naphthylmethylphosphonic acid, 1-(5-hydroxy)naphthylmethylphosphonic acid diethyl ester, 1-(5-hydroxy)naphthylmethylphosphonic acid monoethyl ester, 1-(5-hydroxy)naphthylmethylphosphonic acid, 1-(5-n-butyl)naphthylmethylphosphonic acid diethyl ester, 1-(5-n-butyl)naphthylmethylphosphonic acid monoethyl ester, 1-(5-n-butyl)naphthylmethylphosphonic acid, 1-(4-carboxy)naphthylmethylphosphonic acid diethyl ester, 1-(4-carboxy)naphthylmethylphosphonic acid monoethyl ester, 1-(4-carboxy)naphthylmethylphosphonic acid, 1-(4-methoxycarbonyl)naphthylmethylphosphonic acid diethyl ester, 1-(4-methoxycarbonyl)naphthylmethylphosphonic acid monoethyl ester, 1-(4-methoxycarbonyl)naphthylmethylphosphonic acid, 1-[4-(2-hydroxyethoxy)]naphthylmethylphosphonic acid diethyl ester, 1-[4-(2-hydroxyethoxy)]naphthylmethylphosphonic acid monoethyl ester, 1-[4-(2-hydroxyethoxy)]naphthylmethylphosphonic acid, 1-(4-methoxyethoxy)naphthylmethylphosphonic acid diethyl ester, 1-(4-methoxyethoxy)naphthylmethylphosphonic acid monoethyl ester, 1-(4-methoxyethoxy)naphthylmethylphosphonic acid, 1-(5-hydroxy)naphthylmethylphosphonic acid diethyl ester, 2-(6-hydroxy)naphthylmethylphosphonic acid diethyl ester, 2-(6-hydroxy)naphthylmethylphosphonic acid monoethyl ester, 2-(6-hydroxy)naphthylmethylphosphonic acid, 2-(6-n-butyl)naphthylmethylphosphonic acid diethyl ester, 2-(6-n-butyl)naphthylmethylphosphonic acid monoethyl ester, 2-(6-n-butyl)naphthylmethylphosphonic acid, 2-(6-carboxy) naphthylmethylphosphonic acid diethyl ester, 2-(6-carboxy)naphthylmethylphosphonic acid monoethyl ester, 2-(6-carboxy)naphthylmethylphosphonic acid, 2-(6-methoxycarbonyl)naphthylmethylphosphonic acid diethyl ester, 2-(6-methoxycarbonyl)naphthylmethylphosphonic acid monoethyl ester, 2-(6-methoxycarbonyl)naphthylmethylphosphonic acid, 2-[6-(2-hydroxyethoxy)]naphthylmethylphosphonic acid diethyl ester, 2-[6-(2-hydroxyethoxy)]naphthylmethylphosphonic acid monoethyl ester, 2-[6-(2-hydroxyethoxy)]naphthylmethylphosphonic acid, 2-(6-methoxyethoxy)naphthylmethylphosphonic acid diethyl ester, 2-(6-methoxyethoxy)naphthylmethylphosphonic acid monoethyl ester, and 2-(6-methoxyethoxy)naphthylmethylphosphonic acid.

Naphthalene-containing phosphorus compounds of the invention are not limited to the above-exemplified compounds having a single substituent group and may include compounds having the above-mentioned substituent groups such as a hydroxyl, an alkyl, a carboxyl, a carboxylate ester, a 2-hydroxyethoxy, and a 2-methoxyethoxy group in combination.

Among the phosphorus compounds defined by the chemical formula (Formula 42) of the invention, those having biphenyl group as the substituent-containing aromatic ring structure are as follows. That is, examples may include, but not limited to, phosphonic acids into whose biphenyl ring an alkyl, carboxyl, a carboxylate ester group, an alkylene glycol group, and a monomethoxyalkylene glycol group are introduced, such as 4-(4-hydroxyphenyl)benzylphosphonic acid diethyl ester, 4-(4-hydroxyphenyl)benzylphosphonic acid monoethyl ester, 4-(4-hydroxyphenyl)benzylphosphonic acid, 4-(4-n-butylphenyl)benzylphosphonic acid diethyl ester, 4-(4-n-butylphenyl)benzylphosphonic acid monoethyl ester, 4-(4-n-butylphenyl)benzylphosphonic acid, 4-(4-carboxyphenyl)benzylphosphonic acid diethyl ester, 4-(4-carboxyphenyl)benzylphosphonic acid monoethyl ester, 4-(4-carboxyphenyl)benzylphosphonic acid, 4-(4-methoxycarbonylphenyl)benzylphosphonic acid diethyl ester, 4-(4-methoxycarbonylphenyl)benzylphosphonic acid monoethyl ester, 4-(4-methoxycarbonylphenyl)benzylphosphonic acid, 4-(4-hydroxyethoxyphenyl)benzylphosphonic acid diethyl ester, 4-(4-hydroxyethoxyphenyl)benzylphosphonic acid monoethyl ester, 4-(4-hydroxyethoxyphenyl)benzylphosphonic acid, 4-(4-methoxyethoxyphenyl)benzylphosphonic acid diethyl ester, 4-(4-methoxyethoxyphenyl)benzylphosphonic acid monoethyl ester, and 4-(4-methoxyethoxyphenyl)benzylphosphonic acid.

Biphenyl-containing phosphorus compounds of the invention are not limited to the above-exemplified compounds having a single substituent group and may include compounds having the above-mentioned substituent groups such as a hydroxyl, an alkyl, a carboxyl, a carboxylate ester, a 2-hydroxyethoxy, and a 2-methoxyethoxy group in combination.

Among the phosphorus compounds defined by the chemical formula (Formula 42) of the invention, those having diphenyl ether group as the substituent-containing aromatic ring structure are as follows. That is, examples may include, but not limited to, phosphonic acids into whose diphenyl ether ring an alkyl, carboxyl, a carboxylate ester group, an alkylene glycol group, and a monomethoxyalkylene glycol group are introduced, such as 4-(4-hydroxyphenyloxy)benzylphosphonic acid diethyl ester, 4-(4-hydroxyphenyloxy)benzylphosphonic acid monoethyl ester, 4-(4-hydroxyphenyloxy)benzylphosphonic acid, 4-(4-n-butylphenyloxy)benzylphosphonic acid monoethyl ester, 4-(4-n-butylphenyloxy)benzylphosphonic acid monoethyl ester, 4-(4-n-butylphenyloxy)benzylphosphonic acid, 4-(4-carboxyphenyloxy)benzylphosphonic acid monoethyl ester, 4-(4-carboxyphenyloxy)benzylphosphonic acid monoethyl ester, 4-(4-carboxyphenyloxy)benzylphosphonic acid, 4-(4-methoxycarbonylphenyloxy)benzylphosphonic acid monoethyl ester, 4-(4-methoxycarbonylphenyloxy)benzylphosphonic acid monoethyl ester, 4-(4-methoxycarbonylphenyloxy)benzylphosphonic acid, 4-(4-hydroxyethoxyphenyloxy)benzylphosphonic acid monoethyl ester, 4-(4-hydroxymethoxyphenyloxy)benzylphosphonic acid monoethyl ester, 4-(4-hydroxymethoxyphenyloxy)benzylphosphonic acid, 4-(4-methoxyethoxyphenyloxy) benzylphosphonic acid monoethyl ester, 4-(4-methoxyethoxyphenyloxy)benzylphosphonic acid monoethyl ester, and 4-(4-methoxyethoxyphenyloxy)benzylphosphonic acid.

Diphenyl ether group-containing phosphorus compounds of the invention are not limited to the above-exemplified compounds having a single substituent group and may include compounds having the above-mentioned substituent groups such as a hydroxyl, an alkyl, a carboxyl, a carboxylate ester, a 2-hydroxyethoxy, and a 2-methoxyethoxy group in combination.

Among the phosphorus compounds defined by the chemical formula (Formula 42) of the invention, those having a diphenylthio ether group as the substituent-containing aromatic ring structure are as follows. That is, examples may include, but not limited to, phosphonic acids into whose diphenyl thioether ring an alkyl, carboxyl, a carboxylate ester group, an alkylene glycol group, and a monomethoxyalkylene glycol group are introduced, such as 4-(4-hydroxyphenylthio)benzylphosphonic acid diethyl ester, 4-(4-hydroxyphenylthio)benzylphosphonic acid monoethyl ester, 4-(4-hydroxyphenylthio)benzylphosphonic acid, 4-(4-n-butylphenylthio)benzylphosphonic acid monoethyl ester, 4-(4-n-butylphenylthio)benzylphosphonic acid monoethyl ester, 4-(4-n-butylphenylthio)benzylphosphonic acid, 4-(4-carboxyphenylthio)benzylphosphonic acid monoethyl ester, 4-(4-carboxyphenylthio)benzylphosphonic acid monoethyl ester, 4-(4-carboxyphenylthio)benzylphosphonic acid, 4-(4-methoxycarbonylphenylthio)benzylphosphonic acid monoethyl ester, 4-(4-methoxycarbonylphenylthio)benzylphosphonic acid monoethyl ester, 4-(4-methoxycarbonylphenylthio)benzylphosphonic acid, 4-(4-hydroxyethoxyphenylthio)benzylphosphonic acid monoethyl ester, 4-(4-hydroxymethoxyphenylthio)benzylphosphonic acid monoethyl ester, 4-(4-hydroxymethoxyphenylthio)benzylphosphonic acid, 4-(4-methoxyethoxyphenylthio)benzylphosphonic acid monoethyl ester, 4-(4-methoxyethoxyphenylthio)benzylphosphonic acid monoethyl ester, and 4-(4-methoxyethoxyphenylthio)benzylphosphonic acid.

Diphenyl thioether group-containing phosphorus compounds of the invention are not limited to the above-exemplified compounds having a single substituent group and may include compounds having the above-mentioned substituent groups such as a hydroxyl, an alkyl, a carboxyl, a carboxylate ester, a 2-hydroxyethoxy, and a 2-methoxyethoxy group in combination.

Among the phosphorus compounds defined by the chemical formula (Formula 42) of the invention, those having a diphenyl sulfone group as the substituent-containing aromatic ring structure are as follows. That is, examples may include, but not limited to, phosphonic acids into whose diphenyl sulphone ring an alkyl, carboxyl, a carboxylate ester group, an alkylene glycol group, and a monomethoxyalkylene glycol group are introduced, such as 4-(4-hydroxyphenylsulfonyl)benzylphosphonic acid diethyl ester, 4-(4-hydroxyphenylsulfonyl)benzylphosphonic acid monoethyl ester, 4-(4-hydroxyphenylsulfonyl)benzylphosphonic acid, 4-(4-n-butylphenylsulfonyl)benzylphosphonic acid monoethyl ester, 4-(4-n-butylphenylsulfonyl)benzylphosphonic acid monoethyl ester, 4-(4-n-butylphenylsulfonyl)benzylphosphonie acid, 4-(4-carboxyphenylsulfonyl)benzylphosphonic acid monoethyl ester, 4-(4-carboxyphenylsulfonyl)benzylphosphonic acid monoethyl ester, 4-(4-carboxyphenylsulfonyl)benzylphosphonic acid, 4-(4-methoxycarbonylphenylsulfonyl)benzylphosphonic acid monoethyl ester, 4-(4-methoxycarbonylphenylsulfonyl)benzylphosphonic acid monoethyl ester, 4-(4-methoxycarbonylphenylsulfonyl)benzylphosphonic acid, 4-(4-hydroxyethoxyphenylsulfonyl)benzylphosphonic acid monoethyl ester, 4-(4-hydroxymethoxyphenylsulfonyl)benzylphosphonic acid monoethyl ester, 4-(4-hydroxymethoxyphenylsulfonyl)benzylphosphonic acid, 4-(4-methoxyethoxyphenylsulfonyl)benzylphosphonic acid monoethyl ester, 4-(4-methoxyethoxyphenylsulfonyl)benzylphosphonic acid monoethyl ester, and 4-(4-methoxyethoxyphenylsulfonyl)benzylphosphonic acid.

Diphenyl sulfone group-containing phosphorus compounds of the invention are not limited to the above-exemplified compounds having a single substituent group and may include compounds having the above-mentioned substituent groups such as a hydroxyl, an alkyl, a carboxyl, a carboxylate ester, a 2-hydroxyethoxy, and a 2-methoxyethoxy group in combination.

Among the phosphorus compounds defined by the chemical formula (Formula 42) of the invention, those having a diphenylmethane group as the substituent-containing aromatic ring structure are as follows. That is, examples may include, but not limited to, phosphonic acids into whose diphenylmethane ring an alkyl, carboxyl, a carboxylate ester group, an alkylene glycol group, and a monomethoxyalkylene glycol group are introduced, such as 4-(4-hydroxybenzyl)benzylphosphonic acid diethyl ester, 4-(4-hydroxybenzyl)benzylphosphonic acid monoethyl ester, 4-(4-hydroxybenzyl)benzylphosphonic acid, 4-(4-n-butylbenzyl)benzylphosphonic acid monoethyl ester, 4-(4-n-butylbenzyl)benzylphosphonic acid monoethyl ester, 4-(4-n-butylbenzyl)benzylphosphonic acid, 4-(4-carboxybenzyl)benzylphosphonic acid monoethyl ester, 4-(4-carboxybenzyl)benzylphosphonic acid monoethyl ester, 4-(4-carboxybenzyl)benzylphosphonic acid, 4-(4-methoxycarbonylbenzyl)benzylphosphonic acid monoethyl ester, 4-(4-methoxycarbonylbenzyl)benzylphosphonic acid monoethyl ester, 4-(4-methoxycarbonylbenzyl)benzylphosphonic acid, 4-(4-hydroxyethoxybenzyl)benzylphosphonic acid monoethyl ester, 4-(4-hydroxymethoxybenzyl)benzylphosphonic acid monoethyl ester, 4-(4-hydroxymethoxybenzyl)benzylphosphonic acid, 4-(4-methoxyethoxybenzyl)benzylphosphonic acid monoethyl ester, 4-(4-methoxyethoxybenzyl)benzylphosphonic acid monoethyl ester, and 4-(4-methoxyethoxybenzyl)benzylphosphonic acid.

Diphenylmethane group-containing phosphorus compounds of the invention are not limited to the above-exemplified compounds having a single substituent group and may include compounds having the above-mentioned substituent groups such as a hydroxyl, an alkyl, a carboxyl, a carboxylate ester, a 2-hydroxyethoxy, and a 2-methoxyethoxy group in combination.

Among the phosphorus compounds defined by the chemical formula (Formula 42) of the invention, those having diphenyldimethylmethane group as the substituent-containing aromatic ring structure are as follows. That is, examples may include, but not limited to, phosphonic acids into whose diphenyldimethylmethane ring an alkyl, carboxyl, a carboxylate ester group, an alkylene glycol group, and a monomethoxyalkylene glycol group are introduced, such as 4-(4-hydroxyphenyldimethylmethyl)benzylphosphonic acid diethyl ester, 4-(4-hydroxyphenyldimethylmethyl)benzylphosphonic acid monoethyl ester, 4-(4-hydroxyphenyldimethylmethyl)benzylphosphonic acid, 4-(4-n-butylphenyldimethylmethyl)benzylphosphonic acid monoethyl ester, 4-(4-n-butylphenyldimethylmethyl)benzylphosphonic acid monoethyl ester, 4-(4-n-butylphenyldimethylmethyl)benzylphosphonic acid, 4-(4-carboxyphenyldimethylmethyl)benzylphosphonic acid monoethyl ester, 4-(4-carboxyphenyldimethylmethyl)benzylphosphonic acid monoethyl ester, 4-(4-carboxyphenyldimethylmethyl)benzylphosphonic acid, 4-(4-methoxycarbonylphenyldimethylmethyl)benzylphosphonic acid monoethyl ester, 4-(4-methoxycarbonylphenyldimethylmethyl)benzylphosphonic acid monoethyl ester, 4-(4-methoxycarbonylphenyldimethylmethyl)benzylphosphonic acid, 4-(4-hydroxyethoxyphenyldimethylmethyl)benzylphosphonic acid monoethyl ester, 4-(4-hydroxymethoxyphenyldimethylmethyl)benzylphosphonic acid monoethyl ester, 4-(4-hydroxyethoxyphenyldimethylmethyl)benzylphosphonic acid, 4-(4-methoxymethoxyphenyldimethylmethyl)benzylphosphonic acid diethyl ester, 4-(4-methoxyethoxyphenyldimethylmethyl)benzylphosphonic acid monoethyl ester, and 4-(4-methoxyethoxyphenyldimethylmethyl)benzylphosphonic acid.

Diphenyldimethylmethane group-containing phosphorus compounds of the invention are not limited to the above-exemplified compounds having a single substituent group and may include compounds having the above-mentioned substituent groups such as a hydroxyl, an alkyl, carboxyl, a carboxylate ester, a 2-hydroxyethoxy, and a 2-methoxyethoxy group in combination.

Among the phosphorus compounds defined by the chemical formula (Formula 42) of the invention, those having diphenyl ketone group as the substituent-containing aromatic ring structure are as follows. That is, examples may include, but not limited to, phosphonic acids into whose diphenyl ketone ring an alkyl, carboxyl, a carboxylate ester group, an alkylene glycol group, and a monomethoxyalkylene glycol group are introduced, such as 4-(4-hydroxybenzoyl)benzylphosphonic acid diethyl ester, 4-(4-hydroxybenzoyl)benzylphosphonic acid monoethyl ester, 4-(4-hydroxybenzoyl)benzylphosphonic acid, 4-(4-n-butylbenzoyl)benzylphosphonic acid monoethyl ester, 4-(4-n-butylbenzoyl)benzylphosphonic acid monoethyl ester, 4-(4-n-butylbenzoyl)benzylphosphonic acid, 4-(4-carboxybenzoyl)benzylphosphonic acid monoethyl ester, 4-(4-carboxybenzoyl)benzylphosphonic acid monoethyl ester, 4-(4-carboxybenzoyl)benzylphosphonic acid, 4-(4-methoxycarbonylbenzoyl)benzylphosphonic acid monoethyl ester, 4-(4-methoxycarbonylbenzoyl)benzylphosphonic acid monoethyl ester, 4-(4-methoxycarbonylbenzoyl)benzylphosphonic acid, 4-(4-hydroxyethoxybenzoyl)benzylphosphonic acid monoethyl ester, 4-(4-hydroxymethoxybenzoyl)benzylphosphonic acid monoethyl ester, 4-(4-hydroxymethoxybenzoyl)benzylphosphonic acid, 4-(4-methoxyethoxybenzoyl)benzylphosphonic acid monoethyl ester, 4-(4-methoxyethoxybenzoyl)benzylphosphonic acid monoethyl ester, and 4-(4-methoxyethoxybenzoyl)benzylphosphonic acid.

Diphenyl ketone group-containing phosphorus compounds of the invention are not limited to the above-exemplified compounds having a single substituent group and may include compounds having the above-mentioned substituent groups such as a hydroxyl, an alkyl, a carboxyl, a carboxylate ester, a 2-hydroxyethoxy, and a 2-methoxyethoxy group in combination.

Among the phosphorus compounds defined by the chemical formula (Formula 42) of the invention, those having anthracene group as the substituent-containing aromatic ring structure are as follows. That is, examples may include, but not limited to, phosphonic acids into whose anthracene ring an alkyl, carboxyl, a carboxylate ester group, an alkylene

glycol group, and a monomethoxyalkylene glycol group are introduced, such as 9-(10-hydroxy)anthrylmethylphosphonic acid diethyl ester, 9-(10-hydroxy)anthrylmethylphosphonic acid monoethyl ester, 9-(10-hydroxy)anthrylmethylphosphonic acid, 9-(10-n-butyl)anthrylmethylphosphonic acid diethyl ester, 9-(10-n-butyl)anthrylmethylphosphonic acid monoethyl ester, 9-(10-n-butyl)naphthylanthrylphosphonie acid, 9-(10-carboxy)anthrylmethylphosphonic acid diethyl ester, 9-(10-carboxy)anthrylmethylphosphonic acid monoethyl ester, 9-(10-carboxy)anthrylmethylphosphonic acid, 9-(2-hydroxyethoxy)anthrylmethylphosphonic acid diethyl ester, 9-(2-hydroxyethoxy)anthrylmethylphosphonic acid monoethyl ester, 9-(2-hydroxyethoxy)anthrylmethylphosphonic acid, 9-(2-methoxyethoxy)anthrylmethylphosphonic acid diethyl ester, 9-(2-methoxyethoxy)anthrylmethylphosphonic acid monoethyl ester, 9-(2-methoxyethoxy)anthrylmethylphosphonic acid, 9-(2-methoxycarbony)anthrylmethylphosphonic acid diethyl ester, 9-(2-methoxycarbony)anthrylmethylphosphonic acid monoethyl ester, and 9-(2-methoxycarbony)anthrylmethylphosphonic acid.

Anthracene group-containing phosphorus compounds of the invention are not limited to the above-exemplified compounds having a single substituent group and may include compounds having the above-mentioned substituent groups such as a hydroxyl, an alkyl, a carboxyl, a carboxylate ester, a 2-hydroxyethoxy, and a 2-methoxyethoxy group in combination.

Among the phosphorus compounds defined by the chemical formula (Formula 42) of the invention, those having phenanthrene group as the substituent-containing aromatic ring structure are as follows. That is, examples may include, but not limited to, phosphonic acids into whose phenanthrene ring an alkyl, carboxyl, a carboxylate ester group, an alkylene glycol group, and a monomethoxyalkylene glycol group are introduced, such as 1-(7-n-butyl)phenanthrylmethylphosphonic acid diethyl ester, 1-(7-n-butyl)phenanthrylmethylphosphonic acid monoethyl ester, 1-(7-n-butyl)phenanthrylmethylphosphonic acid, 1-(7-carboxy)phenanthrylmethylphosphonic acid diethyl ester, 1-(7-carboxy)phenanthrylmethylphosphonic acid monoethyl ester, 1-(7-carboxy)phenanthrylmethylp.hosphonic acid, 1-(7-hydroxyethoxy)phenanthrylmethylphosphonic acid diethyl ester, 1-(7-hydroxyethoxy)phenanthrylmethylphosphonic acid monoethyl ester, 1-(7-hydroxyethoxy)phenanthrylmethylphosphonic acid, 1-(7-methoxyethoxy)phenanthrylmethylphosphonic acid diethyl ester, 1-(7-methoxyethoxy)phenanthrylmethylphosphonic acid monoethyl ester, 1-(7-methoxyethoxy)phenanthrylmethylphosphonic acid, 1-(7-methoxycarbonyl)phenanthrylmethylphosphonic acid diethyl ester, 1-(7-methoxycarbonyl)phenanthrylmethylphosphonic acid monoethyl ester, and 1-(7-methoxycarbonyl)phenanthrylmethylphosphonic acid.

Phenanthryl group-containing phosphorus compounds of the invention are not limited to the above-exemplified compounds having a single substituent group and may include compounds having the above-mentioned substituent groups such as a hydroxyl, an alkyl, a carboxyl, a carboxylate ester, a 2-hydroxyethoxy, and a 2-methoxyethoxy group in combination.

Among the phosphorus compounds defined by the chemical formula (Formula 42) of the invention, those having a pyrene group as the substituent-containing aromatic ring structure are as follows. That is, examples may include, but not limited to, phosphonic acids into whose pyrene ring an alkyl, carboxyl, a carboxylate ester group, an alkylene glycol group, and a monomethoxyalkylene glycol group are introduced, such as 1-(5-hydroxy)pyrenylmethylphosphonic acid diethyl ester, 1-(5-hydroxy)pyrenylmethylphosphonic acid monoethyl ester, 1-(5-hydroxy)pyrenylmethylphosphonic acid, 1-(5-n-butyl)pyrenylmethylphosphonic acid diethyl ester, 1-(5-n-butyl)pyrenylmethylphosphonic acid monoethyl ester, 1-(5-n-butyl)naphthylmethylphosphonic acid, 1-(5-carboxy)pyrenylmethylphosphonic acid diethyl ester, 1-(5-carboxy)pyrenylmethylphosphonic acid monoethyl ester, 1-(5-carboxy)pyrenylmethylphosphonic acid, 1-(5-hydroxyethoxy)pyrenylmethylphosphonic acid diethyl ester, 1-(5-hydroxyethoxy)pyrenylmethylphosphonic acid monoethyl ester, 1-(5-hydroxyethoxy)pyrenylmethylphosphonic acid, 1-(5-methoxyethoxy)pyrenylmethylphosphonic acid diethyl ester, 1-(5-methoxyethoxy)pyrenylmethylphosphonic acid monoethyl ester, 1-(5-methoxyethoxy)pyrenylmethylphosphonic acid, 1-(5-methoxycarbonyl)pyrenylmethylphosphonic acid diethyl ester, 1-(5-methoxycarbonyl)pyrenylmethylphosphonic acid monoethyl ester, and 1-(5-methoxycarbonyl)pyrenylmethylphosphonic acid.

Pyrene group-containing phosphorus compounds of the invention are not limited to the above-exemplified compounds having a single substituent group and may include compounds having the above-mentioned substituent groups such as a hydroxyl, an alkyl, a carboxyl, a carboxylate ester, a 2-hydroxyethoxy, and a 2-methoxyethoxy group in combination.

The substituent groups such as a hydroxyl group, an alkyl, a carboxyl group, a carboxylate ester group, a 2-hydroxyethoxy group, and a 2-methoxyethoxy group to be introduced into the above-mentioned series of the aromatic rings are supposed to be deeply relevant to the formation of complexes with aluminum atoms at the time of polymerization of polyester. Further, these substituent groups include those similar to carboxyl or hydroxyl, which is a functional group, for polyester formation and are therefore easy to be dissolved or taken in polyester matrix and are supposed to be particularly effective for polymerization activity and decrease of insoluble particle.

As compared with the case that the group defined as $R^0$ bonded to the aromatic ring structure ($R^1$) denotes hydrogen atom, that is, the group is unsubstituted, the substituted phosphorus compounds having a C1-C10 alkyl, -COOH, -$COOR^4$ ($R^4$ denotes C1-C4 alkyl), an alkylene glycol, or a monoalkoxyalkylene glycol group (monoalkoxy is C1-C4 monoalkoxy and alkylene glycol is C1-C4 glycol group) as substituent groups are effective not only to improve the catalytic activity but also to decrease the insoluble particle and therefore they are preferable.

The substituent groups bonded to the aromatic ring structure may include a C1-C10 alkyl, a carboxyl, a carboxyl ester, an alkylene glycol, or a monoalkoxyalkylene glycol group. More preferable substituent groups in terms of decrease of the insoluble particle are a carboxyl, a carboxyl ester group, an alkylene glycol, and a monoalkoxyalkylene glycol. The reason for that is not particularly made clear, however it is supposed that the affinity of the polyester with the alkylene glycol, which is a medium of the catalyst, is improved.

Examples of the phosphonic acid type compounds having no bonding group (X) and defined by the following formulae (Formula 43) are the following.

(Formula 43) $R^1$-(P=O) ($OR^2$) ($OR^3$)

In the phosphorus compound defined by the above-mentioned chemical formula (Formula 43) having no bonding group (X), $R^1$ denotes an aromatic ring structure having 6 to 50 carbon atoms or a heterocyclic structure having 4 to 50 carbon atoms and the aromatic ring structure or the heterocyclic structure may have substituent groups. $R^2$ and $R^3$ independently denote a hydrogen atom, a hydrocarbon group having 1 to 20 carbon atoms, or a hydroxyl- or alkoxyl-containing hydrocarbon group having 1 to 20 carbon atoms. The hydrocarbon groups may have alicyclic structure, branched structure, or aromatic ring structure.

The substituent group of the aromatic ring structure or the heterocyclic structure of the phosphorus compound defined by the formula (Formula 43) may include one or more groups selected from a hydrocarbon group having 1 to 50 carbon atoms (including linear or alicyclic structure, branched structure, or aromatic ring structure and these structures may be halogen-substituted structures), a hydroxyl, a halogen, an alkoxyl having 1 to 10 carbon atoms, an amino (may have a substituent group of an alkyl having 1 to 10 carbon atoms or an alkanol group), a nitro group, a carboxyl group, an ester group of an aliphatic carboxylic acid having 1 to 10 carbon atoms, a formyl, acyl, sulfonic acid group, sulfonic acid amide (may have substituent group of an alkyl having 1 to 10 carbon atoms or an alkanol group), a phosphoryl-containing group, a nitryl, and a cyanoalkyl. The aromatic ring structure of the chemical formula (Formula 43) may be selected from benzene, naphthalene, biphenyl, diphenyl ether, diphenyl thio ether, diphenylsulfone, diphenylmethane, diphenyldimethylmethane, anthracene, phenanethrene, and pyrene. The heterocyclic structure may be selected from furan, benzofuran, isobenzofuran, dibenzofuran, naphthalane, and phthalide. At least one of $R^2$ and $R^3$ in the above-mentioned chemical formula (Formula 43) is preferably a hydrogen atom.

Examples of the phosphorus compounds defined by the above-mentioned chemical formula (Formula 43) to be used in the invention are as follows. That is, examples may include (3-nitro-5-methyl)-phenylphosphonic acid diethyl ester, (3-nitro-5-methyl)-phenylphosphonic acid monoethyl ester, (3-nitro-5-methyl)-phenylphosphonic acid, (3-nitro-5-methoxy)-phenylphosphonic acid diethyl ester, (3-nitro-5-methoxy)-phenylphosphonic acid monoethyl ester, (3-nitro-5-methoxy)-phenylphosphonic acid, 4-chloro-phenylphosphonic acid diethyl ester, 4-chloro-phenylphosphonic acid monoethyl ester, 4-chloro-phenylphosphonic acid, 5-chloro-phenylphosphonic acid diethyl ester, 5-chloro-phenylphosphonic acid monoethyl ester, 5-chloro-phenylphosphonic acid, (3-nitro-5-methyl)-phenylphosphonic acid diethyl ester, (3-nitro-5-methyl)-phenylphosphonic acid monoethyl ester, (3-nitro-5-methyl)-phenylphosphonic acid, 4-nitro-phenylphosphonic acid diethyl ester, 4-nitro-phenylphosphonic acid monoethyl ester, 4-nitro-phenylphosphonic acid, 5-nitro-phenylphosphonic acid diethyl ester, 5-nitro-phenylphosphonie acid monoethyl ester, 5-nitro-phenylphosphonic acid, 6-nitro-phenylphosphonic acid diethyl ester, 6-nitro-phenylphosphonic acid monoethyl ester, 6-nitro-phenylphosphonic acid, (4-nitro-6-methyl)-phenylphosphonic acid diethyl ester, (4-nitro-6-methyl)-phenylphosphonic acid monoethyl ester, (4-nitro-6-methyl)-phenylphosphonic acid, and in addition, phosphorus compounds derived from the above-exemplified phosphorus compound defined by the chemical formula (Formula 42) by removing methylene chain, $-CH_2-$, which is a bonding group, from the respective aromatic ring structures such as benzene, naphthalene, biphenyl, diphenyl ether, diphenyl thioether, diphenyl sulfone, diphenylmethane, diphenyldimethylmethane, diphenyl ketone, anthracene, phenanthrene, and pyrene in the respective structural formulae and may also include, as heterocyclic ring-containing phosphorus compounds, 5-benzofuranylphosphonic acid diethyl ester, 5-benzofuranylphosphonic acid monoethyl ester, 5-benzofuranylphosphonic acid, 5-(2-methyl)benzofuranylphosphonic acid diethyl ester, 5-(2-methyl)benzofuranylphosphonic acid monoethyl ester, and 5-(2-methyl)benzofuranylphosphonic acid. Although being inferior in the polymerization activity to the above-mentioned phosphorus compounds having the bonding group, these phosphorus compounds having no bonding group may be used as a polyester polymerization catalyst in the case of employing the catalytic production process of the invention.

Although phosphorus compounds have been known as a thermal stabilizer, it has not been known so far that use of these compounds in combination with a conventional metal-containing polyester polymerization catalyst can considerably promote melt polymerization. Actually, in the case of melt polymerization of polyester using an antimony compound, a titanium compound, a tin compound, or a germanium compound, which is a representative catalyst for polyester polymerization, as polymerization catalyst, even if the phosphorus compound of the invention is added, it is not confirmed that polymerization is promoted to the substantially applicable level.

In the invention, it is preferable to previously heating the above-mentioned phosphorus compound in at least

one solvent selected from water and alkylene glycols for use. The previous treatment improves the polycondensation catalytic activity in the case of using the above-mentioned phosphorus compound in combination with aluminum or the above-mentioned aluminum compound and at the same time suppresses formation of insoluble particle attributed to the polycondensation catalyst.

The solvent to be used at the time of previous heating the phosphorus compound is not particularly limited and optional if it is one kind solvent selected from water and alkylene glycols, however it is preferable to use a solvent in which the phosphorus compound is dissolved. Examples of the alkylene glycols to be used are preferably glycols which are constituent components of the aimed polyester, such as ethylene glycol. The heating treatment in the solvent is preferable to be carried out after the phosphorus compound is dissolved, however it is not necessary to completely dissolve the phosphorus compound. Further, after the heating treatment, the compound is not necessarily required to keep the structure the compound originally has and the phosphorus compound may be a compound whose solubility in the solvent is improved by deformation by heating treatment.

The temperature of the heating treatment is not particularly limited, however it is preferably from 20 to 250˚C and more preferably from 100 to 200˚C. The upper limit of the temperature is preferably near the boiling point of the solvent to be used. Although the heating time is different depending on the condition of the temperature, the heating time is preferably from 1 minute to 50 hours at a temperature around the boiling point of the solvent, more preferably from 30 minutes to 10 hours, and even preferably from 1 to 5 hours. The pressure of the system of the heating treatment is not particularly limited and may be more or less atomospheric pressure. The concentration of the solution is preferably 1 to 500 g/L on the basis of the phosphorus compound, more preferably 5 to 300 g/L, and even more preferably 10 to 100 g/L. The heating treatment is preferably carried out under atmosphere of an inert gas such as nitrogen. The storage temperature of the solution or the slurry after heating is not particularly limited, however it is preferably from 0˚C to 100˚C and more preferably from 20˚C to 60˚C. The solution is preferable to be stored under atmosphere of an inert gas such as nitrogen.

At the time of previously heating treatment of the phosphorus compound in the solvent, aluminum or its compound of the invention is allowed to coexist. Further, aluminum or its compound of the invention may be added in form of a powder, a solution, or a slurry to the phosphorus compound previously heated in the solvent. Further, the solution or the slurry after the addition may be heated. The solution or the slurry obtained by these steps can be used as the polycondensation catalyst of the invention. It is preferable to add after dispersing or dissolving in a solvent comprising 95 mass% or more of glycol component.

The use amount of the phosphorus compound of the invention is preferably 0.0001 to 0.1% by mole in the total number of moles of the entire constituent units of the carboxylic acid component of the polyester to be obtained and more preferably 0.005 to 0.05% by mole.

In the invention, if the above-mentioned aluminum or its compound is used in combination with the phosphorus compound, highly substantially applicable polycondensation catalyst activity can be exhibited; however it is further preferable to make at least one of alkali metal, alkaline earth metals, and their compounds in a small amount coexist as a second metal-containing component. Coexistence of such a second metal-containing component in the catalyst system gives a catalyst component capable of heightening the catalytic activity in addition to the effect of suppressing diethylene glycol formation and accordingly increasing a reaction speed and therefore is effective to improve the productivity.

A technology of obtaining a catalyst having sufficient catalytic activity by adding an alkali metal compound or an alkaline earth metal compound to an aluminum compound has been known. If such conventionally known catalyst is used, a polyester excellent in thermal stability can be obtained, however with respect to the conventional known catalyst using the alkali metal compound or the alkaline earth metal compound in combination, the addition amounts of them have to be high for obtaining practically applicable catalytic activity. In the case of using an alkali metal compound, polyester to be obtained is deteriorated in the resistance to hydrolysis and insoluble particles attributed to the alkali metal compound is increased, and therefore, yarn productivity and physical properties of yarn is decreased in the case the polyester is used for fibers or the film physical properties is decreased in the case the polyester is used for film. In the case an alkaline earth compound is used in combination, for obtaining practically applicable catalytic activity, it results in decrease of the thermal stability, considerable discoloration by heating, may increase of formation amount of insoluble particles, and deterioration of the resistance to hydrolysis of obtained polyester.

In the case an alkali metal, an alkaline earth metal, or their compound is added, the use amount M (% by mole) is preferably $1\times10^{-6}$ or higher and less than 0.1% by mole, more preferably $5\times10^{-6}$ to 0.05% by mole, furthermore preferably $1\times10^{-5}$ to 0.03% by mole, and even more preferably $1\times10^{-5}$ to 0.01% by mole of the moles of the total polycarboxylic acid units composing the polyester. Since the addition amount of the alkali metal and the alkaline earth metal is low, it is possible to increase the reaction rate without causing problems of decrease of thermal stability, formation of insoluble particles, discoloration, and deterioration of resistance to hydrolysis. If the use amount M of the alkali metal, alkaline earth metal and compounds thereof exceeds 0.1% by mole, there occur cases in which decrease of thermal stability, increase of formation of insoluble particles and discoloration, and deterioration of resistance to hydrolysis which cause problems in product processing. If M is less than $1\times10^{-6}$, the effect of the addition is not clear.

The alkali metal and alkaline earth metal composing the second metal-containing component to be preferably used in addition to aluminum or its compound are preferably at least one kind selected from Li, Na, K, Rb, Cs, Be, Mg, Ca, Sr, and Ba and it is more preferable to use at least one selected from Li, Na, Mg and their compounds among them. Examples of compounds of alkali metals and alkaline earth metals may include metal salts of acid, alkoxides such as methoxide, ethoxide, n-propoxide, iso-propoxide, n-butoxide, and tert-butoxide, chelate compounds such as acetylacetonate, and hydrides, oxides, and hydroxides. Acid which comprise metal salts of acid include; saturated aliphatic carboxylic acid such as formic acid, acetic acid, propionic acid, butyric acid, and oxalic acid; unsaturated aliphatic carboxylic acid such as acrylic acid and methacrylic acid; aromatic carboxylic acid such as benzoic acid; halogen-containing carboxylic acid such as trichloroacetic acid; hydroxycarboxylic acid such as lactic acid, citric acid, and salicylic acid; inorganic acid such as carbonic acid, sulfuric acid, nitric acid, phosphoric acid, phosphonic acid, hydrogen carbonate, hydrogen phosphate, hydrogen sulfide, sulfurous acid, thiosulfuric acid, hydrochloric acid, hydrobromic acid, chloric acid, and bromic acid; organic sulfonic acid such as 1-propanesulfonic acid, 1-pentanesulfonic acid, and naphthalenesulfonic acid; organic sulfuric acid such as laurylsulfuric acid.

In the case of using those having high alkalinity like hydroxides among the alkali metal, the alkaline earth metal, and their compounds, since they tend to be difficult to be dissolved in organic solvent, for example diols such as ethylene glycol or alcohols, they have to be added in form of aqueous solution to the polymerization system and it may possibly cause a problem in the polymerization process. Further, in the case of using those having high alkalinity like hydroxides, the polyester become susceptible to the side reaction such as hydrolysis in polymerization and the polymerized polyester tends to become easy to be discolored and the hydrolysis resistance also tends to be lowered. Accordingly, those which are preferable as alkali metals and their compounds, or alkaline earth metals and their compounds of the invention are saturated aliphatic carboxylic acid salts, unsaturated aliphatic carboxylic acid salts, aromatic carboxylic acid salts, halogen-containing carboxylic acid salts, hydroxycarboxylic acid salts, inorganic acid salts selected from salts of sulfuric acid, nitric acid, phosphoric acid, phosphonic acid, hydrogen phosphate, hydrogen sulfide, sulfurous acid, thiosulfuric acid, hydrochloric acid, hydrobromic acid, chloric acid, bromic acid salts; organic sulfonic acid salts, organic sulfates, chelate compounds, and oxides of the alkali metals or alkaline earth metals. In terms of handling easiness and availability of them, saturated aliphatic carboxylic acid salts of the alkali metals or alkaline earth metals, particularly acetic acid salts, are preferable to be used.

For polycondensation catalyst of the present inventions, co-presence of another polycondensation catalyst such as an antimony compound, a germanium compound, a titanium compound or the like to an extent that the addition of the component does not cause problems in the properties of the polyester, processibility and color tone of a product as described is effective to improve the productivity by shortening the polycondensation time and therefore it is preferable.

An antimony compound is preferable to be added in amount of 50 ppm or less on the basis of antimony atom in the polyester to be obtained by polymerization. The addition amount is more preferably 30 ppm or less. If the addition amount of antimony exceeds 50 ppm, metal antimony precipitation occurs to cause gray discoloration and insoluble particles formation in polyester and therefore, it is not preferable.

A germanium compound is preferable to be added in an amount of 20 ppm or lower on the basis of germanium atom in the polyester to be obtained by polymerization. The addition amount is more preferably 10 ppm or less. If the addition amount of germanium exceeds 20 ppm, it results in disadvantage in terms of cost and therefore, it is not preferable.

A titanium compound is preferable to be added in an amount of 5 ppm or less on the basis of titanium atom in the polyester to be obtained by polymerization. The addition amount is more preferably 3 ppm or less, and even more preferably 1 ppm or less. If the addition amount of titanium exceeds 5 ppm, discoloration of the polyester becomes noticeable and also thermal stability is considerably deteriorated and therefore, it is not preferable.

Antimony compounds usable in the present inventions are not particularly limited and preferable examples may include antimony trioxide, antimony pentoxide, antimony acetate, and antimony glycoxide and particularly antimony trioxide is preferable to be used. Usable germanium compounds are also not particularly limited and examples may include germanium dioxide and germanium tetrachloride and germanium dioxide is particularly preferable. Both crystalline and amorphous germanium dioxides are usable.

Titanium compounds usable in the present inventions are not particularly limited and examples may include tetra-n-propyl titanate, tetraisopropyl titanate, tetra-n-butyl titanate, tetraisobutyl titanate, tetra-tert-butyl titanate, tetracyclohexyl titanate, tetraphenyl titanate, tetrabenzyl titanate, lithium oxalate titanate, potassium oxalate titanate, ammonium oxalate titanate, titanium oxide, composite oxide of titanium with silicon, zirconium, alkali metals, and alkaline earth metals, orthoesters or condensed orthoesters of titanium, reaction products of titanium orthoesters or condensed orthoesters with hydroxycarboxylic acids, reaction products of titanium orthoesters or condensed orthoesters with hydroxycarboxylic acids and phosphorus compounds, and reaction products of titanium orthoesters or condensed orthoesters with polyhydric alcohols having at least two hydroxyl groups, 2-hydroxycarboxylic acids, and basic groups and preferable examples among them are composite oxides of titanium and silicon, composite oxides of titanium and magnesium, and reaction products of titanium orthoesters or condensed orthoesters with hydroxycarboxylic acids and phosphorus compounds.

Examples of tin compounds are dibutyltin oxide, methylphenyltin oxide, tetraethyltin, hexaethylditin oxide, triethyltin hydroxide, monobutylhydroxytin oxide, triisobutyltin acetate, diphenyltin dilaurate, monobutyltin trichloride, dibutyltin sulfide, dibutylhydroxytin oxide, methylstannoic oxide, and ethylstannoic oxide and monobutylhydroxytin oxide is particularly preferable to be used.

For the purpose of improving color tone, it is a preferable embodiment that a cobalt compound is added in an amount of less than 10 ppm on the basis of cobalt atom in the polyester of the present inventions. The addition amount is more preferably 5 ppm or less and even more preferably 3 ppm or less. Cobalt compounds to be used are not particularly limited and practical examples are cobalt acetate, cobalt nitrate, cobalt chloride, cobalt acetylacetonate, and cobalt naphthenate and their hydrates. Cobalt acetate tetrahydrate is particularly preferable among them.

To improve the color tone of the polyester of the invention, it is also preferable to use a color tone improver other than the cobalt compound. The color tone improver means a substance which can change the color tone by its addition. The color tone improver in the invention is not particularly limited, however inorganic and organic pigments, dyes, and fluorescent brighteners are preferable.

In the case of using a pigment or a dye, if its use amount is increased, there occurs a problem that brightness of the condensate polymer is consequently decreased. It leads to another problem that use of the polyester to be obtained cannot be allowed in many uses. Therefore the total use amount of a pigment and a dye is preferably 20 ppm or less in the polyester, more preferably 10 ppm or less, and even more preferably 5 ppm or less. To the above-mentioned extent, the coloration can be efficiently eliminated without decreasing the brightness of the condensate polymer.

Since the color tone is improved and the amount of a pigment or a dye to be used may be decreased if a fluorescent brightener is used alone or in combination with another color tone improver and therefore, it is preferable. Commonly used fluorescent brighteners may be used alone or two or more of them in combination. The addition amount is preferably 50 ppm or less to the polyester to be obtained and more preferably 5 to 25 ppm.

An inorganic pigment is not particularly limited if it can change the color tone and examples may include titanium dioxide, carbon black, iron black, nickel titanium yellow, yellow iron oxide, cadmium yellow, chrome yellow, chrome titanium yellow, zinc ferrite pigment, red iron oxide, cadmium red, molybdenum red, chromium oxide, spinel green, chrome orange, cadmium orange, ultramarine, prussian blue, and cobalt blue. Among them are chromium oxide, ultramarine, prussian blue, and cobalt blue preferable, and ultramarine and cobalt blue more preferable. These inorganic pigments may be used alone or two or more of them may be used in combination based on the necessity.

Organic pigments and dyes of the invention are not particularly limited if they can change color tone and examples may include those expressed by color indexes such as Pigment Red 5, 22, 23, 31, 38, 48:1, 48:2, 48:3, 48:4, 52, 53:1, 57:1, 122, 123, 144, 146, 151, 166, 170, 177, 178, 179, 187, 202, 207, 209, 213, 214, 220, 221, 247, 254, 255, 263, and 272; Pigment Orange 13, 16, 31, 36, 43, 61, 64and 71; Pigment Brown 23; Pigment Yellow 1, 3, 12, 13, 14, 17, 55, 73, 74, 81, 83, 93, 94, 95, 97, 109, 110, 128, 130, 133, 136, 138, 147, 150, 151, 154, 180, 181, 183, 190, 191, 191:1, and 199; Pigment Green 7 and 36; Pigment Blue 15, 15:1, 15:2, 15:3, 15:4, 15:6, 29, 60, 64, and 68; Pigment Violet 19, 23, 37, and 44; Solvent Red 52, 117, 135, 169, and 176; Disperse Red 5; Solvent Orange 63, 67, 68, 72, and 78; Solvent Yellow 98, 103, 105, 113, and 116; Disperse Yellow 54, 64, and 160; Solvent Green 3, 20, and 26; Solvent Blue 35, 45, 78, 90, 94, 95, 104, 122, and 132; and Solvent Violet 31. Further, examples may include other dyes/pigments of anthraquinone type, phthalocyanine type, quinacridone type, isoindolinone type, dioxazine type, quinophthalone type, perylene type, perinone type, benzimidazolone type, diarylide type, but type, indigo type, quinophthalone type, diketo-pyrrolo-pyrol type, and anthra-pyrrolidone type.

Preferable examples among them are Pigment Red 187 and 263; Pigment Blue 15:1, 15:3, 29, and 60; Pigment Violet 19; Solvent Red 135; Solvent Blue 45, 90, 104, and 122; and dyes/pigments of anthraquinone type and phthalocyanine type. Further, particularly preferable examples are dyes/pigments of anthraquinone type and phthalocyanine type.

Dyes/pigments to be selected are those which satisfy the following conditions. At first, pigments and dyes are non-extractive from polycondensed polymers to give the utmost safety. Further, they are stable to sunlight and temperature and humidity conditions in a wide range. Furthermore, they do not cause sublimation and hue alteration as a result of high temperature to which they are highly possibly exposed during the production of polyesters. Moreover, the pigments and dyes do not cause any bad effect on the physical properties of polyester polymers.

The pigments and dyes are not particularly limited if they are pigments and/or dyes satisfying these conditions and improving the color tone of polyesters, however color tone improving agents obtained by combining some of blue color 1,4-bis(2,6-dialkylanilino)anthraquinone compounds as a main component with red color anthraquinone and anthrapyridone(3H-dibenz[fi,j] isoquinoline-2,7-dione) compounds in accordance with the hue are exemplified in Japanese Patent Application National Publication No. 2000-511211 and they may be employed. These dyes have proper color properties, are stable to various environmental factors such as heat, light, and humidity, can be contained in the polyester polymer structures during the polycondensation, and solve many problems which conventionally known organic dyes encounter. Further, they are stable to UV rays, high temperature, glycolysis, and hydrolysis. The amounts of the blue components and the red components may be changed based on the necessity to draw efficient effects on polyesters

with different coloration degrees.

As fluorescent brighteners to be used in the invention, those which are commonly used may be used alone or in combination. For example, benzoxazoline type fluorescent brighteners, preferably UVITEX OB, UVITEX OB-P, and UVITEX OB-ONE manufactured by Ciba Specialty Chemicals Inc.; HOSTALUX KS manufactured by Clariant K.K.; and those disclosed in Japanese Patent Application Laid-Open (JP-A) No. 10-1563 are preferably usable.

In order to accomplish colorless hue, these color tone improving agents may be used while the types and the addition ratios are properly and arbitrarily combined. The addition timing of the color tone improving agents may be in any stages, on completion of the polycondensation, or during a period from the finishing of the polycondensation to molding. As an addition method, it is preferable to add the agent in form of a powder or add the agent by dissolution in one of monomers of polyesters if the addition is during the polycondensation. In the case after completion of the polycondensation, the agent may be added in form of a powder or as a master batch.

In the case there occurs a problem of dispersibility of the pigments or the like, it is sometimes preferable to use a dispersant based on the necessity. The dispersant is not particularly limited if it assists dispersion of the pigments and examples are N,N'-alkylenebis(fatty acid amide) such as, N,N'-ethylenebis(myristic acid amide), N,N'-ethylenebis (stearic acid amide), N,N'-ethylenebis(oleic acid amide), N,N'-methylenebis(myristic acid amide), N,N'-methylenebis (stearic acid amide), N,N'-methylenebis(oleic acid amide). Among them, N,N'-methylenebis(stearic acid amide) is preferable. Although it depends on the properties, the addition amount of the dispersant is 10 to 200% by mass, preferably 40 to 150% by mass to the pigment.

With respect to the polyester produced in the presence of the above-mentioned polycondensation catalyst in the invention, it is important for the polyester that the aluminum-containing insoluble particle in the polyester is in amount of 1000 ppm or less as quantified by the method disclosed later and contains an acid terminal group at a ratio of 10 to 50 eq/ton.

The aluminum-containing insoluble particle in the polyester is evaluated by the following method.

[Evaluation method of aluminum containing insoluble particle in polyesters]

Polyester pellets in an amount 30 g and a mixed solution of p-chlorophenol/tetrachloroethane (3/1: ratio by weight) in an amount of 300 ml are put in a round bottom flask equipped with a stirrer and the pellets are stirred and dissolved in the mixed solution at 100 to 105°C for 2 hours. The obtained solution is cooled to room temperature and the entire amount of the solution is filtered for separating insoluble particle by a membrane filter with diameter 47 mm/ hole diameter 1.0 μm and made of polytetrafluoroethylene (PTFE membrane filter, trade name:T100A047A, manufactured by Advantec) under pressure of 0.15 MPa. The effective filtration diameter is adjusted to be 37.5 mm. On completion of the filtration, the filter is successively washed with 300 ml of chloroform and then dried overnight at 30°C in reduced pressure. The filtration face of the membrane filter is analyzed by a scanning x-ray fluorescence spectrometer (ZSX 100e, Rh bulb 4.0 kW, manufactured by Rigaku Corporation.) for quantitative measurement of aluminum element amount. The quantitative measurement is carried out for the portion with a diameter of 30 mm in the center part of the membrane filter. A calibration curve for the x-ray fluorescence spectrometry is obtained by using polyethylene terephthalate resin whose aluminum element amount is known to show the apparent aluminum element amount by ppm. The measurement is carried out at 50 kV-70 mA x-ray output, using pentaerythritol as a spectroscopic crystal and PC (a proportional counter) as a detector, and measuring the Al-Kα beam intensity in condition of PHA (pulse-height analyzer) 100-300. The aluminum element amount in the PET resin for the calibration curve is measured by inductively coupled plasma atomic emission spectrometry.

The amount of the aluminum-containing insoluble particle in the polyester measured by the above-mentioned evaluation method is preferably 900 ppm or lower, more preferably 800 ppm or lower, and even more preferably 700 ppm or lower. In the case the amount of the aluminum-containing insoluble particle in the polyester exceeds 1000 ppm, the fine insoluble particle in the polyester becomes cause of deterioration of the transparency of a molded article in the case of molding the polyester into molded article such as film or bottle and therefore, it is not preferable. Further, the insoluble particle may lead to a problem of frequent clogging of filter at the time of filtration of the polyester in the polycondensation process or molding process.

The lower limit of the amount of the aluminum-containing insoluble particle in the polyester measured by the above-mentioned evaluation method is 50 ppm or higher. To suppress the amount of the aluminum-containing insoluble particle in the polyester, it is needed to thoroughly carry out purifying the aluminum compound to be used as a catalyst while disregarding the cost and to decrease the addition amount of the aluminum compound while scarifying the catalytic activity and accordingly it is not practical.

The amount of the aluminum-containing insoluble particle in the polyester measured by the above-mentioned evaluation method is only converted value and the content in the entire amount of the polyester subjected to the evaluation is extremely trace at ppb order. That the transparency of a molded article is worsened by the extremely trace of the insoluble particle is supposedly attributed to that voids are formed in the interfaces of the aluminum-containing insoluble

particle and the polyester by molding stress at the time of molding since the aluminum-containing insoluble particle in the polyester evaluated by the above-mentioned evaluation method has low affinity to the polyester and light scattering is caused by the voids to lower the transparency of the molded article.

It is also important for the polyester of the invention to have the above-mentioned characteristic and simultaneously satisfy that the acid terminal group of the polyester is at a ratio of 10 to 50 eq/ton, preferably 12 to 45 eq/ton, and more preferably 14 to 40 eq/ton.

If it is less than 10 eq/ton, even if the amount of the aluminum-containing insoluble particle in the polyester satisfies the above-mentioned range, the transparency of the molded article obtained by molding involving drawing does not become good and therefore, it is not preferable. Particularly, the following transparency does not become good. On the other hand, if it exceeds 50 eq/ton, the stability of the polyester such as hydrolysis resistant stability is lowered and therefore it is not preferable.

In the invention, the haze value of uniaxially drawn film evaluated by the following evaluation method is preferably 0.6% or lower.

[Haze value of uniaxially drawn film]

Polyester resin was dried at 130˚C for 12 hours in vacuum and processed by heat press method to obtain sheet of 1000±100 μm. The heat press temperature, pressure, and time were adjusted to be 320˚C, 100 kg/cm$^2$G, and 3 seconds, respectively. After press, the sheet was thrown into water and quenched. The obtained sheet was uniaxially drawn at 3.5 times as big by a batch type stretcher (FILM STRETCHER, manufactured by T. M. LONG CO., INC) to obtaine a uniaxially drawn film of 300 ± 20 μm. The drawing tempeature was controlled to be blow temperature 95˚C/plate temperature 100˚C. Further, the drawing speed was 15000%/min. The haze of the obtained uniaxially drawn film was measured according to JIS-K 7136 using a haze meter (300A, manufactured by Nippon Denshoku Kogyo Co., Ltd.). The measurement was repeated 5 times and the average value was calculated. The haze value was shown as a conversion value calculated by,assuming the film thickness to be 300 μm.

It is more preferably 0.5% or lower. If the haze value exceeds 0.6%, it is impossible to obtain a molded article such as film or bottle obtained by molding involving drawing which has highly advanced transparency and therefore it is not preferable. Particularly, in the case of obtaining biaxially drawn film, it causes effect of disappearance of extremely slight opaque impression observed by eye observation when a large number of films are laminated (50 sheets in the case of films with a thickness of 188 μm) in thickness of about 9.4 mm and the eye observation is carried out at 45 degree to the vertical direction under fluorescent lamp. The opaque impression is extremely slight optical characteristic difference and characteristic which cannot be discriminated on the basis of the conventionally known haze value. Accordingly, it is a characteristic nothing to do with the common optical uses, however for uses required to have highly advanced optical properties, it draws attention as characteristic value which possibly becomes issue. Hereinafter, this characteristic value is called as slightly opaque impression.

A method for adjusting the haze value of the uniaxially drawn film and the slightly opaque impression of the biaxially drawn film in the above-mentioned range is not particularly limited, however it can be accomplished by simultaneously satisfying that the amount of aluminum-containing insoluble particle in the polyester is 1000 ppm or less and that the acid terminal group of the polyester is 10 to 50 eq/ton.

Although the reason for the improvement of the above-mentioned optical characteristics by satisfying the above-mentioned characteristics is not clear, it is supposed the effect is caused since production of the aluminum containing insoluble particle or agglomerates thereof, which deteriorates the light transmittance, is suppressed and solubilization of the insoluble particle in the polyester is promoted by the acid terminal group of the polyester.

In the invention, it is important in the above-mentioned process for production of a polyester using a polyester polycondensation catalyst of the invention to use ethylene glycol solution of aluminum compound having 1.0 or higher as ratio of integration value of peaks appearing in a range of -14 to 30 ppm in $^{27}$Al-NMR spectrum quantified by the method disclosed later to integration value of standard peaks and satisfy the ratio of carboxyl terminal group to entire terminal groups of lower condensate products at the outlet of esterification reactor to be 35 to 49% by mole.

The NMR spectrum of the aluminum compound containing ethylene glycol solution is measured by the following method.

[Measurement method of NMR spectrum of aluminum compound containing ethylene glycol solution]

NMR spectrum of aluminum compound containing ethylene glycol solution is measured by the following method.
Sample: ethylene glycol solution of an aluminum compound (concentration: 2.65 g/l on the basis of aluminum element)
Apparatus: Fourier Transformation nuclear magnetic resonance apparatus (AVANCE 500, manufactured by BRUKER)
Measurement solution: obtained by adding 20 parts by volume of heavy hydrogenated dimethyl sulfoxide to 80 parts by volume of the above-mentioned sample

$^{27}Al$ resonance frequency: 130. 33 MHz
Flip angle of detection pulses: 90˚
Data intake time: 1.0 second
Delay time: 1.0 second
Proton decoupling: not performed
Number of integration times: 500 to 1000 times
Measurement temperature: room temperature
On the other hand, integrated peak value appearing in a range of -15 to 30 ppm of the ethylene glycol solution of an aluminum compound measured by the above-mentioned method is expressed as a ratio to the integrated peak value in the case of measurement using a heavy hydrogen solution containing 1.3 mmol/l of aluminum chloride hexahydrate ($AlCl_3.6H_2O$) as the standard, 1.0.
The integration value ratio of peaks is preferably 1.2 or higher, more preferably 1.3 or higher, and even more preferably 1.6 or higher. If the integration value ratio of peaks is less than 1.0, the amount of the aluminum containing insoluble particle in the polyester is increased and fails to satisfy 1000 ppm or lower and therefore it is not preferable.
The upper limit of the integration value ratio of peaks is 5.0 or lower. To control the integration value ratio of peaks beyond 5.0, it is needed to thoroughly carry out refining of the aluminum compound to be used as a catalyst while disregarding the cost and to adjust the temperature condition to be impractically moderate at the time of producing the solution of the aluminum compound and accordingly it is not practical.
The meaning of the integration value ratio of peaks in this invention is not yet make clear, but it is supposed that the ratio is an index relevant to the intensity of mutual action with the phosphorus compounds, alkaline earth metal compounds, zinc compounds, manganese compounds, and alkali metal compounds. That is, in the case the integration value ratio of peaks is low, since aluminum atoms are associated with one another in some cases through oxygen atoms, the aluminum-containing insoluble particle in the polyester is formed to narrow a margin of mutual action with other compounds. On the other hand, in the case the peak surface area is wide, aluminum atoms get away from formation of the aluminum-containing insoluble particle because of coordination with the solvent molecules and accordingly there is a wide margin of mutual action with other compounds.
However, if the intensity of mutual action of aluminum atoms with other compound is too high, they themselves form another complex and the complex sometimes becomes insoluble particle in the polyester and therefore it is not preferable.

A method for adjusting the integration value ratio of peaks to be 1.0 or higher is not particularly limited, however it is preferable to adjust temperature of the solution not to be higher than 110˚c in the case of producing the solution of the aluminum compound. It is more preferably 105˚C or lower and even preferably 100˚C or lower. As described above, the aluminum compound is preferable to be added to the reaction system in form of ethylene glycol solution finally. A preparation method of the ethylene glycol solution is neither limited, however it is preferably liquid replacement method involving once dissolving the aluminum compound in water, thereafter adding ethylene glycol to the obtained aqueous solution, and removing water by heating the obtained solution containing water/ethylene solvent mixture.
In this case, the solution production includes all of the steps of producing the solution from dissolution to liquid replacement. A method of decreasing the temperature in the liquid replacement is preferably carried out in reduced pressure to lower the temperature and simultaneously shorten the time. In consideration of the efficiency of the liquid replacement, it is preferable to carry out at 55 to 105˚C and more preferable at 60 to 100˚C.

For the method for adjusting the integration value ratio of peaks to be 1. 0 or higher, the quality of the aluminum compound to be used for dissolution is also important. A method of selecting those with low association degree is also efficient. A method for suppressing the association of the aluminum compound before dissolution is neither limited. For example, it is effective to add an additive which can suppress the association at the time of preparing the aluminum compound, lower the drying temperature at the time of taking out the aluminum compound in the preparation process, and lower the drying degree to obtain the product containing water in the drying step. Further, it is also preferable to obtain the aluminum compound in a solution state such as an aqueous solution without isolating the aluminum compound.

As selection criteria of the aluminum compound with low association degree, there are methods, for example, of specifying the insoluble matter amount in the case the aluminum compound is dissolved in water; of specifying the crystallinity of the aluminum compound; and of specifying crystal water amount of the aluminum compound. Further, it is also preferable to use an additive for improving the solubility of the aluminum compound in a solvent such as water and a compound for improving the stability of the aluminum compound to hydrolysis or the like in combination.

Hereinafter, methods for dissolving the aluminum compound will be exemplified.

(1) Preparation example of aqueous solution of basic aluminum acetate

Water is added to basic aluminum acetate and stirred at 50˚C or lower for 3 hours. The stirring time is more preferably 6 hours or longer. Thereafter, stirring is carried out at 60˚C or higher for several hours or longer. In this case, the temperature is preferably in a range of 60 to 100˚C. The stirring time is preferably 1 hour or longer. The concentration

of the aqueous solution is preferably 10 g/l to 30 g/l and particularly preferably 15 g/l to 20 g/l.

(2) Preparation example of ethylene glycol solution of basic aluminum acetate

Ethylene glycol is added to the above-mentioned aqueous solution. The addition amount of ethylene glycol to the amount of the aqueous solution by volume ratio is preferably 0.5 to 5 times as much and more preferably 1 to 3 times as much. The obtained solution is stirred at room temperature for several hours to obtain uniform water/ethylene glycol mixed solution. Thereafter, the solution is heated to remove water and consequently obtain ethylene glycol solution. The temperature is preferably 50˚C or higher and 110˚C or lower. It is more preferable to remove water by stirring at 55 to 105˚C for several hours. It is particularly preferable to carry out at 60 to 100˚C. The system is preferable to be under reduced pressure at the time of removal. Reduction of the pressure makes it possible to remove water more quickly at lower temperature. That is, removal is possible even at 80˚C under reduced pressure and the thermal hysteresis applied to the system can be lessened.

(3) Preparation example of ethylene glycol solution of basic aluminum lactate

An aqueous solution of aluminum lactate is prepared. The preparation may be carried out at room temperature or under heating condition, however it is preferably at room temperature. The concentration of the aqueous solution is preferably 20 g/l to 100 g/l and particularly preferably 50 to 80 g/l. Ethylene glycol is added to the aqueous solution. The addition amount of ethylene glycol to the amount of the aqueous solution by volume ratio is preferably 1 to 5 times as much and more preferably 2 to 3 times as much. The obtained solution is stirred at normal temperature to obtain a uniform water/ethylene glycol mixed solution and thereafter, the solution is heated to remove water and consequently obtain ethylene glycol solution. The temperature is preferably 50˚C or higher and 110˚C or lower. It is more preferable to remove water by stirring at 55 to 105˚C for several hours. It is particularly preferable to carry out at 60 to 100˚C. Same as that in the case of the basic aluminum acetate, the liquid replacement to the ethylene glycol solution is preferable to be carried out under reduced pressure.

In the invention, preferable embodiment is to remove the insoluble foreign matter such as contaminants existing in the solution by filtration, centrifugation, or ultra centrifugation of the aluminum compound solution obtained in the above-mentioned method.

In the invention, it is preferable to mix the aluminum compound and the phosphorus compound in a solution and add the mixture to the polycondensation reaction system. Accordingly, the polyester having the aluminum-containing insoluble particle in the polyester within the above-mentioned preferable range can be stably obtained. That is, regardless of the addition timing and the point of the polycondensation catalyst to the polyester production process and characteristics of polyester oligomers at the time of adding the polycondensation catalyst, it is made possible to adjust the aluminum-containing insoluble particle in the polyester within the preferable range. In this case, the phosphorus compound is preferable to contain hydroxyl group. Accordingly, the phosphorus compound is preferable to be a structural compound having at least one or more hydroxyl groups in one molecule. Among the above-mentioned phosphorus compounds, acid compounds and acid/ester mixed compounds of acids and esters can be exemplified. In the case of a completely esterified compound, which is obtained by esterifying all of the hydroxyl groups of a phosphorus compound, it is preferable to use a phosphorus compound obtained by previously treating a phosphorus compound with a hydrated solvent such as water and alkylene glycols and replacing some of ester bonds with hydroxyl groups by hydrolyzing the ester bonds. The conversion amount to the hydroxyl groups is not particularly limited, however since the insoluble particle in the polyester is extremely slight and the effect to decrease the insoluble particle in the polyester is caused with an extremely slight amount, the conversion amount may be effective even if several % by mole of the total ester bonds. Consequently, even if the conversion amount to the hydroxyl groups is an ester type phosphorus compound in which all hydroxyl groups are esterified is used, the effect can be caused by the hydroxyl groups formed at the time of mixing treatment with the aluminum compound solution and therefore, use of the ester type phosphorus compound is not excluded.

As described above, since use of the mixture heated in at least one solvent selected from a group consisting of water and alkylene glycols can efficiently cause the effect of the invention, it is a preferable embodiment, and the heating treatment also causes the effect of improving the polycondensation catalyst activity and therefore it is recommended as a particularly preferable embodiment.

The solvent to be used at the time of previous heating of the phosphorus compound is not particularly limited and optional if it is at least one selected from a group consisting of water and alkylene glycols and a solvent which dissolves the phosphorus compound is preferable. Ethylene glycol is preferable to be used as the alkylene glycols. Heating treatment in the solvent is preferable to be carried out after dissolution of the phosphorus compound, however it is not needed that the phosphorus compound is completely dissolved. Further, after the heating treatment, the compound is not required to keep the original structure but may be deformed by heating treatment to improve the solubility in the solvent.

The temperature of the heating treatment is not particularly limited; however it is preferably in a range of 20 to 250°C. It is more preferably in a range of 100 to 200°C. The upper limit of the temperature is preferable to close to the boiling point of the solvent to be used. Although differing in accordance with the conditions such as temperature, the heating time is preferably in a range of 1 minute to 50 hours, more preferably in a range of 30 minutes to 10 hours, and even more preferably in a range of 1 to 5 hours at a temperature close to the boiling point of the solvent. The pressure of the heating system may be normal pressure or higher or lower and is not particularly limited. The concentration of the solution is preferably 1 to 500 g/l, more preferably 5 to 300 g/l, and even more preferably 10 to 100 g/l of the phosphorus compound. The heating treatment is carried out preferably in atmosphere of an inert gas such as nitrogen. The preservation temperature of the solution or the slurry after heating is not particularly limited; however it is preferably in a range of 0°C to 100°C and more preferably in a range of 20°C to 60°C. The solution is preserved preferably in atmosphere of an inert gas such as nitrogen.

In the invention, the NMR spectrum peak of the phosphorus atom to which hydroxyl group is bonded in the above-mentioned mixed solution is preferable to be shifted to the higher magnetic field side and to become broader than the NMR spectrum peak of the phosphorus atom to which hydroxyl group is bonded in the solution containing the phosphorus compound alone before mixing. Further, the integration value of the NMR spectrum peak of the phosphorus atom to which hydroxyl group is bonded in the above-mentioned mixed solution is preferable to be 25% or higher to the integration value of the NMR spectrum peak of the phosphorus atom to which hydroxyl group is bonded in the solution containing the phosphorus compound alone before mixing; it is more preferably 30% or higher and even more preferably 35% or higher. If it is less than 25%, the effect of suppressing production of the insoluble particle in the polyester attributed to the aluminum polycondensation catalyst is lowered and the amount of the insoluble particle in the polyester is increased and in the case of molding the polyester into a molded article such as film or bottle, for example, the haze of the molded article is worsened and therefore, it is not preferable. Further, it also leads to an issue that clogging of filter frequently occurs at the time of filtration of the polyester in the polycondensation process and molding process. The solvent of the above-mentioned mixed solution preferably contains ethylene glycol in an amount of 90% by mole or more.

A method of mixing the ethylene glycol solution of the aluminum compound and the phosphorus compound solution is not particularly limited; however it is preferable to add the aluminum compound dropwise while the phosphorus compound solution is stirred. The conditions at the time of addition are not particularly limited. In the case of the phosphorus compound containing hydroxyl group, mixing at room temperature is preferable. On the other hand, in the case of the ester type phosphorus compound in which all of hydroxyl groups are esterified, since it is required to cause hydroxyl group formation, heating is needed. The temperature of the heating is not particularly limited; however it is preferably 50 to 200°C. The conditions of mixing are properly set in accordance with the structures of the phosphorus compound and the aluminum compound to be used. For setting of the conditions, it is preferable to set the mixing conditions in a manner of satisfying the above-mentioned factors by tracing the alteration of the NMR spectrum at the time both solutions are mixed. In the case of using the phosphorus compound having no hydroxyl group, it is preferable to use the phosphorus compound after heat treatment of the phosphorus compound alone in form of ethylene glycol solution for forming hydroxyl group before mixing the solution with the ethylene glycol solution of the aluminum compound. At the time of the pretreatment, small amount of water may be added to promote the hydroxyl group formation.

The mixing ratio of the aluminum compound and the phosphorus compound in the case of mixing the ethylene glycol solution of the aluminum compound and the phosphorus compound solution is preferable to control the mole ratio of aluminum atom and phosphorus atom to satisfy the following inequality (1).

$$0.5 \leq P/Al \text{ (by mole)} \leq 20 \quad (1)$$

In the case the ratio is out of the range defined by the inequality (1), the polycondensation catalyst activity is deteriorated and the effect of suppressing production of the insoluble particle in the polyester is lowered and therefore, it is not preferable. The P/Al (by mole) is preferably 0.8 to 10 and more preferably 1.0 to 5.

It is supposed that the phenomenon that the NMR spectrum peak of the phosphorus atom to which hydroxyl group is bonded is shifted to the higher magnetic field side by mixing the ethylene glycol solution of the aluminum compound with the phosphorus compound solution is caused by coordination of hydroxyl group of the phosphorus compound with aluminum atom in the aluminum compound to form a complex.

A method for preserving the above-mentioned mixed solution of the aluminum compound and phosphorus compound is not particularly limited; however to make a facility such as a tank for preservation no need, for example, it is preferable to mix them immediately before supply to the polyester production process. A mixing method is not particularly limited; however it may be extruding prescribed amounts of the respective solutions with quantitative pump and stirring the solutions with a stirring type mixer or by mixing in a pipe with a static mixer.

In the case of supplying after previous mixing, the mixed solution is preferable to be preserved at 10 to 45°C.

It is more preferably at 15 to 40°C. If the solution is preserved at higher temperature than the above-mentioned temperature range, the aluminum compound or the complex of the aluminum compound and phosphorus compound is gelled or if at lower temperature, phosphorus compound is precipitated and the fluidity of the mixed solution is lowered and it results in undesirable consequence such as inferior quantitative supply property of the solution to the polycondensation reaction system and therefore, it is not preferable. A preservation method is not particularly limited, however it may be a method involving once taking out a mixture obtained by mixing the ethylene glycol solution of the aluminum compound and the phosphorus compound ethylene glycol solution at a prescribed ratio while stirring for 30 minute, and preserving the mixture in a thermostat bath or a thermostat chamber kept in the above-mentioned preferable temperature range.

In the invention, the mechanism of decreasing the content of the insoluble particle in the polyester by satisfying the above-mentioned factors is not yet made clear; however it is supposed that the effect is caused because hydroxyl group of the phosphorus compound is coordinated with aluminum atom in the aluminum compound to form a complex of the aluminum compound and phosphorus compound and accordingly, formation of insoluble particle in the polyester attributed to the aluminum compound is suppressed.

A method for controlling another factor, that is, the acid terminal group of the polyester to be 10 to 50 eq/ton is not particularly limited. The above-mentioned range is a normal range for the polyester. However, since the polycondensation catalyst containing the aluminum compound and phosphorus compound to be used in the invention has significant effect of promoting esterification reaction as compared with conventionally known polycondensation catalysts, in the case of production in common conditions, polyester with acid terminal group at a ratio of 10 eq/ton or less can be obtained. Accordingly, as compared with conventional polycondensation catalysts, the polycondensation catalyst of the invention has a characteristic that a polyester excellent in stability such as hydrolysis resistant stability can be obtained. However, it is undesirable in terms of accomplishment of high transparency for a molded article such as film or hollow molded article, for which the important effect of the invention is caused, obtained by a molding method involving drawing and therefore, it is preferable to set conditions for obtaining the polyester having the above-mentioned acid terminal group. Hereinafter, preferable embodiments will be described, however the invention should not be limited to them.

The ratio of the carboxyl terminal group to the entire terminal groups of lower condensates at the outlet of an esterification reactor is preferably 35 to 49% by mole, more preferably 38 to 48% by mole, and even more preferably 41 to 47% by mole. Accordingly, the acid terminal group of the polyester can be adjusted to be 10 to 50 eq/ton. Further, if the ratio of the carboxyl terminal group to the entire terminal groups of lower condensates at the outlet of an esterification reactor is increased, the polycondensation catalyst activity can be expanded. Therefore, it leads to exhibition of the effect of increasing the productivity of the polycondensation.

Further, in the invention, a preferred embodiment is making at least one compound selected from a group consisting of alkaline earth metal compounds, zinc compounds, and manganese compounds coexist and carrying out the polycondensation at 280 to 300°C in the process for production of the above-mentioned polyester. Owing to that, it is made possible to stably obtain the polyester with the acid terminal group in the above-mentioned range. In these cases, since the acid terminal group of the polyester can be adjusted to be within the above-mentioned range even if the ratio of the carboxyl terminal group to the entire terminal groups of lower condensates at the outlet of an esterification reactor is lower than the above-mentioned range, the limit of the ratio of the carboxyl terminal group to the entire terminal groups of lower condensates at the outlet of an esterification reactor may be eliminated. In this case, in consideration of the polycondensation speed, the ratio of the carboxyl terminal group to the entire terminal groups of lower condensates at the outlet of esterification reactor is preferably in a range of 10 to 49% by mole.

The electrostatic pinning of the polyester can be improved by making alkaline earth metal compounds and zinc compounds among the above-mentioned metal compounds coexist. The electrostatic pinning of the polyester is the property necessary at the time of casting in the case of molding the polyester into film or sheet by melt extrusion method. That is, electrostatic adhesion method is known as follows: at the time of quenching film-like material which is melt-extruded out of extrusion cap by rotating cooling drum, electrostatic charge is deposited on the surface of the film-like material and the film-like material is closely attached to the surface of the cooling drum by static electricity. However, in this method, if the rotating speed of the cooling drum is increased to heighten the productivity, the adhesive force of the film-like material and the cooling drum is decreased and pinner bubbles owing to entrainment of gas between the film-like material and the cooling drum are formed to make the thickness uneven and the outer appearance inferior. The electrostatic pinning means, in this electrostatic adhesion method, is a characteristic obtained by reforming the polyester to give high electrostatic pinning force and giving a polyester resin from which a film product is produced with high thickness precision even if casting is carried out at high speed. Accordingly, the method also using alkaline earth metal compounds and zinc compound is preferable.

Among the above-mentioned metal compounds, the above-mentioned compounds regarding the alkaline earth metal compounds are preferable to be used.

The zinc compounds and manganese compounds are their saturated aliphatic carboxylic acid salts; unsaturated aliphatic carboxylic acid salts; aromatic carboxylates; halogen-containing carboxylic acid salts; hydroxycarboxylic acid salts; inorganic acid salts selected from sulfuric acid, nitric acid, phosphoric acid, phosphonic acid, hydrogenphosphate, hydrogen sulfide, sulfurous acid, thiosulfuric acid, hydrochloric acid, hydrobromic acid, chloric acid, and bromic acid; organic sulfonic acid salts; organic sulfuric acid salts; chelate compounds and oxides. In terms of the handling easiness and availability, saturated aliphatic carboxylic acid salts, particularly acetic acid salts, are preferable to be used among them.

The addition amount of the above-mentioned metal compounds may be properly selected in accordance with the required characteristics of the polyester, and for the respectively metal elements, the amount is preferable to be proper to adjust the remaining amount in the polyester in a range of 3 to 200 ppm. It is more preferably 5 to 160 ppm, furthermore preferably 10 to 120 ppm, and even more preferably 15 to 100 ppm. If the content of the metal element is lower than 3 ppm, acid terminal group of the polyester increase, and the electrostatic pinning is deteriorated because of the decrease of the suppressed specific resistance of the melt and therefore, it is not preferable. On the other hand, if it exceeds 200 ppm, the stability such as the heat stability of the polyester is lowered and the coloration of the polyester is increased and therefore, it is not preferable.

In the invention, use of an alkali metal compound as remaining amount of the metal element in a range of 0.5-20 ppm in the polyester in combination with the above-mentioned metal compounds can improve the electrostatic pinning of the polyester and it is a more preferable embodiment.

Since the alkaline earth metal compounds, zinc compounds, manganese compounds, and alkali metal compounds are scarcely scattered at the time of polyester polymerization (remaining ratio 80 to 100%), the addition amount is almost same as the remaining amount in the polyester and therefore, the range of the desirable remaining amount can be said to be the range of the desired addition amount.

Production of the polyester according to the invention can be carried out by a process involving conventionally known steps, except that the polyester polycondensation catalyst of the invention is used as the catalyst. For example, in the case of producing PET, it can be produced by a direct esterification method involving esterifying terephthalic acid and ethylene glycol and if necessary other co-polycondensation components by direct reaction and removing water and thereafter carrying out polycondensation in reduced pressure or an transesterification method involving ester-exchanging dimethyl terephthalate and ethylene glycol and if necessary other co-polycondensation components by reaction and removing methyl alcohol and thereafter carrying out polycondensation in reduced pressure. If necessary, to increase the intrinsic viscosity, solid phase polycondensation may be carried out. To promote crystallization before the solid phase polycondensation, the melt-polycondensed polyester is humidified and then thermally crystallized or steam is directly blown to polyester chips and then thermal crystallization may be carried out.

The above-mentioned melt polycondensation may be carried out by batch type reaction apparatus or continuous type reaction apparatus. In both of these methods, esterification reaction or the transesterification reaction may be carried out in one step or separately in multi steps. The melt polycondensation may also be carried out in one step or separately in multi steps. Similarly to the melt polycondensation, the solid phase polycondensation can be carried out using batch type reaction apparatus or continuous type reaction apparatus. The melt polycondensation reaction and the solid phase polycondensation reaction can be carried out continuously or separately.

The catalyst of the invention has catalytic activity not only in the polycondensation reaction but also esterification reaction and transesterification reaction. For example, in the case of polycondensation of a dicarboxylic acid alkyl ester such as dimethyl terephthalate and a glycol such as ethylene glycol by transesterification reaction, generally the reaction is carried out in the presence of the transesterification catalyst such as a titanium compound or a zinc compound, however in place of the catalyst, or in coexistence with the catalyst, the catalyst of the invention may be used. Further, the catalyst of the invention has the catalytic activity not only in the melt polycondensation but also in the solid phase polycondensation and solution polycondensation and the polyester can be produced by both methods.

The catalyst of the invention can be added to the reaction system in arbitrary stage of the polycondensation reaction, for example, before starting the esterification reaction or transesterification reaction, or in any stage during the reaction, or immediately before starting the polycondensation reaction, or during the reaction.

The process for production of the polyester of the invention is preferable to be carried out by a continuous polycondensation method. As compared with a batch type polycondensation method, the continuous polycondensation method is advantageous in the evenness of the quality and in economy. The number and the sizes of reactors for esterification, transesterification, and polycondensation steps and process conditions of the respective steps are not limited and properly selected. As described, the direct esterification method is advantageous in terms of the economy and therefore preferable.

A process for production by the direct esterification method will be exemplified.

A slurry containing 1.02 to 2.5 mole, preferably 1.03 to 2.4 mole, of ethylene glycol to 1 mole of terephthalic acid is prepared and the slurry is continuously supplied to esterification reaction step.

The esterification reaction is carried out using a multi-step apparatus comprising 1 to 3 esterification reactors joined in series while water produced by the reaction is removed outside of the system in a refining tower. The temperature of the first step esterification is 240 to 270˚C and preferably 245 to 265˚C, and the pressure is normal pressure to 0.29 MPa and preferably 0.005 to 0.19 MPa. The temperature of the esterification in the final step is generally 250 to 290˚C and preferably 255 to 275˚C, and the pressure is normally 0 to 0.15 MPa and preferably 0 to 0.13 MPa. In the case of

execution in three or more steps, the reaction conditions of the esterification reaction in the middle steps are between the above-mentioned reaction conditions of the first step and reaction conditions of the final step. The reaction ratio increase of the esterification in these steps is preferable to be smoothly distributed in the respective steps. The esterification reaction ratio is desirable to be finally 90% or higher and preferably 93% or higher. Lower condensates with a molecular weight of about 500 to 2000 are obtained by these esterification reactions and they are successively transported to a polycondensation reactor and polycondensed. The number of the reactors in the polycondensation step is not limited. Generally, a three-step manner (an initial polycondensation, a middle polycondensation, and a late polycondensation) is employed. With respect to the polycondensation reaction conditions, the reaction temperature is 250 to 290˚C and preferably 260 to 280˚C, and the pressure is normally 0.065 to 0. 0026 MPa and preferably 200 to 30 Torr in the polycondensation in the first step and the reaction temperature is 265 to 300˚C and preferably 270 to 290˚C, and the pressure is normally 0.0013 to 0.000013 MPa and preferably 0.00065 to 0.000065 MPa in the polycondensation in the final step. In the case of execution in three or more steps, the reaction conditions of the polycondensation reaction in the middle steps are between the above-mentioned reaction conditions of the first step and reaction conditions of the final step. The intrinsic viscosity increase achieved in these respective polycondensation steps is preferable to be smoothly distributed.

It is neither limited to promote polycondensation for the polyester, which is obtained in the process of the invention, as described above by heating the polyester resin in solid phase state under reduced pressure or inert gas flow or to carry out means of removing byproducts, e.g. oligomers such as cyclic trimers and acetaldehyde contained in the polyester resin. Further, the process may include refining of the polyester resin by extraction method such as supercritical extraction method to remove impurities such as byproducts.

The polyester of the invention may contain any other polycondensate, a static controller, a defoaming agent, a dyeing property improver, a dye, a pigment, a delustering agent, a fluorescent brightener, a stabilizer, an antioxidant, and other additives. Examples usable as the antioxidant are aromatic amine type and phenol type antioxidants and examples usable as the stabilizer are phosphorus type such as phosphoric acid and phosphoric acid ester types, sulfur type, and amine type stabilizers.

These additives may be added in any arbitrary step, e.g. during or after the polycondensation of the polyester and polyester molding steps and which step is proper may be properly selected in accordance with the structure of the aimed polyester and the required properties of the polyester to be obtained.

The polyester obtained by this invention is usable for producing fibers by common melt spinning method and methods carrying out spinning and drawing in two steps and in one step can be employed. Further, staple production methods involving curling, heat set treatment, and cutting treatment and conventionally known fiber production methods for monofilaments can all be employed.

The fibers to be obtained may have various fiber structures such as yarns with modified cross sections, hollow cross sections, composite fibers, and originally dyed yarns and in yarning, conventional known techniques such as combining and blending fibers can be employed.

The above-mentioned polyester fibers may be formed into fiber structure bodies such as woven fabrics and nonwoven fabrics.

The above-mentioned polyester fibers may be used as industrial fiber materials represented by fibers for clothing; fibers for interiors and bedding such as curtains, carpets, cotton for mats, and fiber fill; tensile strength wires such as tire cords and ropes; and civil engineering and construction materials and vehicular materials such as air bags; and also as various kinds of fibers for various woven fabrics, various knitted products, nets, short fiber nonwoven fabrics, long fiber nonwoven fabrics and the like.

The polyester of the invention can be used for hollow molded articles.

Examples of the hollow molded articles are beverage containers for mineral water, juice, wine, and whisky; containers such as feeding bottles, food bottling containers, containers of hair care products and cosmetic products; and containers for cleaners and dish washing detergents.

The polyester is particularly suitable for pressure-resistant containers, heat-resistant and pressure-resistant containers, and alcohol-resistant containers for various kinds of beverages based on the properties of the polyester such as hygiene, strength, and solvent resistance. A method for producing hollow molded articles may involve the following steps: drying polyester chips obtained by melt polycondensation or solid-phase polycondensation by vacuum dying method and molding the dried chips by a molding apparatus such as an extrusion molding apparatus or an injection molding apparatus, or introducing polyester melt in melted state after melt polycondensation into a molding apparatus and molding polyester melt by direct molding to obtain a preliminarily molded article having a bottom. Successively, the preliminarily molded article is molded by blow molding such as stretch blow molding, direct blow molding, or extrusion blow molding to obtain a final hollow container. Also, a final hollow molded article may be formed from molded article produced by above mentioned extrusion molding apparatus or injection molding apparatus.

In the case of producing such hollow molded articles, the waste resin generated in the production steps and polyester resins recovered from markets may be added. Even in the case of such recycled resin, the polyester resin of

the invention gives hollow molded products which are scarcely deteriorated and has a high quality.

Further, such containers may have multilayer structures having, as an intermediate layer, a gas barrier resin layer such as polyvinyl alcohol and poly(m-xylylenediamine adipate), a light-blocking resin layer and a recycled polyester layer. Further, it is also possible to coat the inside and outside of a container with a metal such as aluminum or a diamond-like carbon layer by evaporation or CVD (chemical vapor deposition).

To heighten the crystallinity of the mouth parts of the hollow molded articles, another resin, e.g. polyethylene, and an inorganic nucleating agent such as talc may be added.

Further, the polyester of the invention can be extruded into sheet-like materials by an extruder to obtain sheets. Such sheets can be processed by vacuum molding, pressure molding, or stamping to obtain trays and containers of food and goods, caps, blister packs, carrier tapes for electronic parts, and trays for electronic part distribution. Also, the sheets can be used for various cards.

In the case of these sheets, the sheets may have the above-mentioned multilayer structure having, as an intermediate layer, a gas barrier resin layer, a light-blocking resin layer, and a recycled polyester layer.

Further, similarly the recycled resin can be mixed. In order to obtain a heat-resistant crystalline container, another resin, e.g. polyethylene, and an inorganic nucleating agent such as talc may be added to increase the crystallinity.

The polyester obtained in the invention can be used in form of film. The method involves melt extruding the polyester to form sheet-like form on a cooling rotating roll from T-dice and produce un-drawn sheet. In this case, the technology disclosed in Japanese Patent Application Publication (JP-B) Nos. 6-39521 and 6-45175 may be employed to make high speed film formation possible. Further, a plurality of extruders may be used to allot the respective functions of forming core layer and skin layer and obtain laminate films by co-extrusion method.

The polyester obtained in the invention can be used for drawn polyester film. The drawn polyester film can be obtained by drawing the polyester at a temperature equal to or higher than the glass transition temperature and lower than the crystallization temperature and 1.1 to 6 times in at least uniaxial direction by employing a conventional method.

For example, in the case of producing a biaxially drawn polyester film, the following methods can be employed: that is, a successive diaxial drawing method for carrying out uniaxial drawing in the vertical or transverse direction and successive drawing in the rectangular direction; a simultaneous biaxial drawing method for carrying out drawing simultaneously in the vertical and the transverse directions; a method of using a linear motor as a driving method at the time of carrying out simultaneous biaxial drawing; and a multi-step drawing method involving drawing several times in one direction such as a transverse-vertical-vertical drawing method, a vertical-transverse-vertical drawing method, and a vertical-vertical-transverse drawing method.

On completion of the drawing, to suppress thermal shrinkage ratio of the film, it is preferable to carry out heat fixation treatment at a temperature from (melting point - 50˚C) to lower than the melting point for 30 seconds, more preferable for 10 seconds, for 0.5 to 10% vertical relieving treatment and transverse relieving treatment.

The thickness of the obtained drawn polyester film is preferably 1 μm or thicker and 1000 μm or thinner, more preferably 5 μm or thicker and 500 μm or thinner, and even more preferably 10 μm or thicker and 200 μm or thinner. If it is thinner than 1 μm, the film is a lack of rigidity and difficult to handle. If it is thicker than 1000 μm, the film becomes so hard to make handling difficult.

To provide various kinds of functions such as adhesion, die-releasing property, anti-electrostatic property, infrared ray absorption, anti-bacterial property, and scratching resistance, the surface of the drawn polyester film may be coated with a polymer resin by coating method. Further, inorganic and/or organic particles may be added only to the layer to be coated for obtaining a slippery highly transparent polyester film. Further, various kinds of barrier functions of oxygen, water, and oligomers may be added by forming an inorganic layer by evaporation or conductivity may be provided by forming a conductive layer by a sputtering method or the like. Further, to improve the handling properties such as slipping property, running mobility, wear resistance, and rolling property of the drawn polyester film, the film surface may be made uneven by adding inorganic or organic salt particles or heat resistant polymer resin particles in the polycondensation process of the polyester. These particles may or may not be subjected to inorganic or organic or hydrophilic or hydrophobic surface treatment, however there are cases preferable to use the surface treated particles in order to improve, for example, dispersibility.

Examples of the inorganic particles are calcium carbonate, kaolin, talc, magnesium carbonate, barium carbonate, calcium sulfate, barium sulfate, lithium phosphate, calcium phosphate, magnesium phosphate, aluminum oxide, silicon oxide, titanium oxide, zirconium oxide, lithium fluoride, and sodium calcium aluminosilicate.

Examples of the organic salt particles are calcium oxalate and terephthalic acid salts of calcium, barium, zinc, manganese, and magnesium.

Examples of crosslinked polymer particles are divinylbenzene, styrene, acrylic acid, methacrylic acid, and homopolymer or condensate copolymers of vinyl type monomers such as acrylic acid and methacrylic acid. Additionally, organic particles of polytetrafluoroethylene, benzoguanamine resin, thermosetting epoxy resin, unsaturated polyester resin, thermosetting urea resin, and thermosetting phenol resin.

A method for adding the above-mentioned inactive particles to the polyester to be a substrate film is not

particularly limited and examples of the method are as follows: (a) a method involving dispersing the inactive particles in a diol which is a polyester constituent component in slurry state and adding the inactive particle slurry to the polycondensation reaction system of the polyester; (b) a method involving adding the water slurry in which inactive particles are dispersed to melted polyester resin by a bent type biaxial extrusion apparatus in the melt extrusion process of the polyester film; (c) a method involving kneading the polyester resin and inactive particles in melted state; and (d) a method involving the polyester resin and a master resin of the inactive particles in melted state.

In the case of the method of adding to the polycondensation reaction system, it is preferable to add a diol slurry of the inactive particles to the reaction system with low melt viscosity from the beginning of esterification reaction or transesterification reaction to the beginning of the polycondensation reaction. Further, at the time of adjusting the diol slurry of the inactive particles, it is preferable to carry out physical dispersion treatment by using a high pressure dispersion apparatus, a bead mill, or ultrasonic dispersion. Further, to stabilize the dispersed slurry, it is also preferable to carry out proper chemical dispersion stabilization treatment in accordance with the type of the particles to be used.

In the case of using inorganic oxide particles or crosslinked polymer particles having carboxyl group on the surfaces, the dispersion stabilization treatment may be carried out by adding an alkali compound such as sodium hydroxide, potassium hydroxide, and lithium hydroxide to the slurry and accordingly suppressing re-agglomeration of the particles due to the electric repulsion. Further, in the case of calcium carbonate particles and hydroxyapatite particles, it is preferable to add sodium tripolyphosphate or potassium tripolyphosphate to the slurry.

At the time of adding a diol slurry of the inactive particles to the polycondensation reaction system for the polyester, heat treatment of the slurry to a temperature near the boiling point of the diol is also preferable in terms of the dispersibility of the particles since the heat shock (the temperature difference of the slurry and the polycondensation reaction system) can be lessened at the moment of the addition.

These additives may be added in any optional step, e.g. at the time of polycondensation of the polyester or after the polycondensation or after film formation of the polyester film and which step is proper may differ in accordance with the properties of the compounds and the properties required for the polyester film.

Further, since the polyester of the invention is excellent in the thermal stability, at the time of producing a film using the polyester, the ear parts produced in the drawing step and nonstandard films can be reusable.

The drawn polyester film of the invention can be used preferably for antistatic films, easily adhesive films, cards, dummy cans, agriculture uses, construction materials, decorative materials, wall paper, OHP films, printing, ink-jet recording, sublimation transfer recording, recording by laser beam printers, electrophotographic recording, thermal transfer recording, heat sensitive transfer recording, printed substrate wiring, membrane switches, plasma displays, touch panels, masking films, photographic master plates, Roentgen films, photographic negative films, phase difference films, polarization films, polarization film protection (TAC), protect films, photosensitive resin films, visible field magnification films, diffusion sheets, reflection films, reflection prevention films, conductive films, separators, ultraviolet blocking films, and back-ground tapes.

For an antistatic film, techniques disclosed in, for example, Japanese patent No. 2952677 and JP-A No. 6-184337 may be employed. For an easily adhesive film, techniques disclosed in, for example, JP-B No. 07-108563 and JP-A Nos. 10-235820 and 11-323271 may be employed and for a card, techniques disclosed in JP-A Nos. 10-171956 and 11-010815 may be employed for the film of the invention. For a dummy can, those obtained by printing designs on the film of the invention and forming the film into cylinders or half-cylinder shapes may be employed in place of the sheet-like cylinders described in JP-A No. 10-101103. For construction materials, decorative boards for construction, and decorative materials, the film of the invention may be employed as substrate sheets disclosed in JP-A No. 05-200927 and as transparent sheets disclosed in JP-A No. 07-314630. For OHP (overhead projector), the film of the invention may be employed as transparent resin sheets disclosed in JP-A No. 06-297831 and as transparent high molecular weight synthetic resin films disclosed in JP-A No. 08-305065. For ink jet recording, the film of the invention can be used as the transparent substrates disclosed in, for example, JP-A No. 05-032037. For sublimation transfer recording, the film of the invention can be used as the transparent films disclosed in, for example, JP-A No. 2000-025349. For laser beam printer and electrophotographic recording, the film of the invention can be used as the plastic films disclosed in, for example, JP-A No. 05-088400. For thermal transfer recording, the film of the invention can be used by a method disclosed in, for example, JP-A No. 07-032754 and for heat sensitive recording, by a method disclosed in, for example, JP-A No. 11-034503. For printed substrates, the film of the invention can be used as the polyester films disclosed in, for example, JP-A No. 06-326453. For membrane switches, the film of the invention can be used by a method disclosed in, for example, JP-A No. 05-234459. For optical filters (heat beam filters and for plasma displays), the film of the invention can be used by a method disclosed in, for example, JP-A No: 11-231126. For transparent conductive films and touch panels, the film of the invention can be used as disclosed in, for example, JP-A No. 11-224539. For masking films, the film of the invention can be used as disclosed in, for example, JP-A No. 05-273737. For photographic plate making, the film of the invention can be used by a method disclosed in, for example, JP-A No. 05-057844. For photographic negative films, the film of the invention can be used as the polyethylene terephthalate film disclosed in, for example, the paragraph (0123) of JP-A No. 06-1677-68. For phase difference films, the film of the invention can be used as films disclosed in,

for example, JP-A No. 2000-162419. For separators, the film of the invention can be used as films disclosed in, for example, paragraph (0012) of JP-A No. 11-209711. For ultraviolet prevention, the film of the invention can be used as polyester films disclosed in, for example, JP-A No. 10-329291. For films for agriculture, the film of the invention can be applied for polyethylene terephthalate films disclosed in JP-A No. 10-166534. For adhesive sheets, the drawn polyester film of the invention can be applied for polyethylene terephthalate films disclosed in JP-A No. 06-122856.

Examples

Hereinafter, the invention will be described with reference to Examples; however the invention should not be limited to these Examples. Evaluations were carried out by the following methods.

1. Measurement of NMR spectrum of ethylene glycol solution of aluminum compound

The NMR spectrum of ethylene glycol solution of an aluminum compound was measured by the following method. Sample: ethylene glycol solution of an aluminum compound (concentration: 2.65 g/l on the basis of aluminum element) Apparatus: Fourier Transformation nuclear magnetic resonance apparatus (AVANCE 500, manufactured by BRUKER) Measurement solution: obtained by adding 20 parts by volume of heavy hydrogenated dimethyl sulfoxide to 80 parts by volume of the above-mentioned sample
$^{27}Al$ resonance frequency: 130.33 MHz
Flip angle of detection pulses: 90˚
Data intake time: 1.0 second
Delay time: 1.0 second
Proton decoupling: not performed
Number of integration times: 500 to 1000 times
Measurement temperature: room temperature
On the other hand, integrated peak value appearing in a range of -15 to 30 ppm of the ethylene glycol solution of aluminum compound measured by the above-mentioned method is expressed as a ratio to the integrated peak value in the case of measurement using deuterium oxide solution containing 1.3 mmol/l of aluminum chloride hexahydrate ($AlCl_3.6H_2O$) as the standard, 1.0.

2. Measurement of NMR spectrum of mixed solution of aluminum compound and phosphorus compound

Apparatus: Fourier Transformation nuclear magnetic resonance apparatus (AVANCE 500, manufactured by BRUKER) Measurement solution: obtained by adding 20 parts by volume of heavy hydrogenated dimethyl sulfoxide to 80 parts by volume of the sample
$^{31}P$ resonance frequency: 202.47 MHz
Flip angle of detection pulses: 45˚
Data intake time: 2.0 seconds
Delay time: 0.5 seconds
Proton decoupling: proton complete decoupling
Number of integration times: 2000 to 10000 times
Measurement temperature: room temperature

3. Measurement of acid value ($AV_0$) of lower condensate (oligomer)

Without being dried, oligomers were pulverized by a handy mill (a crusher). At first, 1.00 g of sample was precisely weighed and mixed with 20 ml of pyridine. Several particles of zeolite were added, the sample was boiled and refluxed for 15 minutes for dissolution. Immediately after boiling and refluxing, 10 ml of pure water was added and spontaneously cooled to room temperature. Titration was carried out by N/10-NaOH solution using phenolphthalein as indicator. The same process was carried out without using the sample for blank. In the case the oligomers were not dissolved in pyridine, dissolution was carried out in benzyl alcohol. The $AV_0$ (eq/ton) was calculated according to the following equation.

$$AV_0 = (A - B) \times 0.1 \times f \times 1000/W$$

(A = titration volume (ml) ; B = titration volume for blank (ml) ;

f = N/10-NaOH factor; and W = weight of the sample (g)).

4. Measurement of hydroxyl value ($OHV_0$) of lower condensate (oligomer)

Without being dried, oligomers were pulverized by a handy mill (a crusher). At first, 0.50 g of a sample was precisely weighed and mixed with 10 ml of acetylation agent (0.5 mol/L of acetic anhydride pyridine solution) and immersed in a water tank at 95°C or higher for 90 minutes. Immediately after being taken out of the water tank, the sample solution was mixed with 10 ml of pure water and spontaneously cooled to room temperature. Titration was carried out by N/5-NaOH-$CH_3OH$ solution using phenolphthalein as indicator. The same process was carried out without using the sample for blank. Beforehand, measurement of the solution factor (F) of the N/5-NaOH-$CH_3OH$ solution was carried out by titration of 20 ml of N/10-hydrochloric acid solution using phenolphthalein as indicator and calculated by the following equation.

$$F = 0.1 \times f \times 20/a$$

(f = N/10-hydrochloric acid factor, a = titration volume (ml)) According to the following equation $OHV_0$ (eq/ton) was calculated.

$$OHV_0 = \{(B - A) \times F \times 1000/W\} + AV_0$$

(A = titration volume (ml), B = titration volume for blank (ml); F = N/5-NaOH-$CH_3OH$ solution factor; and W = weight of the sample (g)).

5. Calculation of ratio ($AV_0$ %) of $AV_0$ in total terminal groups of lower condensate (oligomer)

Calculation was carried out according to the following equation using $OHV_0$ and $AV_0$ calculated by the above-mentioned methods.

$$AV\% = \{AV_0/(OHV_0 + AV_0)\} \times 100$$

6. Measurement of intrinsic viscosity (IV)

Using mixed solution of phenol/tetrachloroethane (60 : 40, by weight), measurement was carried out at 30°C.

7. Acid terminal group amount (AVp) of polyester

Polyester chips were pulverized by a handy mill (a crusher). After the pulverization, the polyester was vacuum-dried at 70°C for 12 hours or more and successively cooled to room temperature in a desiccator to obtain a measurement sample. Hard 1st grade test tubes were loaded with precisely weighed 0.20 g of the sample and 10 ml of benzyl alcohol (superior grade) was added and the test tubes were immersed in oil bath adjusted at 205°C. While the test tube is immersed, the sample was stirred with a glass rod to dissolve the polyester. At that time, the dissolution time was changed separately to be 3 minutes, 5 minutes, and 7 minutes. The test tubes were immediately taken out of the oil bath at each finishing time of the dissolution and cooled in water for 15 seconds and thereafter, each content was transferred to a beaker to which several droplets of Phenol red (an indicator) were previously added. Inside the test tubes were washed with 15 ml of chloroform once, and this wash fluid is also added to the beaker. Titration was carried out using a 0.25 mol/l potassium hydroxide solution whose factor was previously known. The titrated amount was measured by setting the moment the color of the benzyl alcohol solution was changed to damask from yellow-green color to be finishing point. For blank measurement, the above-mentioned process was carried out with no addition of the sample (dissolution time was only 3 minutes) and the titration amount $V_0$ ml was measured. From the relation of dissolution time (abscissa axis)-titration amount (ordinate axis), a straight line was calculated by a least-square method (qualified when $R^2$ value > 0.90) and the titration amount V ml was calculated at the time of dissolution time = 0 minute obtained by extrapolation method to the straight line. According to the following equation, AVp (eq/ton) was calculated.

$$AVp = \{(V - V_0) \times NF/W\} \times 1000$$

(V = titration volume (ml) at dissolution time = 0 minute, $V_0$ = titration volume for blank (ml), NF = factor of 0.25 mol/l-potassium hydroxide solution; and W = weight of the sample (g))

Previously, preparation and factor measurement were carried out for the 0.25 mol/l-potassium hydroxide solution by the following methods. That is, 80 ml of a commercialized 0.5 mol/l of potassium hydroxide solution (ethanol solution) was poured in a 1000 ml-capacity measurement flask and ethanol (superior grade) was added to adjust the total amount to be 1000 ml. After 5 ml of 0.1 mol/l hydrochloric acid was added to a beaker, titration was carried out with the prepared 0.25 mol/l potassium hydroxide solution using phenolphthalein (an indicator). The same process was repeated two times. The average value of the titration volume was calculated. NF was calculated according to the following equation.

$$NF = 0.1 \times f \times 5/A$$

(f = factor of 0.1 mol/l hydrochloric acid; and A = titration volume of 0.25 mol/l potassium hydroxide solution).

8. Evaluation of aluminum containing insoluble particles in polyester

Polyester pellets produced by melt polycondensation in an amount 30 g and a mixed solution of p-chlorophenol/tetrachloroethane (3/1: ratio by weight) in amount of 300 ml were put in round bottom flask equipped with stirrer, and the pellets were stirred and dissolved in the mixed solution at 100 to 105°C for 2 hours. The obtained solution was cooled to room temperature and the entire amount of the solution was filtered for separating insoluble particles by polytetrafluoroethylene membrane filter (PTFE membrane filter, trade name: T100A047A, manufactured by Advantec) of diameter 47 mm/hole diameter 1.0 μm under pressure of 0.15 MPa. Effective filtration diameter was 37.5 mm. On completion of filtration, the filtrate was successively washed with 300 ml of chloroform and then dried overnight at 30°C in reduced pressure. The filtration face of the membrane filter was analyzed by scanning x-ray fluorescence spectrometer (ZSX 100e, Rh bulb 4.0 kW, manufactured by Rigaku Corporation) for quantitative measurement of aluminum element amount. The quantitative measurement was carried out for the portion with diameter of 30 mm in the center part of the membrane filter. The calibration curve for the x-ray fluorescence spectrometry was obtained by using PET resin whose aluminum element amount are known and the apparent aluminum element amount was exhibited by ppm. The measurement was carried out by measuring strength of Al-Kα line at 50 kV-70 mA x-ray output and using pentaerythritol as spectrometric crystal and PC (proportional counter) as detector in condition of PHA (pulse-height analyzer) 100 to 300. The aluminum element amount of the polyethylene terephthalate resin for the calibration curve was quantitatively measured by inductively coupled plasma-atomic emission spectrometry.

9. Haze value of uniaxially drawn film

Polyester resin was dried at 130°C for 12 hours in vacuum and processed by heat press method to obtain sheet of 1000±100 μm. The heat press temperature, pressure, and time were adjusted to be 320°C, 100 kg/cm$^2$G, and 3 seconds, respectively. After press, the sheet was thrown into water and quenched. The obtained sheet was uniaxially drawn at 3.5 times as big by a batch type stretcher (FILM STRETCHER, manufactured by T. M. LONG CO., INC) to obtaine a uniaxially drawn film of 300 ± 20 μm. The drawing temperature was controlled to be blow temperature 95°C/plate temperature 100°C. Further, the drawing speed was 15000%/min. The haze of the obtained uniaxially drawn film was measured according to JIS-K 7136 using a haze meter (300A, manufactured by Nippon Denshoku Kogyo Co., Ltd.). The measurement was repeated 5 times and the average value was calculated. The haze value was shown as a conversion value calculated by assuming the film thickness to be 300 μm.

10. Slightly opaque impression

After 50 sheets of biaxially drawn polyester film with 188 μm thickness were laminated, the opaque impression was observed by eye observation which was carried out at 45 degree to the vertical direction under fluorescent lamp and judged according to the following standard.

o: no opaque impression

Δ: slight opaque impression
×: opaque impression
××: considerable opaque impression

Example 1

(1) Preparation of polycondensation catalyst solution (Preparation of ethylene glycol solution of phosphorus compound)

After 2.0 L of ethylene glycol was added to a flask equipped with nitrogen introduction tube and refluxing tube at room temperature and atomospheric pressure, 200 g of Irganox 1222 (manufactured by Ciba Specialty Chemicals K.K.) as a phosphorus compound defined by the formula (Formula 39) was added while being stirred at 200 rpm in nitrogen atmosphere. Further, after 2.0 L of ethylene glycol was additionally added, setting of the jacket temperature was changed to be 196˚C for heating and after a moment the inner temperature reached 185˚C or higher, the mixture was stirred under refluxing for 60 minutes. After the heating was stopped, the solution was immediately parted from the heat source and while the nitrogen atmosphere was kept as it was, the obtained solution was cooled to 120˚C or lower in 30 minutes. The mole ratio of Irganox 1222 in the obtained solution was 40% and the mole ratio of the compound with changed structrure derived from Irganox 1222 was 60%.

(Preparation of aqueous solution of aluminum compound)

After 5.0 litter of pure water was added at normal temperature and normal pressure to a flask equipped with a condenser tube, under condition of stirring at 200 rpm, 200 g of basic aluminum acetate was added in form of slurry with pure water. Further, pure water was added to adjust the total amount to be 10.0 litter and the slurry was stirred for 12 hours at normal temperature and normal pressure. Thereafter, jacket temperature setting was changed to 100.5˚C to heat the mixture and when the inner temperature reached 95˚C, the mixture was stirred for 3 hours under refluxing. After stirring was stopped, the mixture was cooled to room temperature to obtain an aqueous solution.

(Preparation of ethylene glycol solution of aluminum compound)

After the aqueous aluminum compound solution obtained in the above-mentioned method was mixed with ethylene glycol in the same volume and stirred for 30 minutes at room temperature, the inner temperature was controlled at 80 to 90˚C and the pressure was gradually reduced to 27 hPa and while the resulting system was stirred for several hours, water was removed from the system to obtain ethylene glycol solution containing 20 g/l aluminum compound. The peak integration value ratio in $^{27}$Al-NMR spectrum of the obtained aluminum solution was 2.2.

(2) Esterification reaction and polycondensation

To a continuous type polyester production apparatus comprising two continuous esterification reactors, three polycondensation reactors, and installed with an in-line mixer having high speed stirring apparatus in transportation line of the second esterification reactor to the first polycondensation reactor, slurry prepared by mixing 1 part by weight of highly pure terephthalic acid and 0.39 parts by weight of ethylene glycol was continuously supplied and the reaction time was adjusted in the first and the second temperature esterification reactors while the first esterification reactor was kept at reaction temperature of 250˚C and 100 kPa and the second esterification reactor was kept at reaction temperature of 250˚C and 100 kPa and at the same time ethylene glycol was loaded to the second esterification reactor to obtain polyester oligomers. The $AV_0$ and $OHV_0$ of the oligomers at the outlet of the first esterification reactor were 1000 eq/ton and 1050 eq/ton. The $AV_0$ and $OHV_0$ of the oligomers at the outlet of the second esterification reactor were 900 eq/ton and 1100 eq/ton and AV% was 45%. The obtained oligomers were continuously transported to continuous polycondensation apparatus comprising three reactors and at the same time, the ethylene glycol solution of the aluminum compound and the ethylene glycol solution of the phosphorus compound prepared by the above-mentioned method in amounts proper to adjust the aluminum atom concentration and phosphorus atom concentration to be 0.015% by mole and 0.036% by mole, respectively, to the acid component in the polyester were continuously added to an in-line mixer installed in the transportation line while being mixed by the stirring type mixer and polycondensation was carried out in the initial polycondensation reaction tank at 265˚C and 9 kPa, the middle polycondensation reaction tank at 265 to 275˚C and 0.7 kPa, and the final polycondensation reaction tank at 275˚C and 13.3 Pa to obtain PET with IV 0.62. The characteristic values of the obtained PET are shown in Table 1. In the NMR spectrum of a mixed solution of the aluminum compound solution and the phosphorus compound solution at the outlet of the above-mentioned stirring type mixer, a broad peak (referred to as coordination peak) was observed in a range of 5 to 24 ppm which did not exist in the spectrum of the ethylene glycol solution of the phosphorus compound before mixing with the ethylene glycol solution of the aluminum

compound. The integration value of the coordination peak was 45% to the integration value of the NMR spectrum peak of the phosphorus atom bonded with hydroxyl group which were observed in the periphery of 25 to 27 ppm existing in the NMR spectrum of the ethylene glycol solution of the phosphorus compound before mixing with the ethylene glycol solution of the aluminum compound.
The AVp of the obtained polyester was 20 eq/ton and aluminum-containing insoluble particle in the polyester was 400 ppm. The haze value of the uniaxially drawn film was 0.3% and thus excellent in the transparency.

(3) Film formation

The polyester resin obtained in the invention was vacuum-dried at 135˚C and 133 Pa for 6 hours, supplied to an extruder, and melt-extruded in sheet-like form at about 280˚C, and quenched and solidified on metal roll kept at 20˚C surface temperature to obtain a cast film with a thickness of 2650 μm. In this case, a sintered filter medium made of stainless steel and capable of filtering particle size of 10 μm (initial filtration efficiency 95%) was used as filter medium for removing insoluble particles of the melted PET to carry out microfiltration. The cast film was heated to 100˚C by a group of heated rolls and infrared heater and drawn 3.5 times in the longitudinal direction by a group of the rolls having different peripheral speed difference to obtain uniaxially drawn film.
Thereafter, coating solution prepared by the following method was micro-filtered by felt type filter medium made of polypropylene and capable of filtering particle size of 10 μm (initial filtration efficiency 95%), applied to one face of the above-mentioned PET film by reverse roll method and dried. The coating amount at that time was 0.5 g/$m^2$. Successively to the application, while end parts of the film were held by clips, the film was led to hot air zone heated to 130˚C and dried and thereafter drawn 4.0 times in the width direction. Successively, while the width of the film was fixed, the film was heated at 250˚C for 0. 6 seconds by infrared heater to obtain 188 μm-thick biaxially drawn film bearing an adhesiveness reformed layer.
The coating solution was prepared by the following method.
An autoclave made of stainless steel and equipped with stirrer, thermometer, and partially fluxing type condenser was loaded with 345 parts by weight of dimethyl terephthalate, 211 parts by weight of 1,4-butanediol, 270 parts by weight of ethylene glycol, and 0.5 parts by weight of tetra-n-butyl titanate and transesterification reaction was carried out at 160˚C to 220˚C for 4 hours. Next, 14 parts by weight of fumaric acid and 160 parts by weight of sebacic acid were added and the reaction mixture was heated from 200˚C to 220˚C in 1 hour to carry out esterification reaction. Next, after the temperature was raised to 255˚C and the pressure of the reaction system was gradually reduced, reaction was carried out under reduced pressure of 29.3 Pa for 1.5 hours to obtain a light yellow and transparent polyester resin A-1. A reactor equipped with stirrer, thermometer, refluxing apparatus, and quantitative titration apparatus was loaded with 75 parts by weight of the copolymerized polyester resin, 56 parts by weight of methyl ethyl ketone, and 19 parts by weight of isopropyl alcohol and the mixture was heated at 65˚C and stirred to dissolve the copolymerized polyester resin. After the resin was completely dissolved, 15 parts by weight of maleic anhydride was added. Next, solution obtained by dissolving 10 parts by weight of styrene and 1.5 parts by weight of azobisdimethylvaleronitrile in 12 parts by weight of methyl ethyl ketone was added dropwise at 0.1 ml/min speed to the polyester solution and the resulting mixture was continuously stirred further for 2 hours. After sampling for analysis was carried out for the reaction solution, 5 parts by weight of methanol was added. Next, 300 parts by weight of water and 15 parts by weight of triethylamine were added to the reaction solution and stirred for 1 hour. Thereafter, the temperature of the reactor was raised to 100˚C to remove methyl ethyl ketone, isopropyl alcohol, and excess of triethylamine by evaporation to obtain light yellow and transparent water dispersion graft-copolymerized resin. Finally, 40 parts by weight of 25% water dispersion of the water dispersion graft-copolymerized resin, 24 parts by weight of water, and 36 parts by weight of isopropyl alcohol were mixed and 1% by mass of an anionic surfactant and 5% by mass a lubricant (Snowtex OL, manufactured by Nissan Chemical Industries, Ltd.) were added to the obtained mixture to obtain the coating solution.
The obtained biaxially drawn PET film gave no slightly opaque impression and had extremely good transparency.
These results are shown in Table 1
[Table 1]

| | Example 1 | Example 2 | Example 3 | Example 4 | Example 5 | Example 6 | Example 7 | Example 8 |
|---|---|---|---|---|---|---|---|---|
| NMR of Al compound (peak ratio) | 2.2 | 2.2 | 2.2 | 2.2 | 2.2 | 2.2 | 1.2 | 4.8 |

(continued)

| | Example 1 | Example 2 | Example 3 | Example 4 | Example 5 | Example 6 | Example 7 | Example 8 |
|---|---|---|---|---|---|---|---|---|
| NMR of Al/P mixed solution (%) | 45 | 45 | 45 | 45 | 45 | 45 | 28 | 68 |
| Avp (ep/ton) | 20 | 15 | 24 | 25 | 35 | 30 | 45 | 13 |
| Aluminum-containing insoluble particle (ppm) | 400 | 420 | 380 | 380 | 400 | 400 | 750 | 75 |
| Haze value of uniaxially drawn film (%) | 0.3 | 0.4 | 0.3 | 0.3 | 0.3 | 0.3 | 0.5 | 0.1 |
| Slightly opaque impression | ○ | ○ | ○ | ○ | ○ | ○ | ○ | ○ |

Comparative Example 1

PET of Comparative Example 1 was obtained in the same manner as Example 1, except the amount of ethylene glycol of the slurry to be supplied to the first esterification reactor was changed to 0.45 parts by weight in the method of Example 1. AV% was 25%. Using the PET resin obtained in this Comparative Example, 188 μm-thick biaxially drawn film was obtained in the same manner as Example 1. The results are shown in Table 2.
Although PET obtained in this Comparative Example had a little amount of the aluminum-containing insoluble particle in polyester, the AVp was as low as 7 eq/ton as compared with that of PET obtained in Example 1, and therefore, the haze value of the uniaxially drawn film was slightly high. Therefore, the biaxially drawn film was slightly inferior in the slightly opaque impression and gave very slight opaque impression.
[Table 2]

| | Comparative Example 1 | Comparative Example 2 | Comparative Example 3 | Comparative Example 4 |
|---|---|---|---|---|
| NMR of Al compound (peak ratio) | 2.2 | 2.2 | 0.19 | 0.85 |
| NMR of Al/P mixed solution (%) | 45 | 45 | 15 | 22 |
| AVp (ep/ton) | 7 | 5 | 20 | 7 |
| Aluminum-containing insoluble particle (ppm) | 420 | 450 | 5200 | 1300 |
| Haze value of uniaxially drawn film | 0.7 | 1.2 | 3.1 | 1.1 |

(continued)

| | Comparative Example 1 | Comparative Example 2 | Comparative Example 3 | Comparative Example 4 |
|---|---|---|---|---|
| Slightly opaque impression | Δ | Δ | ×× | × |

Example 2 and Comparative Example 2

PET with AV% and AVp of 35% and 15 eq/ton (Example 2) and PET with AV% and AVp of 20% and 5 eq/ton (Comparative Example 2) were obtained by changing the ethylene glycol amount of the slurry to be supplied to the first esterification reactor and the esterification reaction conditions in the method of Example 1. Using these PET resins, 188 μm-thick biaxially drawn films were obtained in the same manner as Example 1. The results are shown in Table 1 and Table 2.
PET obtained in Example 2 contained little aluminum-containing insoluble particle in polyester and had high AVp and therefore had high quality as same as that obtained in Example 1. On the other hand, although PET obtained in Comparative Example 2 contained little aluminum-containing insoluble particle in polyester, AVp was further lower than that of PET obtained in Comparative Example 1 and the haze value of the uniaxially drawn film was high. Therefore, the slightly opaque impression of the uniaxially drawn film was inferior.

Example 3

PET and films of Example 3 were obtained in the same manner as Example 1, except the final polycondensation reactor temperature was changed to 285°C in the method of Example 1. AV% was 45%. Other results are shown in Table 1.
PET obtained in this Example contained little aluminum-containing insoluble particle in polyester and had high AVp and therefore had high quality as same as that obtained in Example 1.

Examples 4 to 6

PET and films of Examples 4 to 6 were obtained in the same manner as Comparative Example 1, except ethylene glycol solutions of magnesium acetate, zinc acetate, and manganese acetate were added respectively in proper amounts to adjust the metal element amounts to be 60, 100, and 100 ppm, respectively, in the acid components in the respective polyesters and also ethylene glycol solution of sodium acetate in proper amount to adjust the sodium element amount to be 5 ppm was continuously supplied to the in-line mixer through line different from the line for the mixed solution of the aluminum compound and phosphorus compound in the method of Comparative Example 1. AV% was 20%, 30%, and 24%, respectively. Other results are shown in Table 1.
PET obtained in these Examples contained little aluminum-containing insoluble particle in polyester and had high AVp and therefore had high quality as same as that obtained in Example 1.

Comparative Example 3

PET and films of Comparative Example 3 were obtained in the same manner as Example 1, except water removal at the time of preparation of the ethylene glycol solution of the aluminum compound was carried out at 140 to 160°C and normal pressure in the method of Example 1. The integration value ratio of the ethylene glycol solution of the aluminum compound obtained in this Comparative Example in the $^{27}$Al-NMR spectrum peaks was 0.19. Further, the coordination peak, which was observed in the polycondensation catalyst solution obtained in Example 1, was scarcely detected in the NMR spectrum of the polycondensation catalyst solution consisting of the mixed solution of the above-mentioned ethylene glycol solution of the aluminum compound obtained in this Comparative Example and ethylene glycol solution of the phosphorus compound. The integration value of the coordination peak was 15% to the integration value of the NMR spectrum peak of the phosphorus atom bonded with hydroxyl group which were observed in the periphery of 25 to 27 ppm existing in the NMR spectrum of the ethylene glycol solution of the phosphorus compound before mixing with the ethylene glycol solution of the aluminum compound. AV% was 45%. Characteristics of the obtained PET and films are shown in Table 2.
PET obtained in this Comparative Example contained aluminum-containing insoluble particle in polyester in amount as extremely high as 5200 ppm and therefore the uniaxially drawn film had high haze value and was inferior in transparency. Therefore, the biaxially drawn film was significantly inferior in the slightly opaque impression.

Comparative Example 4

PET of Comparative Example 4 was obtained in the same manner as Comparative Example 1, except the inner temperature was controlled to be 95 to 105˚C at the time of replacement of the aqueous solution of the aluminum compound to the ethylene glycol solution in the method of Comparative Example 1. The integration value ratio of the aluminum compound solution obtained in this Comparative Example in the $^{27}$Al-NMR spectrum peaks was 0.85. The integration value of the coordination peak of the polycondensation catalyst solution in the NMR spectrum was 22% to the integration value of the NMR spectrum peak of the phosphorus atom bonded with hydroxyl group which were observed in the periphery of 25 to 27 ppm existing in the NMR spectrum of the ethylene glycol solution of the phosphorus compound before preparation of the polycondensation catalyst. AV% was 25%. Characteristics of the obtained PET and film are shown in Table 2.
PET obtained in this Comparative Example contained aluminum-containing insoluble particle in polyester in amount increased as compared with that of PET obtained in Comparative Example 1 and thus the transparency was further deteriorated than that of PET obtained in Comparative Example 1.

Example 7

PET of Example 7 was obtained in the same manner as Example 5, except the inner temperature was controlled to be 95 to 105˚C at the time of replacement of the aqueous solution of the aluminum compound to the ethylene glycol solution in the method of Example 5. The integration value ratio of the aluminum compound solution obtained in this Example in the $^{27}$Al-NMR spectrum peaks was 1.2. The integration value of the coordination peak of the polycondensation catalyst solution in the NMR spectrum was 28% to the integration value of the NMR spectrum peak of the phosphorus atom bonded with hydroxyl group which were observed in the periphery of 25 to 27 ppm existing in the NMR spectrum of the ethylene glycol solution of the phosphorus compound before preparation of the polycondensation catalyst. AV% was 27%. Characteristics of the obtained PET and films are shown in Table 1.
PET obtained in Example 7 contained little aluminum-containing insoluble particle in polyester and had high AVp and therefore had high quality as same as that obtained in Example 1.

Example 8

PET of Example 8 was obtained in the same manner as Example 1, except the inner temperature was controlled to be 55 to 65˚C and the pressure was gradually reduced to 5.3 hPa at the time of replacement of the aqueous solution of the aluminum compound to the ethylene glycol solution in the method of Example 1. The integration value ratio of the aluminum compound solution obtained in this Example in the $^{27}$Al-NMR spectrum peaks was 4.8. The integration value of the coordination peak of the polycondensation catalyst solution in the NMR spectrum was 68% to the integration value of the NMR spectrum peak of the phosphorus atom bonded with hydroxyl group which were observed in the periphery of 25 to 27 ppm existing in the NMR spectrum of the ethylene glycol solution of the phosphorus compound before preparation of the polycondensation catalyst. AV% was 37%. Characteristics of the obtained PET and films are shown in Table 1.
PET obtained in Example 8 contained little aluminum-containing insoluble particle in polyester and had high AVp and therefore had high quality as same as that obtained in Example 1.
Using the data of the above-mentioned Examples and Comparative Examples, the relation of AVp of PET and the haze value of the uniaxially drawn film is shown in Fig. 1. In this drawing, the data of Examples 1 to 6 and Comparative Examples 1 and 2 containing approximately same amount of the aluminum-containing insoluble particle in polyester are plotted. The relation of the haze value of the uniaxially drawn film and the slightly opaque impression of the biaxially drawn film is shown in Fig. 2. From these drawings, it can be understood that the restriction ranges of the invention are critical ranges.

INDUSTRIAL APPLICABILITY

With respect to polyester of the invention obtained using a polycondensation catalyst containing aluminum compound and phosphorus compound and using a metal component other than antimony, germanium, and titanium as a main metal component of the catalyst, the invention provides a polyester and a polyester product having various stable properties such as color tone and heat resistance, which are characteristics of polyester obtained by the polycondensation catalyst; capable of giving highly transparent molded article such as a film and a hollow molded article obtained by molding the polyester by molding method involving drawing; and suitable for uses in fields of highly transparent films for optical uses and molded articles with ultrahigh transparency. The polyester of the invention has characteristic that aluminum-containing insoluble particle in polyester attributed to aluminum, which is a main metal element in the polycondensation catalyst, is little. Accordingly, the polyester of the invention can be usable preferably in a wide range of fields such as fibers for clothing and industrial materials; films and sheets for wrapping, magnetic tapes, and optical uses; bottles, which are hollow molded articles; casings for electric and electronic parts; and other engineering plastic molded articles. Particularly, due to the above-mentioned characteristics, the polyester is advantageous in optical films required to have particularly high transparency or hollow molded articles with ultrahigh transparency. Further, the process for production of a polyester of the invention is capable of stably and economically producing the above-mentioned polyester and consequently, the invention greatly contributes in industrial fields.

## Claims

**1.** A polyester produced in the presence of a polycondensation catalyst containing at least one kind compound selected from a group consisting of aluminum compounds and at least one compound selected from a group consisting of phosphorus compounds, wherein the polyester contains a aluminum-containing polyester-insoluble particle in an amount of 1000 ppm or less as quantified by the method disclosed in this specification and contains an acid terminal group at a ratio of 10 to 50 eq/ton.

**2.** The polyester as described in claim 1, wherein a uniaxially drawn film obtained by a method disclosed in this specification has a haze value of 0.6% or less.

**3.** A process for producing a polyester using a polycondensation catalyst containing at least one kind compound selected from a group consisting of aluminum compounds and at least one compound selected from a group consisting of phosphorus compounds, wherein ethylene glycol solution of an aluminum compound having 1.0 or higher as a ratio of an integration value of peaks appearing in a range of -15 to 30 ppm in $^{27}$Al-NMR spectrum quantified by the method disclosed in this specification to an integration value of standard peaks is used and the ratio of carboxyl terminal group to entire terminal groups of lower condensate products at the outlet of an esterification reactor is 35 to 49% by mole.

**4.** A process for producing a polyester using a polycondensation catalyst containing at least one kind compound selected from a group consisting of aluminum compounds and at least one compound selected from a group consisting of phosphorus compounds, wherein ethylene glycol solution of an aluminum compound having 1.0 or higher as a ratio of an integration value of peaks appearing in a range of -15 to 30 ppm in $^{27}$Al-NMR spectrum quantified by the method disclosed in the specification to an integration value of standard peaks is used and at least one compound selected from a group consisting of alkaline earth metal compounds, zinc compounds, and manganese compounds is made to coexist.

**5.** A process for producing a polyester using a polycondensation catalyst containing at least one kind compound selected from a group consisting of aluminum compounds and at least one compound selected from a group consisting of phosphorus compounds, wherein ethylene glycol solution of an aluminum compound having 1.0 or higher as a ratio of an integration value of peaks appearing in a range of -15 to 30 ppm in $^{27}$Al-NMR spectrum quantified by the method disclosed in the specification to an integration value of standard peaks is used and polycondensation is carried out at 280 to 300°C.

**6.** A hollow molded article made of the polyester described in claim 1 or 2.

**7.** A film made of the polyester described in claim 1 or 2.

**8.** A fiber made of the polyester described in claim 1 or 2.

Fig. 1

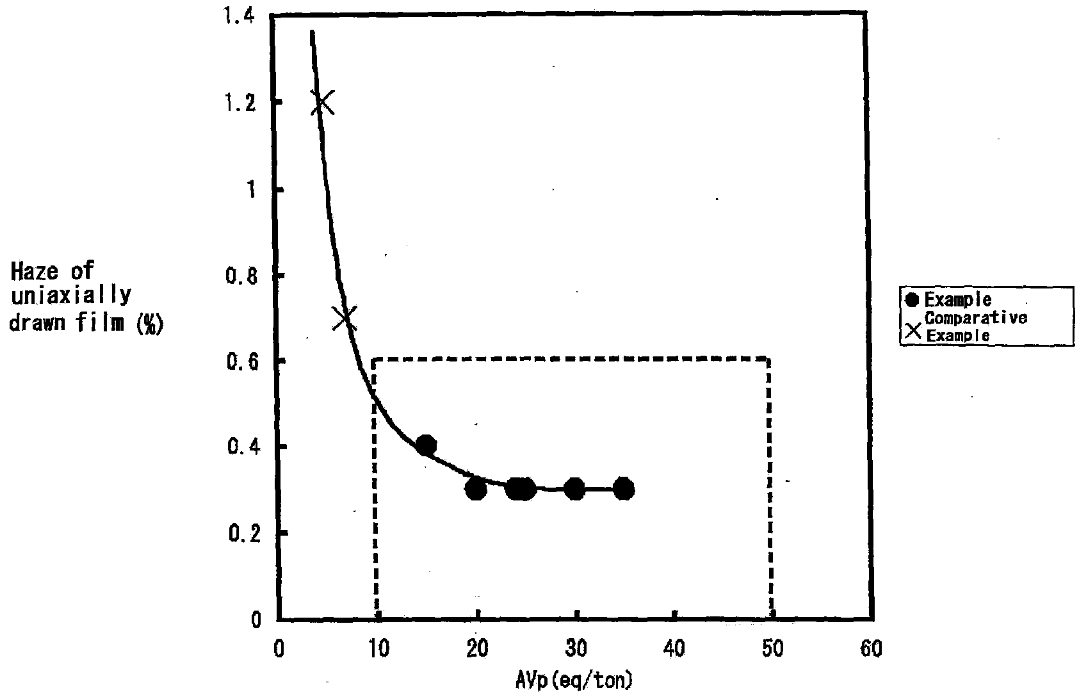
1.4
1.2
1
0.8
0.6
0.4
0.2
0
Haze of uniaxially drawn film (%)
0
10
20
30
40
50
60
AVp (eq/ton)
● Example
× Comparative Example

Fig. 2

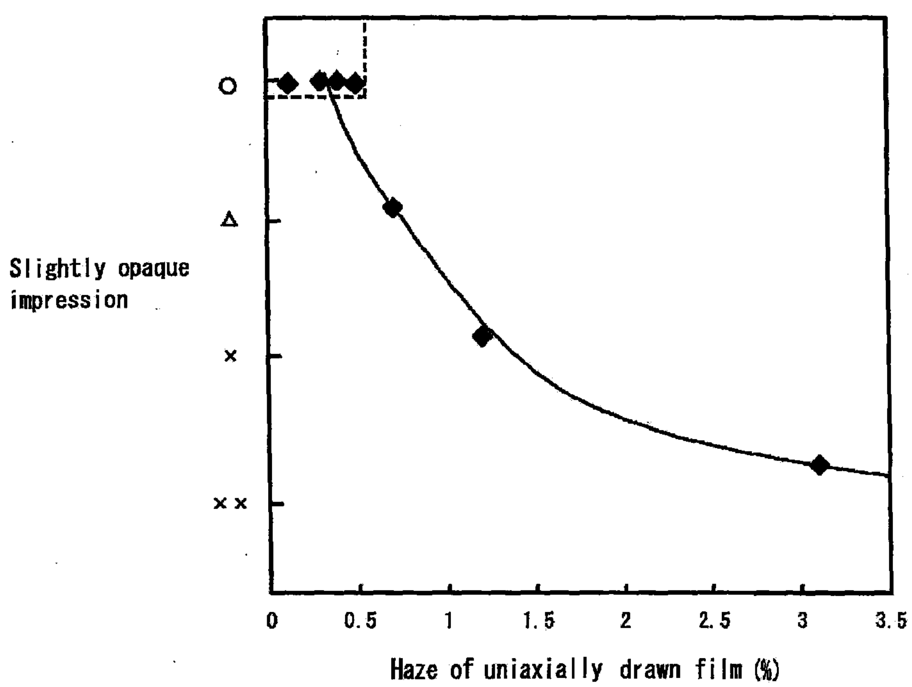
○
Δ
×
××
Slightly opaque impression
0
0.5
1
1.5
2
2.5
3
3.5
Haze of uniaxially drawn film (%)

**INTERNATIONAL SEARCH REPORT**

International application No.
PCT/JP2006/318011

A. CLASSIFICATION OF SUBJECT MATTER
*C08G63/181*(2006.01)i, *C08G63/84*(2006.01)i

According to International Patent Classification (IPC) or to both national classification and IPC

B. FIELDS SEARCHED

Minimum documentation searched (classification system followed by classification symbols)
C08G63/00-64/42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2002/022707 A1 (Toyobo Co., Ltd.), 21 March, 2002 (21.03.02), Claims 1 to 6; page 9, line 20 to page 10, line 16; page 19, lines 8 to 16; examples 40, 41, 42, 50, 52 to 55<br>& US 2004/58805 A1 & EP 1327648 A1 | 1-2,6-8<br>3-5 |
| X<br>A | JP 2005-112873 A (Toyobo Co., Ltd.), 28 April, 2005 (28.04.05), Claims 1 to 6; Par. Nos. [0028], [0033] to [0134], [0140] to [0144]<br>(Family: none) | 3-5<br>1-2,6-8 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
07 December, 2006 (07.12.06)

Date of mailing of the international search report
19 December, 2006 (19.12.06)

Name and mailing address of the ISA/
Japanese Patent Office

Facsimile No.

Authorized officer

Telephone No.

Form PCT/ISA/210 (second sheet) (April 2005)

**INTERNATIONAL SEARCH REPORT**

International application No.
PCT/JP2006/318011

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2005-112874 A (Toyobo Co., Ltd.),<br>28 April, 2005 (28.04.05),<br>Claims 1 to 6; Par. Nos. [0028], [0034] to [0135], [0141] to [0145]<br>(Family: none) | 3-5<br>1-2,6-8 |
| X<br>A | JP 2005-187556 A (Toyobo Co., Ltd.),<br>14 July, 2005 (14.07.05),<br>Claims 1 to 6; Par. Nos. [0027], [0035] to [0040], [0045] to [0144], [0182], [0224] to [0225]<br>(Family: none) | 3-5<br>1-2,6-8 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001131276 A
- JP 2001163963 A
- JP 2001163964 A
- JP 2002220446 A
- JP 2001354759 A
- JP 2000511211 A
- JP 10001563 A
- JP 2952677 B
- JP 6184337 A
- JP 7108563 B
- JP 10235820 A
- JP 11323271 A
- JP 10171956 A
- JP 11010815 A
- JP 10101103 A
- JP 5200927 A
- JP 7314630 A
- JP 6297831 A
- JP 8305065 A
- JP 5032037 A
- JP 2000025349 A
- JP 5088400 A
- JP 7032754 A
- JP 11034503 A
- JP 6326453 A
- JP 5234459 A
- JP 11231126 A
- JP 11224539 A
- JP 5273737 A
- JP 5057844 A
- JP 06167768 A
- JP 2000162419 A
- JP 11209711 A
- JP 10329291 A
- JP 10166534 A
- JP 6122856 A